# EUROPÄISCHE PATENTSCHRIFT

(11) **EP 2 755 905 B1**
(45) Veröffentlichungstag und Bekanntmachung des Hinweises auf die Patenterteilung: **25.11.2020**
(21) Anmeldenummer: 12758507.3
(22) Anmeldetag: 14.09.2012
(51) Int. Cl.: B65G 49/04

(54) **FÖRDERVORRICHTUNG UND VERFAHREN ZUM FÖRDERN VON WERKSTÜCKEN DURCH EINEN BEHANDLUNGSBEREICH**
CONVEYANCE DEVICE AND METHOD FOR CONVEYING WORKPIECES THROUGH A TREATMENT AREA
DISPOSITIF DE TRANSPORT ET PROCÉDÉ DE TRANSPORT DE PIÈCES À TRAVERS UNE ZONE DE TRAITEMENT

(30) Priorität: 15.09.2011 DE 102011082798
(43) Veröffentlichungstag der Anmeldung: 23.07.2014
(73) Patentinhaber: Dürr Systems AG, 74321 Bietigheim-Bissingen (DE)
(72) Erfinder: SCHÖNSTEIN, Benjamin, 73630 Remshalden (DE); WESCHKE, Jürgen, 71263 Weil der Stadt (DE); WIELAND, Dietmar, 71336 Waiblingen (DE)
(74) Vertreter: Hoeger, Stellrecht & Partner Patentanwälte mbB
(86) Internationale Anmeldenummer: PCT/EP2012/068051
(87) Internationale Veröffentlichungsnummer: WO 2013/037934

(56) Entgegenhaltungen:
- EP-A1- 0 404 102
- EP-A1- 2 110 297
- WO-A2-2005/012816
- DE-A1- 2 853 164
- DE-A1- 3 130 486
- DE-U1- 29 724 558
- FR-A1- 2 134 246
- JP-A- 58 069 616

## Beschreibung

Die vorliegende Erfindung betrifft eine Anlage zur Oberflächenbehandlung von Werkstücken, umfassend eine Fördervorrichtung zum Fördern von Werkstücken durch einen Behandlungsbereich zur Oberflächenbehandlung der Werkstücke, wobei die Fördervorrichtung die Werkstücke in den Behandlungsbereich einbringt und aus dem Behandlungsbereich wieder ausbringt.

Aus der DE 1 938 589 ist eine Fördervorrichtung zum Fördern von Fahrzeugkarosserien durch Bäder eine Lackieranlage bekannt, bei welcher ein Werkstückträger, an dem eine Fahrzeugkarosserie angeordnet ist, pendelnd an einer Hebevorrichtung eines auf Schienen geführten Laufkranes aufgehängt ist und in vertikaler Stellung in einen Behandlungsbereich der Lackieranlage eingebracht und aus dem Behandlungsbereich der Lackieranlage wieder ausgebracht wird. Dabei kann der Werkstückträger beim Ein- und Ausheben durch an der Innenwandung eines Behandlungsbehälters angeordnete Führungsschienen geführt sein, um zu verhindern, dass die Fahrzeugkarosserie beim Ein- oder Ausheben hin- und herpendelt.

Hierbei ist jedoch von Nachteil, dass das Einbringen der Fahrzeugkarosserie in den Behandlungsbereich und das Ausbringen der Fahrzeugkarosserie aus dem Behandlungsbereich stets an denselben, durch die Führungsschienen vorgegebenen Positionen erfolgen muss. Ferner sind die Führungsschienen im Behandlungsbehälter angeordnet und stehen somit in Kontakt mit einer im Behandlungsbehälter befindlichen Behandlungsflüssigkeit, so dass die Führungsschienen korrodieren oder sich zusetzen können, was die Funktionsfähigkeit der Führungsschiene beeinträchtigt.

Die WO 2005/012816 A2 offenbart eine Anlage zum Aushärten einer Beschichtung an Werkstücken gemäß dem Oberbegriff von Anspruch 1.

Die DE 31 30 486 A1 offenbart eine Anlage zur Oberflächenbehandlung von Werkstücken, welche eine Fördervorrichtung zum Fördern von Werkstücken, die an einem Werkstückträger der Fördervorrichtung aufgenommen sind, durch einen Behandlungsbereich zur Oberflächenbehandlung der Werkstücke, wobei die Fördervorrichtung die Werkstücke in den Behandlungsbereich einbringt und aus dem Behandlungsbereich wieder ausbringt, und mehrere Behandlungsbecken mit einem darin angeordneten Behandlungsbad aus einer Behandlungsflüssigkeit umfasst, wobei die Fördervorrichtung eine Hubeinheit zum Anheben und Absenken des Werkstücks umfasst und wobei die Hubeinheit längs einer Translationsrichtung der Fördervorrichtung bewegbar ist.

Die JP 58 069616 A offenbart eine Anlage zur Oberflächenbehandlung von plattenförmigen Werkstücken, welche eine Fördervorrichtung zum Fördern der Werkstücke, die an jeweils einem Werkstückträger der Fördervorrichtung aufgenommen sind, durch einen Behandlungsbereich zur Oberflächenbehandlung der Werkstücke, wobei die Fördervorrichtung die Werkstücke in den Behandlungsbereich einbringt und aus dem Behandlungsbereich wieder ausbringt, und ein Behandlungsbecken mit einem darin angeordneten Behandlungsbad aus einer Behandlungsflüssigkeit umfasst, wobei die Fördervorrichtung eine Hubeinheit zum Anheben und Absenken jeweils eines plattenförmigen Werkstücks umfasst, wobei die Hubeinheit längs einer Translationsrichtung der Fördervorrichtung bewegbar ist und wobei der Werkstückträger an die Hubeinheit ankoppelbar, relativ zu der Hubeinheit verkippbar und von der Hubeinheit lösbar ist.

Der vorliegenden Erfindung liegt die Aufgabe zugrunde, eine Fördervorrichtung der eingangs genannten Art zu schaffen, mittels welcher die Bewegungsbahn der Werkstücke durch den Behandlungsbereich flexibel gestaltbar ist.

Diese Aufgabe wird durch eine Anlage zur Oberflächenbehandlung von Werkstücken, die Fahrzeugkarosserien sind, nach Anspruch 1 gelöst.

Der erfindungsgemäßen Lösung liegt das Konzept zugrunde, die gewünschte Stellung des Werkstückträgers und damit des an dem Werkstückträger angeordneten Werkstücks beim Durchlaufen des Behandlungsbereichs durch eine geeignete Ankopplung des Werkstückträgers an die Hubeinheit der Fördervorrichtung zu bewirken.

Besonders günstig ist es, wenn die Winkelposition des Werkstückträgers relativ zu der Hubeinheit in der Arbeitsstellung des Werkstückträgers, insbesondere durch Zusammenwirken des Werkstückträgers mit der Hubeinheit, fixierbar ist. In diesem Fall wird die gewünschte Stellung des Werkstückträgers und damit des an dem Werkstückträger angeordneten Werkstücks beim Durchlaufen des Behandlungsbereichs allein durch die Ankopplung des Werkstückträgers an die Hubeinheitfördervorrichtung bewirkt.

Bei einer bevorzugten Ausgestaltung der Erfindung ist vorgesehen, dass die Hubeinheit an einem Fahrwagen angeordnet ist, der einen in einer Translationsrichtung der Fördervorrichtung translatorisch bewegbaren Basisteil umfasst, wobei die Hubeinheit relativ zu dem Basisteil anhebbar und absenkbar ist.

Besonders günstig ist es, wenn der Fahrwagen einen eigenen Translationsantrieb zum Antreiben der Bewegung des Basisteils in der Translationsrichtung aufweist.

Dabei ist vorzugsweise vorgesehen, dass der Basisteil mittels des Translationsantriebs kontinuierlich oder intermittierend (das heißt mit Unterbrechungen der Bewegung) in der Translationsrichtung bewegbar ist.

Der Translationsantrieb ist vorzugsweise so ausgebildet, dass die Translationsgeschwindigkeit des Basisteils während der Translationsbewegung variierbar ist und/oder die Richtung der Translationsbewegung umkehrbar ist.

Vorzugsweise umfasst die Fördervorrichtung mehrere einzelne, sich unabhängig voneinander bewegende Fahrwagen, die jeweils mit einer Hubeinheit versehen sind.

Bei einer bevorzugten Ausgestaltung der Erfindung ist vorgesehen, dass die Fördervorrichtung mindestens eine Steuervorrichtung umfasst, mittels welcher mindestens ein Fahrwagen hinsichtlich seiner Translationsbewegung und/oder hinsichtlich der Bewegung der Hubeinheit relativ zu dem Basisteil unabhängig von anderen Fahrwagen der Fördervorrichtung steuerbar ist.

Dabei kann die Steuervorrichtung als eine zentrale Steuervorrichtung ausgebildet sein, welche mit den Translationsantrieben und/oder den Hubantrieben der Fahrwagen in Verbindung steht und diese Translationsantriebe bzw. Hubantriebe individuell ansteuert.

Alternativ oder ergänzend hierzu kann auch vorgesehen sein, dass jeder Fahrwagen eine eigene, mit dem Fahrwagen mitbewegte Steuervorrichtung umfasst, welche den Translationsantrieb und/oder den Hubantrieb des betreffenden Fahrwagens individuell ansteuert. In diesem Fall ist ferner vorzugsweise vorgesehen, dass die Steuervorrichtungen verschiedener Fahrwagen miteinander kommunizieren, um Kollisionen zwischen den verschiedenen Fahrwagen zu vermeiden.

Die Bewegungsabläufe der Fahrwagen werden so gesteuert, dass es zu keinen Kollisionen zwischen den Fahrwagen kommt.

Vorzugsweise ist jeder einzelne Fahrwagen mit einem individuellen Geschwindigkeits- und/oder Beschleunigungsprofil steuerbar.

Insbesondere können einander nachfolgende Fahrwagen vor und/oder nach einem Behandlungsbereich unterschiedliche Geschwindigkeiten aufweisen.

Vorzugsweise weisen einander nachfolgende Fahrwagen zu einem bestimmten Zeitpunkt unterschiedliche Geschwindigkeiten und unterschiedliche Beschleunigungen auf, um, insgesamt gesehen, einen möglichst kontinuierlichen Durchlauf aller Fahrwagen realisieren zu können.

Der Translationsantrieb eines Fahrwagens wird vorzugsweise so gesteuert, dass der Fahrwagen beim Einbringen des Werkstücks in einen Behandlungsbereich, insbesondere beim Eintauchen des Werkstücks in ein Behandlungsbecken, gegenüber einer Durchschnittsgeschwindigkeit aller Fahrwagen verlangsamt wird, um den Flächenbedarf der Behandlungsanlage insgesamt und die Länge des Behandlungsbereichs, insbesondere die Länge des Behandlungsbeckens, gering zu halten.

Insbesondere kann vorgesehen sein, dass der Translationsantrieb eines Fahrwagens so angesteuert wird, dass der Fahrwagen vor dem vorstehend erläuterten Verlangsamen gegenüber der Durchschnittsgeschwindigkeit aller Fahrwagen beschleunigt wird. Hierdurch erhält der betreffende Fahrwagen vor dem Behandlungsbereich einen Vorsprung, den er beim Einbringen des Werkstücks in den Behandlungsbereich wieder verliert, so dass die Durchschnittsgeschwindigkeit des Fahrwagens insgesamt der Durchschnittsgeschwindigkeit aller Fahrwagen entspricht.

Vorzugsweise ist jeder Fahrwagen der Fördervorrichtung mittels einer Steuervorrichtung so steuerbar, dass seine Translationsgeschwindigkeit und Translationsbeschleunigung und/oder seine Hubgeschwindigkeit und Hubbeschleunigung zeitlich variabel und individuell steuerbar ist.

Die Translationsbewegung der Fahrwagen ist vorzugsweise mit unterschiedlichen Geschwindigkeiten und/oder mit kurzzeitigen Unterbrechungen der Translationsbewegung steuerbar.

Wird beispielsweise ein Werkstück bei stehendem Fahrwagen in ein Behandlungsbecken abgesenkt, so kann ein nachfolgender Fahrwagen, beispielsweise in einer Neutralzone vor dem Behandlungsbecken, angehalten werden, um eine Kollision zwischen den Fahrwagen zu vermeiden.

Bewegt sich dann, nach dem Absenken des Werkstücks in das Behandlungsbecken, der erste Fahrwagen im Behandlungsbecken weiter, so dass die Stelle, wo der Absenkvorgang stattgefunden hat, frei wird, wird vorzugsweise der nachfolgende Fahrwagen mit einer höheren Translationsgeschwindigkeit zu der Absenkstelle bewegt.

Die Translationsgeschwindigkeiten der Fahrwagen sind vorzugsweise frei anpassbar, um bei einer möglichst hohen Kapazität die Anlagenlänge und die Behältervolumina der Behandlungsanlage zu optimieren.

Bei einer bevorzugten Ausgestaltung der Fördervorrichtung ist vorgesehen, dass die Fördervorrichtung das Werkstück bei in der Arbeitsstellung befindlichem Werkstückträger in den Behandlungsbereich einbringt und/oder aus dem Behandlungsbereich ausbringt.

Der Behandlungsbereich ist als ein Behandlungsbad aus einer Behandlungsflüssigkeit in einem Behandlungsbecken ausgebildet.

Insbesondere kann der Behandlungsbereich ein Reinigungsbad, ein Entfettungsbad oder ein Beschichtungsbad, insbesondere ein Phosphatierungsbad oder ein Elektrotauchlackierbad, sein.

Alternativ und nicht als Teil der Erfindung kann vorgesehen sein, dass die Werkstücke in dem Behandlungsbereich nicht in ein Behandlungsbad einer Behandlungsflüssigkeit eingetaucht werden, sondern in dem Behandlungsbereich auf andere Weise mit einem flüssigen oder gasförmigen Behandlungsmedium beaufschlagt werden, beispielsweise mit Strahlen eines flüssigen oder gasförmigen Behandlungsmediums, die mittels einer oder mehrerer Düsen erzeugt werden. Vorzugsweise ist vorgesehen, dass in der Arbeitsstellung des Werkstückträgers eine Längsrichtung des Werkstückträgers unter einem Winkel von weniger als 30° relativ zur Vertikalen ausgerichtet ist.

Dadurch, dass der Werkstückträger und damit das an dem Werkstückträger angeordnete zu behandelnde Werkstück in einer solchen Vertikalstellung an der Hubeinheit angeordnet sind und in dieser Vertikalstellung in den Behandlungsbereich eingebracht und aus dem Behandlungsbereich ausgebracht und gegebenenfalls längs der Translationsrichtung durch den Behandlungsbereich gefördert werden, ist die horizontale Erstreckung der Werkstücke beim Einbringen in den Behandlungsbereich und beim Ausbringen aus dem Behandlungsbereich nur klein, so dass der Einbringbereich und der Ausbringbereich des Behandlungsbereiches kurz gehalten werden können, was zu einer reduzierten Gesamtlänge des Behandlungsbereiches führt.

Da es sich bei dem Behandlungsbereich um ein mit einer Behandlungsflüssigkeit gefülltes Behandlungsbad handelt, tritt der Vorteil hinzu, dass die im Behandlungsbad in das Werkstück eingedrungene Behandlungsflüssigkeit leicht und vollständig beim Austauchen aus dem Werkstück ablaufen kann, da im Fall einer Fahrzeugkarosserie die größten Flächen des Werkstücks im Wesentlichen vertikal ausgerichtet sind. Die Phase des Auslaufens der Behandlungsflüssigkeit aus dem Werkstück kann daher kurz gehalten werden.

Bei der Behandlung von Fahrzeugkarosserien ist beim Fördern der Werkstücke durch den Behandlungsbereich in einer vertikalen Arbeitsstellung von Vorteil, dass nur ein geringer Teil der Flächen, welche das Werkstück aufweist, horizontal ausgerichtet sind. Hierdurch können Gasblasen, Elektrolysegase in einem Elektrotauchlackierbecken und Luftblasen besser entweichen.

Auf den horizontalen Flächen eines zu behandelnden Werkstücks können sich Schmutzpartikel, welche sich im Behandlungsmedium befinden, ablagern. Wenn aber eine Fahrzeugkarosserie in einer vertikalen Arbeitsstellung durch den Behandlungsbereich gefördert wird, so sind die Bereiche des Daches und der Motorhaube sowie der Bereich der Bodengruppe der Fahrzeugkarosserie im Wesentlichen vertikal ausgerichtet, so dass hier keine Ablagerungen von Schmutzpartikeln vorliegen.

Besonders günstig ist es, wenn in der Arbeitsstellung des Werkstückträgers die Längsrichtung des Werkstückträgers unter einem Winkel von weniger als 15° relativ zur Vertikalen ausgerichtet ist.

Vorzugsweise ist in der Arbeitsstellung des Werkstückträgers der gemeinsame Schwerpunkt von Werkstück und Werkstückträger vertikal unter der Hubeinheit, insbesondere im Wesentlichen auf einer vertikalen Translationsachse der Hubeinheit, längs welcher die Hubeinheit anhebbar und absenkbar ist, angeordnet. Hierdurch wird eine Exzentrizität vermieden, welche im Zusammenwirken mit der Gewichtskraft von Werkstückträger und Werkstück zu einem auf die Hubeinheit einwirkenden Drehmoment führen würde.

Der Translationsantrieb zum Antreiben der Bewegung des Basisteils eines Fahrwagens kann insbesondere einen Elektromotor umfassen.

Ferner weist der Fahrwagen vorzugsweise einen eigenen Hubantrieb zum Anheben und Absenken der Hubeinheit relativ zu dem Basisteil auf.

Dabei ist vorzugsweise die Hubgeschwindigkeit während der Hubbewegung variierbar und/oder die Richtung der Hubbewegung umkehrbar.

Der Hubantrieb umfasst vorzugsweise einen Elektromotor.

Für eine erhöhte Betriebssicherheit kann der Translationsantrieb und/oder der Hubantrieb des Fahrwagens redundant ausgeführt werden.

Die Positionierung des Translationsantriebs und/oder des Hubantriebs an dem Fahrwagen erfolgt vorzugsweise so, dass der Fahrwagen möglichst kompakt ist und eine hohe mechanische Stabilität ohne eine aufwendige Konstruktion möglich ist.

Ein, vorzugsweise mittels eines Elektromotors angetriebenes, Antriebsrad für das Antreiben der Translationsbewegung kann an einem unteren Ende des Fahrwagens angeordnet sein, um mit einer Tragschiene der Fördervorrichtung zusammenzuwirken. Alternativ oder ergänzend hierzu kann auch vorgesehen sein, dass ein, vorzugsweise mittels eines Elektromotors angetriebenes, Antriebsrad an einem oberen Ende des Fahrwagens angeordnet ist, um zum Antreiben der Translationsbewegung des Fahrwagens mit einer Führungsschiene der Fördervorrichtung zusammenzuwirken.

Der Hubantrieb des Fahrwagens kann insbesondere eine Kulissenführung und/oder eine Verstellkinematik im Bereich einer Tragstruktur des Fahrwagens umfassen.

Die Steuerung des Translationsantriebs und des Hubantriebs des Fahrwagens erfolgt mittels einer an dem jeweiligen Fahrwagen angeordneten dezentralen Steuervorrichtung oder mittels einer zentralen Steuerungsvorrichtung der Fördervorrichtung.

Die Steuerung jedes Fahrwagens ist hinsichtlich seines Bewegungsablaufes in der Translationsrichtung und hinsichtlich des Bewegungsablaufs der Hubeinheit in vertikaler Richtung flexibel.

Während des Einbringens des Werkstücks in den Behandlungsbereich, während des Hindurchförderns des Werkstücks durch den Behandlungsbereich und während des Ausbringens des Werkstücks aus dem Behandlungsbereich befindet sich der Basisteil des Fahrwagens vorzugsweise seitlich neben dem Behandlungsbereich.

Vorzugsweise erstreckt sich der Fahrwagen nicht bis auf die gegenüberliegende Seite des Behandlungsbereichs, sondern ist nur einseitig neben dem Behandlungsbereich angeordnet. Auf diese Weise wird der für die Fördervorrichtung benötigte Raumbedarf reduziert.

Die horizontale Translation des Basisteils des Fahrwagens und die vertikale Translation der Hubeinheit können unabhängig voneinander stattfinden.

Auf diese Weise ist beispielsweise ein Einbringen des Werkstücks in den Behandlungsbereich auch bei Stillstand des Fahrwagens möglich, indem die Hubeinheit mit dem daran gehaltenen Werkstückträger und dem daran angeordneten Werkstück in vertikaler Richtung abgesenkt wird. Hierdurch kann die Ausdehnung des Behandlungsbereichs in der Translationsrichtung besonders kurz gehalten werden.

Erfolgt der Absenk- und/oder der Anhebvorgang bei stehendem Fahrwagen, so kann eine Stirnseite einer Behälterwandung eines Behandlungsbades ohne Schräge, im Wesentlichen senkrecht, ausgeführt werden, so dass das Behältervolumen und damit die Länge der Behandlungsanlage deutlich reduziert werden können.

Erfolgt der Absenk- und/oder der Anhebvorgang bei einem sich bewegenden Fahrwagen, muss die betreffende Stirnseite der Behälterwandung der Bewegungskontur des Werkstücks durch eine Schräge angepasst werden.

Der Fahrwagen kann beim Absenk- und/oder beim Anhebvorgang und/oder beim Hindurchbewegen des Werkstücks durch das Behandlungsbad in der Translationsrichtung jeweils eine unterschiedliche Geschwindigkeit aufweisen.

Um das Volumen eines Behandlungsbads zu minimieren, ist es günstig, den Absenk- und/oder den Anhebvorgang mit einer geringeren Translationsgeschwindigkeit, relativ zu der Translationsgeschwindigkeit beim Hindurchbewegen des Werkstücks durch das Behandlungsbad, auszuführen, weil dann die stirnseitige Behälterschräge annähernd senkrecht ausgeführt werden kann.

Das zu behandelnde Werkstück ist auf einem Werkstückträger angeordnet, welcher mit der vertikal bewegbaren Hubeinheit über mindestens zwei lösbare Verbindungen fixierbar ist.

In der Arbeitsstellung des Werkstückträgers an der Hubeinheit befindet sich mindestens eine Koppeleinrichtung des Werkstückträgers, welche zur Kopplung des Werkstückträgers mit der Hubeinheit mit mindestens einer Kopplungsvorrichtung der Hubeinheit zusammenwirkt, vorzugsweise oberhalb des Werkstücks. Auf diese Weise bleiben die Kopplungseinrichtung des Werkstückträgers und die Kopplungsvorrichtung der Hubeinheit auch dann außerhalb des Behandlungsbereichs, insbesondere oberhalb eines Badspiegels eines Behandlungsbades, wenn das Werkstück im Wesentlichen vollständig in den Behandlungsbereich, insbesondere ein Behandlungsbad, eingebracht wird. So kommen diese Teile der Fördervorrichtung nicht in Kontakt mit dem Behandlungsmedium im Behandlungsbereich.

Bei einer besonderen Ausgestaltung der Erfindung ist vorgesehen, dass der Werkstückträger mit mindestens einer Rolle versehen ist, welche den Werkstückträger beim Anheben und/oder beim Absenken des Werkstücks mittels der Hubeinheit, insbesondere an einer Abrollfläche, abstützt. Mittels einer solchen Rolle kann ein der Hubeinheit abgewandtes Ende des Werkstückträgers der Schwenkbewegung des der Hubeinheit zugewandten Endes des Werkstückträgers besonders leicht folgen, wenn der Werkstückträger nach dem Herstellen der Kopplung mit der Hubeinheit relativ zu der Hubeinheit geschwenkt wird.

Alternativ oder ergänzend hierzu kann vorgesehen sein, dass der Werkstückträger mit mindestens einem Gleitelement versehen ist, welches den Werkstückträger beim Anheben und/oder beim Absenken des Werkstücks mittels der Hubeinheit, insbesondere an einer Gleitbahn, abstützt. Mittels eines solchen Gleitelements kann ein der Hubeinheit abgewandtes Ende des Werkstückträgers der Schwenkbewegung des der Hubeinheit zugewandten Endes des Werkstückträgers besonders leicht folgen, wenn der Werkstückträger nach dem Herstellen der Kopplung mit der Hubeinheit relativ zu der Hubeinheit geschwenkt wird.

Vorzugsweise sind mindestens zwei Gleitelemente an dem Werkstückträger vorgesehen, welche an jeweils einer Gleitbahn der Fördervorrichtung abgleiten, wenn der Werkstückträger relativ zu der Hubeinheit geschwenkt wird.

Die Gleitbahn kann beispielsweise mehrere Gleitrollen umfassen, an denen das Gleitelement nacheinander abgleitet.

Bei der Erfindung ist vorgesehen, dass die Hubeinheit
- eine erste Kopplungsvorrichtung zur Ankopplung des Werkstückträgers, an dem das zu behandelnde Werkstück aufnehmbar ist, an die Hubeinheit und
- eine zweite Kopplungsvorrichtung zur Fixierung der Winkelposition des Werkstückträgers relativ zu der Hubeinheit in der Arbeitsstellung des Werkstückträgers
umfasst. Durch die beiden Kopplungsvorrichtungen an der Hubeinheit wird die gewünschte Stellung des Werkstückträgers und damit des an dem Werkstückträger angeordneten Werkstücks beim Durchlaufen des Behandlungsbereichs allein durch eine geeignete Ankopplung des Werkstückträgers an die Hubeinheit der Fördervorrichtung bewirkt. Die Ausrichtung des Werkstücks beim Durchlaufen des Behandlungsbereichs ist daher stets wohldefiniert.

Hierzu wird eine erste Kopplung des Werkstückträgers an die Hubeinheit mittels der ersten Kopplungsvorrichtung der Hubeinheit und eine zweite Kopplung des Werkstückträgers an die Hubeinheit mittels der zweiten Kopplungsvorrichtung der Hubeinheit durchgeführt.

Nach Herstellen der ersten Kopplung zwischen dem Werkstückträger und der Hubeinheit ist der Werkstückträger mit der Hubeinheit mitbewegbar, wobei der Werkstückträger jedoch noch relativ zu der Hubeinheit schwenkbar bleibt, vorzugsweise um eine im Wesentlichen horizontal ausgerichtete Schwenkachse. Insbesondere kann der Werkstückträger durch Anheben der Hubeinheit aus einer horizontalen Ausgangsstellung, in welcher eine Längsrichtung des Werkstückträgers im Wesentlichen horizontal ausgerichtet ist, in eine Arbeitsstellung gebracht werden, in welcher die Längsrichtung des Werkstückträgers eine gewünschte Winkelposition relativ zu der Hubeinheit und relativ zu der Vertikalen einnimmt.

Insbesondere kann vorgesehen sein, dass die Längsrichtung des Werkstückträgers in der Arbeitsstellung im Wesentlichen vertikal ausgerichtet ist.

Nach Erreichen der Arbeitsstellung des Werkstückträgers kann bei der Fördervorrichtung die zweite Kopplung zwischen dem Werkstückträger und der Hubeinheit mittels der zweiten Kopplungsvorrichtung der Hubeinheit hergestellt werden, wonach der Werkstückträger in der Arbeitsstellung relativ zu der Hubeinheit in einer definierten Winkelposition fixiert ist. Diese Winkelposition wird beibehalten, bis die zweite Kopplung zwischen dem Werkstückträger und der Hubeinheit wieder gelöst wird.

Nach dem Lösen der zweiten Kopplung ist der Werkstückträger wieder relativ zu der Hubeinheit verschwenkbar, so dass insbesondere der Werkstückträger durch Absenken der Hubeinheit wieder aus der Arbeitsstellung in die horizontale Ausgangsstellung zurückgebracht werden kann.

Wenn die horizontale Ausgangsstellung des Werkstückträgers wieder erreicht ist, kann auch die erste Kopplung zwischen dem Werkstückträger und der Hubeinheit gelöst werden. Nach dem Lösen der ersten Kopplung können der Werkstückträger mit dem daran angeordneten Werkstück und die Hubeinheit unabhängig voneinander weiterbewegt werden.

Vorzugsweise bringt die Fördervorrichtung das Werkstück zwischen dem Herstellen der zweiten Kopplung und dem Lösen der zweiten Kopplung zwischen dem Werkstückträger und der Hubeinheit in den Behandlungsbereich ein und wieder aus dem Behandlungsbereich heraus.

Zwischen dem Einbringen des Werkstücks in den Behandlungsbereich und dem Ausbringen des Werkstücks aus dem Behandlungsbereich fördert die Fördervorrichtung das Werkstück vorzugsweise längs der Translationsrichtung der Fördervorrichtung durch den Behandlungsbereich hindurch.

Die zweite Kopplung des Werkstückträgers an die Hubeinheit mittels der zweiten Kopplungsvorrichtung der Hubeinheit erfolgt vorzugsweise nach einem Aufrichten des Werkstückträgers, das heißt nach einer Überführung des Werkstückträgers aus einer horizontalen Ausgangsstellung in die Arbeitsstellung.

Bei der Erfindung ist der Werkstückträger mit einer ersten Kopplungseinrichtung zum Zusammenwirken mit der ersten Kopplungsvorrichtung der Hubeinheit und mit einer zweiten Kopplungseinrichtung zum Zusammenwirken mit der zweiten Kopplungsvorrichtung der Hubeinheit versehen.

Dabei ist es günstig, wenn die zweite Kopplungseinrichtung durch eine freie Kippbewegung des Werkstückträgers und des daran angeordneten Werkstücks relativ zu der Hubeinheit mit der zweiten Kopplungsvorrichtung der Hubeinheit verrastbar ist. Auf diese Weise ist die für die Fixierung des Werkstückträgers in der Arbeitsstellung relativ zu der Hubeinheit erforderliche zweite Kopplung zwischen dem Werkstück und der Hubeinheit besonders einfach herstellbar.

Die erste Kopplungseinrichtung und die zweite Kopplungseinrichtung des Werkstückträgers können längs einer Längsrichtung des Werkstückträgers gegeneinander versetzt angeordnet sein. Insbesondere kann vorgesehen sein, dass die erste Kopplungseinrichtung und die zweite Kopplungseinrichtung des Werkstückträgers an einer horizontalen Verlängerung des Werkstückträgers, insbesondere einer Skidkufe des Werkstückträgers, angeordnet sind.

Alternativ oder ergänzend hierzu kann auch vorgesehen sein, dass die erste Kopplungseinrichtung und die zweite Kopplungseinrichtung des Werkstückträgers längs einer senkrecht zur Längsrichtung und senkrecht zu einer Querrichtung des Werkstückträgers ausgerichteten Aufwärtsrichtung des Werkstückträgers gegeneinander versetzt angeordnet sind. Insbesondere kann dabei vorgesehen sein, dass die erste Kopplungseinrichtung und die zweite Kopplungseinrichtung an einer Kröpfung des Werkstückträgers angeordnet sind.

Um den Werkstückträger zu Beginn eines Ankopplungsvorgangs an die Hubeinheit oder zu Beginn eines Abkopplungsvorgangs von der Hubeinheit in eine genau definierte Position bringen zu können, ist es günstig, wenn die Fördervorrichtung mindestens eine Arretiervorrichtung zum Arretieren des Werkstückträgers in einer Arretierposition umfasst, wobei die Arretiervorrichtung zwischen einer Arbeitsstellung, in welcher die Arretiervorrichtung den Werkstückträger arretieren kann, und einer Freigabestellung, in welcher die Arretiervorrichtung den Werkstückträger nicht arretieren kann, bewegbar ist. In der Freigabestellung ist die Arretiervorrichtung vorzugsweise von dem Werkstückträger passierbar.

Bei einer besonderen Ausgestaltung der Erfindung ist vorgesehen, dass die Fördervorrichtung mindestens eine Aufnahmevorrichtung zum Aufnehmen eines Bereiches des Werkstückträgers, insbesondere eines Endbereiches einer Skidkufe des Werkstückträgers, aufweist, wobei die Aufnahmevorrichtung beim Anheben und/oder beim Absenken des Werkstücks zusammen mit dem Werkstückträger schwenkbar ist. Mittels einer solchen Aufnahmevorrichtung ist das der Hubeinheit abgewandte Ende des Werkstückträgers bei einer Schwenkbewegung des Werkstückträgers relativ zu der Hubeinheit besonders leicht nachführbar.

Eine solche Aufnahmevorrichtung kann insbesondere als ein Skidkufenschuh mit einer Kufenaufnahme ausgebildet sein.

Bei einer besonderen Ausgestaltung der Fördervorrichtung kann vorgesehen sein, dass die Fördervorrichtung eine Führungsvorrichtung zum Führen eines Endbereiches des Werkstückträgers bei der Überführung des Werkstückträgers in die Arbeitsstellung und/oder aus der Arbeitsstellung umfasst.

Eine solche Führungsvorrichtung kann insbesondere ein Abstützelement umfassen, an welchem sich ein Endbereich des Werkstückträgers bei der Überführung des Werkstückträgers in die Arbeitsstellung und/oder aus der Arbeitsstellung abstützt, wobei das Abstützelement während der Überführung des Werkstückträgers in die Arbeitsstellung und/oder aus der Arbeitsstellung vorzugsweise schwenkbar ist.

Ferner kann vorgesehen sein, dass der Werkstückträger an der Führungsvorrichtung arretierbar ist, so dass der Werkstückträger einer Schwenkbewegung eines Abstützelements der Führungsvorrichtung folgen kann. Ferner kann vorgesehen sein, dass die Fördervorrichtung eine Gleitbahn zum Abstützen eines Endbereiches des Werkstückträgers beim Anheben und/oder beim Absenken des Werkstücks umfasst.

Eine solche Gleitbahn kann insbesondere mit einem an dem Werkstückträger vorgesehenen Gleitelement zusammenwirken, welches beim Anheben und/oder beim Absenken des Werkstücks an der Gleitbahn abgleitet.

Bei der Fördervorrichtung kann vorgesehen sein, dass der Werkstückträger an die Hubeinheit ankoppelbar ist, bevor er relativ zu der Hubeinheit in die Arbeitsstellung gebracht wird.

Ferner kann vorgesehen sein, dass der Werkstückträger von der Hubeinheit lösbar ist, nachdem er aus der Arbeitsstellung ausgebracht worden ist. Alternativ hierzu kann aber auch vorgesehen sein, dass die Fördervorrichtung eine Schwenkvorrichtung zum Überführen des Werkstückträgers in die Arbeitsstellung vor dem Ankoppeln des Werkstückträgers an die Hubeinheit und/oder eine Schwenkvorrichtung zum Überführen des Werkstückträgers aus der Arbeitsstellung nach dem Abkoppeln des Werkstückträgers von der Hubeinheit umfasst.

Vorzugsweise ist der Werkstückträger an einer solchen Schwenkvorrichtung arretierbar.

Eine solche Schwenkvorrichtung kann insbesondere eine Rollenbahn umfassen, an welcher der Werkstückträger während des Überführens des Werkstückträgers in die Arbeitsstellung oder aus der Arbeitsstellung abgestützt ist.

Die Schwenkvorrichtung kann insbesondere eine Zahnrad/Zahnstangen-Anordnung und/oder eine Kettenanordnung umfassen, mittels welcher eine Schwenkbewegung einer Werkstückträgeraufnahme, insbesondere einer Rollenbahn, antreibbar ist.

Um insbesondere dann eine gute Umströmung des Werkstücks in dem Behandlungsbad zu erzielen, wenn das Werkstück in einer vertikalen Arbeitsstellung durch das Behandlungsbad gefördert wird, ist es von Vorteil, wenn das Behandlungsbecken mit einem Düsensystem versehen ist, mittels welchem eine Umströmung des Werkstücks mit einer quer, vorzugsweise im Wesentlichen senkrecht, zur Translationsrichtung der Fördervorrichtung ausgerichteten Hauptströmungsrichtung erzeugbar ist.

Das Behandlungsbecken ist vorzugsweise mit einem Überlaufbecken versehen, welches seitlich neben dem Behandlungsbecken angeordnet ist. Insbesondere ist das Überlaufbecken vorzugsweise quer, insbesondere im Wesentlichen senkrecht, zur Translationsrichtung und in horizontaler Richtung relativ zu dem Behandlungsbecken versetzt angeordnet.

Wenn es sich bei dem Behandlungsbad um ein elektrophoretisches Tauchlackierungsbad handelt, so umfasst das Behandlungsbecken ferner im Behandlungsbad angeordnete Dialysezellen, welche dazu dienen, als die dem Werkstück entgegengesetzte Elektrode zu fungieren und bei der Lackabscheidung frei werdenden überschüssigen Lack aus dem Behandlungsbad auszuschleusen.

Um die Handhabung der Dialysezellen, den Einbau derselben in das Behandlungsbecken und den Ausbau derselben aus dem Behandlungsbecken sowie den Transport der Dialysezellen in eine Tauchlack-Kabine, in welcher das Behandlungsbecken angeordnet ist, und aus der Tauchlack-Kabine heraus zu vereinfachen, ist es von Vorteil, wenn das Behandlungsbecken mindestens zwei Dialysezellen umfasst, welche in vertikaler Richtung gegeneinander versetzt angeordnet sind. In diesem Fall kann jede der Dialysezellen eine Höhe aufweisen, die niedriger ist als die gesamte Höhe des von den Dialysezellen überstrichenen Bereichs des Behandlungsbeckens. Insbesondere dann, wenn die Werkstücke in einer vertikalen Arbeitsstellung durch das Behandlungsbad gefördert werden, können auf diese Weise Dialysezellen mit einer üblichen Höhe verwendet werden, obwohl die insgesamt von der Dialysezellen-Anordnung überstrichene Höhe des Behandlungsbeckens deutlich höher sein muss als in einem Fall, in dem die Werkstücke in einer horizontalen Stellung durch das Behandlungsbad gefördert werden.

Die vorliegende Erfindung betrifft ferner ein Verfahren zum Fördern von Werkstücken, die Fahrzeugkarosserien sind, durch einen Behandlungsbereich zur Oberflächenbehandlung der Werkstücke.

Der vorliegenden Erfindung liegt die weitere Aufgabe zugrunde, ein solches Verfahren zu schaffen, bei dem der Bewegungsweg der Werkstücke durch den Behandlungsbereich flexibel gestaltbar ist.

Diese Aufgabe wird erfindungsgemäß durch ein Verfahren zum Fördern von Werkstücken, die Fahrzeugkarosserien sind, durch einen Behandlungsbereich zur Oberflächenbehandlung der Werkstücke nach Anspruch 14 gelöst.

Die Reihenfolge der vorstehend angegebenen Verfahrensschritte ist grundsätzlich beliebig; ferner können auch mehrere dieser Verfahrensschritte gleichzeitig ausgeführt werden.

Insbesondere ist es möglich, den Werkstückträger an die Hubeinheit anzukoppeln, bevor der Werkstückträger in die Arbeitsstellung relativ zu der Hubeinheit gebracht wird.

Ferner ist es möglich, den Werkstückträger von der Hubeinheit zu lösen, nachdem der Werkstückträger wieder aus der Arbeitsstellung relativ zu der Hubeinheit ausgebracht worden ist.

Alternativ hierzu kann aber auch vorgesehen sein, dass der Werkstückträger in die Arbeitsstellung relativ zu der Hubeinheit gebracht wird, beispielsweise mittels einer Schwenkvorrichtung, bevor er an die Hubeinheit angekoppelt wird.

Ferner kann auch vorgesehen sein, dass der Werkstückträger von der Hubeinheit gelöst wird, bevor er aus der Arbeitsstellung relativ zu der Hubeinheit ausgebracht wird.

Vorteile und besondere Ausgestaltungen des erfindungsgemäßen Verfahrens sind bereits vorstehend im Zusammenhang mit der erfindungsgemäßen Anlage zur Oberflächenbehandlung von Werkstücken und deren besonderen Ausgestaltungen erläutert worden.

Insbesondere kann bei dem erfindungsgemäßen Verfahren vorgesehen sein, dass die Ankopplung des Werkstückträgers an eine erste Kopplungsvorrichtung der Hubeinheit erfolgt und dass ein Fixieren der Winkelposition des Werkstückträgers relativ zu der Hubeinheit in der Arbeitsstellung des Werkstückträgers mittels einer zweiten Kopplungsvorrichtung der Hubeinheit erfolgt.

Die Fördervorrichtung der erfindungsgemäßen Anlage bietet den Vorteil, dass die Werkstücke in einem geringen Taktabstand durch den Behandlungsbereich gefördert werden können.

Durch die Vertikalstellung der Werkstücke ergibt sich ein geringerer Abstand von Werkstück zu Werkstück, wodurch die gesamte benötigte Anlagenlänge reduziert wird und so eine nicht unerhebliche Platzersparnis resultiert. Insbesondere die Länge eines Behandlungsbeckens kann reduziert werden.

Durch den geringeren Raumbedarf der Anlage zur Oberflächenbehandlung von Werkstücken kann auch ein kleineres Gebäude zur Unterbringung der Anlage verwendet werden. Insbesondere die benötigte Grundfläche kann reduziert werden. Eine möglicherweise benötigte zusätzliche Gebäudehöhe spielt demgegenüber eine untergeordnete Rolle.

Durch die Verwendung eines Behandlungsbeckens, das eine kürzere Länge und dafür eine größere Höhe aufweist, erhöht sich das Verhältnis von Badvolumen zu freier Badoberfläche.

Durch die im Verhältnis zum Badvolumen kleinere Badoberfläche kann weniger Wärme aus dem Behandlungsbad entweichen, wodurch zur Beheizung Wärmetauscher mit einer geringeren Leistung verwendet werden können, was sich positiv auf die Heizkosten niederschlägt.

Durch die vertikale Arbeitsstellung der Werkstücke weisen die Werkstücke nur kleine Sedimentationsflächen auf, an denen sich Verunreinigungen aus dem Behandlungsbad niederschlagen können.

Bei der Behandlung von Fahrzeugkarosserien sind in der vertikalen Arbeitsstellung kaum horizontale Flächen vorhanden, auf denen sich Schmutzpartikel ablagern können.

Die Werkstücke, die Fahrzeugkarosserien sind, zeigen bei vertikaler Arbeitsstellung ein gutes Entlüftungs- und Auslaufverhalten.

Beim Eintauchen eines Werkstücks, das eine Fahrzeugkarosserie ist, in das Behandlungsbad in der vertikalen Arbeitsstellung kann die Luft besser aus dem Werkstück, das eine Fahrzeugkarosserie ist, entweichen.

Beim Austauchen des Werkstücks, das eine Fahrzeugkarosserie ist, in der vertikalen Arbeitsstellung kann Behandlungsflüssigkeit schnell aus dem Werkstück, das eine Fahrzeugkarosserie ist, auslaufen.

Durch die vertikale Arbeitsstellung der Werkstücke im Behandlungsbad wird das Entweichen von Luftblasen und Elektrolysegasen aus dem Behandlungsbad begünstigt.

Die fördertechnischen Einrichtungen müssen bei der erfindungsgemäßen Fördervorrichtung nicht in das Behandlungsbad eintauchen.

Vorzugsweise kommt lediglich das Werkstück selbst und ein Teil des Werkstückträgers, welcher vorzugsweise keine Kopplungseinrichtungen umfasst, mit dem Behandlungsmedium in Kontakt.

Die Fördervorrichtung der erfindungsgemäßen Anlage ermöglicht, insbesondere bei vertikaler Arbeitsstellung, ein rasches Ein- und Austauchen.

Bei einem Ein- und Austauchvorgang in der vertikalen Arbeitsstellung bietet das Werkstück, das eine Fahrzeugkarosserie ist, der Behandlungsflüssigkeit nur eine geringe Anströmfläche, wodurch sehr hohe Ein- bzw. Austauchgeschwindigkeiten realisiert werden können. Insbesondere kann die Eintauchgeschwindigkeit oder die Austauchgeschwindigkeit mindestens ungefähr 300 mm/s, insbesondere mindestens ungefähr 500 mm/s, betragen.

Durch das schnelle Ein- und Austauchen ergibt sich eine höhere Relativgeschwindigkeit zwischen dem Werkstück und einem Spülmedium, so dass in einem Spülbad ein hoher Abtrag an Schmutzpartikeln erfolgen kann.

Mittels der Fördervorrichtung der erfindungsgemäßen Anlage ist somit ein gutes Spülverhalten erzielbar.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Darstellung einer Fördervorrichtung zum Fördern von Werkstücken durch ein Behandlungsbad zur Oberflächenbehandlung der Werkstücke während mehrerer aufeinanderfolgender Phasen eines Ankopplungsvorgangs, bei welchem ein Werkstückträger, an dem ein zu behandelndes Werkstück angeordnet ist, mit einer Hubeinheit der Fördervorrichtung gekoppelt wird, und eines daran anschließenden Eintauchvorgangs des Werkstücks;
- Fig. 2: eine schematische Darstellung der Fördervorrichtung während eines Austauchvorgangs des Werkstücks;
- Fig. 3 und 4: schematische Darstellungen der Fördervorrichtung während eines Abkopplungsvorgangs, bei welchem der Werkstückträger von der Hubeinheit abgekoppelt wird;
- Fig. 5: eine schematische Seitenansicht des in einer Arbeitsstellung an die Hubeinheit angekoppelten Werkstückträgers mit dem an dem Werkstückträger angeordneten Werkstück;
- Fig. 6: eine schematische Darstellung einer zweiten Ausführungsform der Fördervorrichtung zum Fördern von Werkstücken durch ein Behandlungsbad zur Oberflächenbehandlung der Werkstücke während mehrerer aufeinanderfolgender Phasen eines Ankopplungsvorgangs, bei welchem ein Werkstückträger, an welchem ein zu behandelndes Werkstück angeordnet ist, an eine Hubeinheit der Fördervorrichtung angekoppelt wird, und eines Eintauchvorgangs, bei welchem das Werkstück in das Behandlungsbad eingebracht wird;
- Fig. 7: eine schematische Darstellung der Fördervorrichtung aus Fig. 6 während eines Austauchvorgangs, bei welchem das Werkstück aus dem Behandlungsbad ausgebracht wird;
- Fig. 8: eine schematische Darstellung aufeinanderfolgender Phasen eines Abkopplungsvorgangs, bei welchem der Werkstückträger von der Hubeinheit der Fördervorrichtung abgekoppelt wird;
- Fig. 9 bis 11: eine schematische Darstellung einer dritten Ausführungsform der Fördervorrichtung zum Fördern von Werkstücken durch ein Behandlungsbad zur Oberflächenbehandlung der Werkstücke während aufeinanderfolgender Phasen eines Ankopplungsvorgangs, bei welchem ein Werkstückträger, an dem ein zu behandelndes Werkstück angeordnet ist, an eine Hubeinheit der Fördervorrichtung angekoppelt wird;
- Fig. 12 bis 14: schematische Darstellungen der Fördervorrichtung aus den Fig. 9 bis 11 während aufeinanderfolgender Phasen eines Abkopplungsvorgangs, bei welchem der Werkstückträger von der Hubeinheit abgekoppelt wird, nachdem das Werkstück aus dem Behandlungsbad ausgebracht worden ist;
- Fig. 15: eine ausschnittsweise schematische Darstellung einer vierten Ausführungsform der Fördervorrichtung zum Fördern von Werkstücken durch ein Behandlungsbad zur Oberflächenbehandlung der Werkstücke, bei welcher Kopplungseinrichtungen eines ein zu behandelndes Werkstück tragenden Werkstückträgers, die zur Kopplung mit Kopplungsvorrichtungen einer Hubeinheit der Fördervorrichtung dienen, in einer Längsrichtung des Werkstückträgers gegeneinander versetzt angeordnet sind;
- Fig. 16: eine schematische Darstellung der vierten Ausführungsform der Fördervorrichtung während aufeinanderfolgender Phasen eines Ankopplungsvorgangs, bei welchem der Werkstückträger an die Hubeinheit angekoppelt wird;
- Fig. 17: einen schematischen vertikalen Längsschnitt durch ein Behandlungsbecken einer Anlage zur Oberflächenbehandlung von Werkstücken mit einer Düsenanordnung zur Erzeugung einer Querströmung in dem Behandlungsbad;
- Fig. 18: einen schematischen vertikalen Querschnitt durch das Behandlungsbecken aus Fig. 17;
- Fig. 19: einen schematischen vertikalen Längsschnitt durch eine zweite Ausführungsform des Behandlungsbeckens der Anlage zur Oberflächenbehandlung von Werkstücken mit einer anderen Düsenanordnung zur Erzeugung einer Querströmung im Behandlungsbad;
- Fig. 20: einen schematischen vertikalen Querschnitt durch das Behandlungsbecken aus Fig. 19;
- Fig. 21: einen schematischen vertikalen Längsschnitt durch eine dritte Ausführungsform des Behandlungsbeckens der Anlage zur Oberflächenbehandlung von Werkstücken mit einer anderen Düsenanordnung zum Erzeugen der Querströmung in dem Behandlungsbad;
- Fig. 22: einen schematischen vertikalen Querschnitt durch das Behandlungsbecken aus Fig. 21;
- Fig. 23: eine schematische Vorderansicht von Dialyse-Rundzellen in einem Elektrotauchlackierbecken einer Anlage zur Oberflächenbehandlung von Werkstücken, die in zwei Reihen übereinander angeordnet sind;
- Fig. 24: eine schematische Vorderansicht von Dialyse-Flach- oder -Halbrundzellen eines Elektrotauchlackierbeckens einer Anlage zur Oberflächenbehandlung von Werkstücken, welche vertikal übereinander angeordnet sind;
- Fig. 25: eine schematische Vorderansicht einer zweiten Ausführungsform von Dialyse-Flach- oder -Halbrundzellen eines Elektrotauchlackierbeckens einer Anlage zur Oberflächenbehandlung von Werkstücken, welche vertikal übereinander angeordnet sind;
- Fig. 26: eine schematische Draufsicht von oben auf eine DialyseHalbrundzelle eines Elektrotauchlackierbeckens einer Anlage zur Oberflächenbehandlung von Werkstücken;
- Fig. 27: eine schematische perspektivische Darstellung einer fünften Ausführungsform der Fördervorrichtung zum Fördern von Werkstücken durch ein Behandlungsbad zur Oberflächenbehandlung der Werkstücke, bei welcher die Fördervorrichtung eine Führungsvorrichtung zum Führen eines Endbereiches des Werkstückträgers bei der Überführung des Werkstückträgers in die Arbeitsstellung umfasst;
- Fig. 28: eine schematische Seitenansicht des Werkstücks und des Werkstückträgers bei der fünften Ausführungsform;
- Fig. 29: eine schematische Draufsicht auf das Werkstück und den Werkstückträger aus Fig. 28, mit der Blickrichtung in Richtung des Pfeiles 29 in Fig. 28;
- Fig. 30: eine schematische Darstellung der Fördervorrichtung aus Fig. 27 während aufeinanderfolgender Phasen eines Ankopplungsvorgangs, bei welchem der Werkstückträger, an dem das zu behandelnde Werkstück angeordnet ist, an eine Hubeinheit der Fördervorrichtung angekoppelt wird;
- Fig. 31: eine schematische Ansicht der Hubeinheit und des Werkstücks in einem in ein Behandlungsbad eingetauchten Zustand und in einem aus dem Behandlungsbad herausgehobenen Zustand, mit der Blickrichtung in Richtung des Pfeiles 31 in Fig. 30;
- Fig. 32: eine schematische Seitenansicht einer Kopplungsvorrichtung zur Fixierung der Winkelposition des Werkstückträgers relativ zu der Hubeinheit in der Arbeitsstellung des Werkstückträgers;
- Fig. 33 bis 35: eine schematische Darstellung aufeinanderfolgender Phasen der Überführung des Werkstückträgers aus einer Ausgangsstellung in die Arbeitsstellung, wobei ein angehobener Endbereich des Werkstückträgers durch ein Abstützelement einer Führungsvorrichtung abgestützt wird;
- Fig. 36: eine schematische Darstellung aufeinanderfolgender Phasen eines Abkopplungsvorgangs, bei welchem der Werkstückträger aus der Arbeitsstellung in die Ausgangsstellung überführt wird, wobei ein Endbereich des Werkstückträgers durch ein Abstützelement einer Führungsvorrichtung abgestützt wird;
- Fig. 37: eine schematische Darstellung aufeinanderfolgender Phasen eines Abkopplungsvorgangs, bei welchem der Werkstückträger von der Hubeinheit abgekoppelt wird, an ein Abstützelement einer Führungsvorrichtung gekoppelt wird und durch Schwenken des Abstützelements in die Ausgangsstellung überführt wird;
- Fig. 38: eine schematische perspektivische Darstellung einer sechsten Ausführungsform der Fördervorrichtung zum Fördern von Werkstücken durch ein Behandlungsbad zur Oberflächenbehandlung der Werkstücke, bei welcher der Werkstückträger mit mehreren Geleitelementen versehen ist, die an jeweils einer mit Gleitrollen versehenen Gleitbahn abgleiten, wenn der Werkstückträger von der Ausgangsstellung in die Arbeitsstellung überführt wird;
- Fig. 39: eine schematische Seitenansicht des Werkstücks und des Werkstückträgers bei der sechsten Ausführungsform;
- Fig. 40: eine schematische Darstellung aufeinanderfolgender Phasen eines Ankopplungsvorgangs, bei welchem der Werkstückträger, an dem das zu behandelnde Werkstück angeordnet ist, an eine Hubeinheit der sechsten Ausführungsform der Fördervorrichtung angekoppelt wird;
- Fig. 41: eine schematische Darstellung der Hubeinheit und des Werkstücks in einem in das Behandlungsbad eingetauchten Zustand und in einem aus dem Behandlungsbad ausgetauchten Zustand, mit der Blickrichtung in Richtung des Pfeiles 41 in Fig. 40;
- Fig. 42: einen schematischen Querschnitt durch den Werkstückträger und eine Rollenbahn, welche den Werkstückträger trägt, im Bereich einer ersten Kopplungseinrichtung des Werkstückträgers;
- Fig. 43: eine schematische Seitenansicht der ersten Kopplungseinrichtung des Werkstückträgers und einer zweiten Kopplungseinrichtung des Werkstückträgers sowie einer ersten Kopplungsvorrichtung und einer zweiten Kopplungsvorrichtung der Hubeinheit;
- Fig. 44: eine schematische perspektivische Darstellung eines Endberichts des Werkstückträgers mit zwei Gleitelementen, die an jeweils einer mit Gleitrollen versehenen Gleitbahn der Fördervorrichtung abgleiten, während der Werkstückträger in die Arbeitsstellung überführt wird;
- Fig. 45: einen schematischen Querschnitt durch den Werkstückträger mit den Gleitelementen, die Gleitbahnen und eine Rollenbahn der Fördervorrichtung;
- Fig. 46: eine schematische perspektivische Darstellung einer Abkopplungsstation der sechsten Ausführungsform der Fördervorrichtung, in welcher der Werkstückträger von der Hubeinheit abgekoppelt wird;
- Fig. 47: eine schematische perspektivische Darstellung einer siebten Ausführungsform der Fördervorrichtung zum Fördern von Werkstücken durch ein Behandlungsbad zur Oberflächenbehandlung der Werkstücke, wobei die Fördervorrichtung eine Schwenkvorrichtung zum Überführen des Werkstückträgers in die Arbeitsstellung vor dem Ankoppeln des Werkstückträgers an die Hubeinheit umfasst;
- Fig. 48: eine schematische Darstellung aufeinanderfolgender Phasen eines Ankopplungsvorgangs, bei welchem der Werkstückträger, an dem das zu behandelnde Werkstück angeordnet ist, mittels der Schwenkvorrichtung von seiner Ausgangsstellung in die Arbeitsstellung geschwenkt, anschließend an die Hubeinheit der Fördervorrichtung angekoppelt und mittels der Hubeinheit in das Behandlungsbad eingebracht wird;
- Fig. 49: eine schematische Darstellung der Schwenkvorrichtung und der Hubeinheit nach dem Schwenken des Werkstückträgers in die Arbeitsstellung und nach dem Anheben des Werkstückträgers und des daran angeordneten Werkstücks mittels der Hubeinheit nach dem Ankoppeln des Werkstückträgers an die Hubeinheit, mit der Blickrichtung in Richtung des Pfeiles 49 in Fig. 48;
- Fig. 50: eine schematische Darstellung aufeinanderfolgender Phasen eines Abkopplungsvorgangs, bei welchem der Werkstückträger von der Hubeinheit abgekoppelt wird und anschließend mittels einer Schwenkvorrichtung aus der Arbeitsstellung in die Ausgangsstellung überführt wird;
- Fig. 51: eine schematische Explosionsdarstellung eines vorderen Endbereichs des Werkstückträgers, einer Kopplungsvorrichtung der Hubeinheit und einer Antriebsvorrichtung zum Überführen der Kopplungsvorrichtung der Hubeinheit von einer Verriegelungsstellung in eine Entriegelungsstellung; und
- Fig. 52: eine schematische Seitenansicht des vorderen Endbereichs des Werkstückträgers und der Kopplungsvorrichtung der Hubeinheit aus Fig. 51 in einem Verriegelungszustand und in einem Entriegelungszustand.

Gleiche oder funktional äquivalente Elemente sind in allen Figuren mit denselben Bezugszeichen bezeichnet.

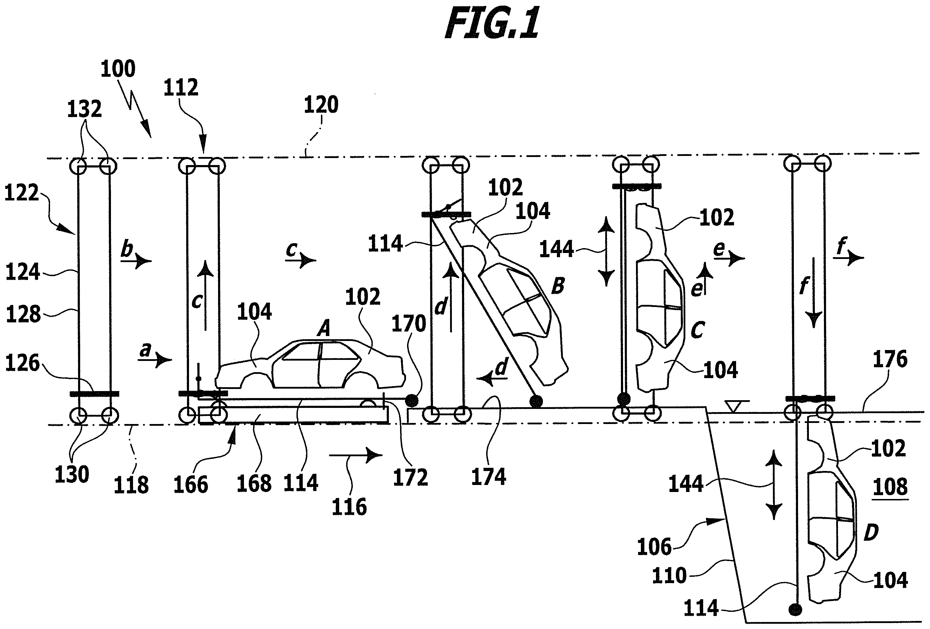

Eine in den Fig. 1 bis 5 dargestellte, als Ganzes mit 100 bezeichnete Anlage zur Oberflächenbehandlung von Werkstücken 102, insbesondere Fahrzeugkaroserien 104, umfasst mindestens einen Behandlungsbereich 106, in welchem eine Oberflächenbehandlung der Werkstücke 102 durchgeführt wird. Bei dieser Oberflächenbehandlung kann es sich insbesondere dann, wenn die Anlage 100 als eine Anlage zum Lackieren der Werkstücke 102 ausgebildet ist, beispielsweise um eine Vorbehandlung (zum Beispiel eine Entfettung, eine Phosphatierung oder eine Passivierung) oder eine Tauchlackierung (insbesondere eine Elektrotauchlackierung) handeln.

Der Behandlungsbereich 106 kann insbesondere als ein Behandlungsbad 108 aus einer Behandlungsflüssigkeit in einem Behandlungsbecken 110 ausgebildet sein.

Alternativ hierzu kann auch vorgesehen sein, dass die Werkstücke 102 in dem Behandlungsbereich 106 nicht in ein Behandlungsbad 108 einer Behandlungsflüssigkeit eingetaucht werden, sondern in dem Behandlungsbereich 106 auf andere Weise mit einem flüssigen oder gasförmigen Behandlungsmedium beaufschlagt werden, beispielsweise mit Strahlen eines flüssigen oder gasförmigen Behandlungsmediums, die mittels einer oder mehrerer Düsen erzeugt werden.

Um die Werkstücke 102 in den Behandlungsbereich 106 einbringen, durch den Behandlungsbereich 106 hindurch fördern und aus dem Behandlungsbereich 106 wieder ausbringen zu können, umfasst die Anlage 100 eine Fördervorrichtung 112, die ihrerseits eine Mehrzahl von unabhängig voneinander verfahrbaren Fahrwagen 122 umfasst, welche jeweils zeitweise mit einem Werkstückträger 114 koppelbar sind, an dem jeweils eines der zu behandelnden Werkstücke 102 gehalten ist.

Ferner umfasst die Fördervorrichtung 112 eine sich in einer Translationsrichtung 116 erstreckende Tragschiene 118 und eine sich im Wesentlichen parallel zu der Tragschiene 118 und ebenfalls parallel zur Translationsrichtung 116 erstreckende Führungsschiene 120, die mit vertikalem Abstand von der Tragschiene 118 oberhalb der Tragschiene 118 angeordnet ist (siehe insbesondere Fig. 1).

Die Tragschiene 118 und die Führungsschiene 120 sind vorzugsweise im Wesentlichen horizontal ausgerichtet; es ist aber auch möglich, dass diese Schienen ansteigende und/oder abfallende Abschnitte aufweisen, die gegenüber der Horizontalen geneigt sind, um die Höhe des Förderniveaus der Fahrwagen 122 zu verändern.

Jeder der Fahrwagen 122 umfasst einen Basisteil 124, der mittels eines (nicht dargestellten) Translationsantriebs längs der Translationsrichtung 116 verfahrbar ist, und eine Hubeinheit 126, die mittels eines (nicht dargestellten) Hubantriebs relativ zu dem Basisteil 124 anhebbar und absenkbar ist.

Wie beispielsweise aus Fig. 1 zu ersehen ist, umfasst der Basisteil 124 eine Rahmenkonstruktion 128, an welcher mehrere, beispielsweise zwei, Laufräder 130 um horizontale Drehachsen drehbar gelagert sind.

Mit den Laufrädern 130, die auf einer horizontalen Lauffläche der Tragschiene 118 abrollen, stützt sich der Basisteil 124 an der Tragschiene 118 ab, welche somit das Gewicht des Fahrwagens 122 (gegebenenfalls samt des daran angeordneten Werkstückträgers 114 und des Werkstücks 102) trägt.

Der Translationsantrieb, mittels welchem der Basisteil 124 längs der Translationsrichtung 116 relativ zu der Tragschiene 118 verfahrbar ist, kann beispielsweise einen oder mehrere Reibradmotoren umfassen, von denen jeder ein Reibrad zu einer Drehbewegung antreibt, welches beispielsweise an einer vertikalen Abrollfläche der Tragschiene 118 anliegen kann, so dass das betreffende Reibrad längs der Abrollflächen in der Translationsrichtung 116 abrollt, wenn es von einem Reibradmotor zu einer Drehbewegung angetrieben wird.

Alternativ oder ergänzend hierzu kann auch vorgesehen sein, dass eines der Laufräder 130 des Fahrwagens 122 mittels eines Antriebsmotors zu einer Drehbewegung angetrieben wird.

Ferner sind an der Rahmenkonstruktion 128 des Basisteils 124 Führungsrollen 132 vorgesehen, die an einer Führungsfläche der Führungsschiene 120 abrollen, um so den Basisteil 124 bei seiner Translation längs der Translationsrichtung 116 an der Führungsschiene 120 zu führen.

Ferner weist der Basisteil 124 eine vertikale Führungsbahn auf, längs welcher die Hubeinheit 126 in beliebige Höhenpositionen zwischen einer unteren Endstellung und einer oberen Endstellung verfahrbar ist.

Der Antrieb der Hubbewegung der Hubeinheit 126 kann beispielsweise mittels eines an der Rahmenkonstruktion 128 des Basisteils 124 angeordneten (nicht dargestellten) Hubantriebsmotors erfolgen, welcher eine Umlaufbewegung einer ringförmig geschlossenen (nicht dargestellten) Hubantriebskette antreibt, wobei die Hubeinheit 126 durch ein Verbindungsstück 164 so mit der Hubantriebskette verbunden ist, dass sie zusammen mit dem Verbindungsstück 164 der Hubantriebskette, in Abhängigkeit von der Richtung der Umlaufbewegung der Hubantriebskette, nach oben oder nach unten bewegt wird.

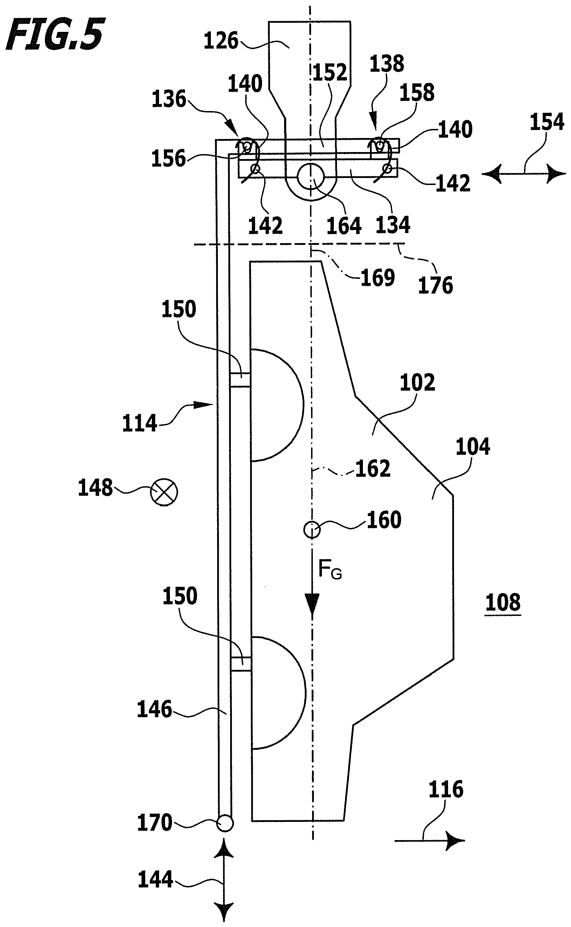

Wie aus Fig. 5 zu ersehen ist, ist an einem unteren Ende der Hubeinheit 126 eine Haltevorrichtung 134 angeordnet, welche eine erste Kopplungsvorrichtung 136 und eine zweite Kopplungsvorrichtung 138 trägt.

Jede der Kopplungsvorrichtungen 136, 138 umfasst einen Kopplungsbügel 140, der um eine beispielsweise im Wesentlichen horizontale Drehachse 142 zwischen einer Offenstellung und einer Schließstellung drehbar ist.

Die Drehbewegung jedes Kopplungsbügels 140 ist mittels eines jeweils zugeordneten (nicht dargestellten) Drehantriebsmotors antreibbar.

Die Kopplungsvorrichtungen 136 und 138 dienen dazu, den Werkstückträger 114 in der in Fig. 5 dargestellten Arbeitsposition an der Hubeinheit 126 zu arretieren.

Die Kopplungsvorrichtungen 136 und 138 sind in horizontaler Richtung gegeneinander versetzt angeordnet.

Der Werkstückträger 114 ist beispielsweise als ein Skidrahmen ausgebildet, der zwei parallel zu einer Längsrichtung 144 des Werkstückträgers 114 ausgerichtete Skidkufen 146 umfasst, welche durch in einer senkrecht zur Längsrichtung 144 des Werkstückträgers 114 verlaufenden Querrichtung 148 des Werkstückträgers 114 ausgerichtete Traversen 150 miteinander verbunden sind.

An den Traversen 150 sind (nicht dargestellte) Spannvorrichtungen vorgesehen, mittels welcher das Werkstück 102, insbesondere eine Fahrzeugkarosserie 104, an dem Werkstückträger 114 arretierbar ist.

An einem hinteren Ende des Werkstückträgers 114 (in Fig. 5 oben dargestellt) ist eine Kröpfung 152 angeordnet, in Form eines Trägers, der sich quer zur Längsrichtung 144 und senkrecht zur Querrichtung 148 des Werkstückträgers 114 von einer der Skidkufen 146 wegerstreckt.

Vorzugsweise erstreckt sich die Kröpfung 152 in einer senkrecht zur Längsrichtung 144 und senkrecht zur Querrichtung 148 des Werkstückträgers 114 ausgerichteten Aufwärtsrichtung 154 des Werkstückträgers 114.

An der Kröpfung 152 sind eine erste Kopplungseinrichtung 156 und eine zweite Kopplungseinrichtung 158 des Werkstückträgers 114 angeordnet.

Die erste Kopplungseinrichtung 156 und die zweite Kopplungseinrichtung 158 des Werkstückträgers 114 sind bei der in Fig. 5 dargestellten Ausführungsform des Werkstückträgers 114 in der Aufwärtsrichtung 154 des Werkstückträgers 114 gegeneinander versetzt angeordnet.

Wie aus Fig. 5 zu ersehen ist, wirken in der Arbeitsstellung des Werkstückträgers 114 an der Hubeinheit 126 die erste Kopplungseinrichtung 156 des Werkstückträgers 114 und die erste Kopplungsvorrichtung 136 der Hubeinheit 126 sowie die zweite Kopplungseinrichtung 158 des Werkstückträgers 114 und die zweite Kopplungsvorrichtung 138 der Hubeinheit 126 so zusammen, dass der Werkstückträger 114 mit dem daran gehaltenen Werkstück 102 in der Arbeitsstellung relativ zu der Hubeinheit 126 fixiert ist.

Dabei liegt vorzugsweise der gemeinsame Schwerpunkt 160 von Werkstückträger 114 und Werkstück 102 längs einer vertikalen Translationsachse 162 der Hubeinheit 126 vertikal unter der Hubeinheit 126.

Die vertikale Translationsachse 162 verläuft durch die Verbindungsstelle 164 zwischen der Hubeinheit 126 und der Hubantriebskette.

Dadurch, dass sich der gemeinsame Schwerpunkt 160 von Werkstückträger 114 und Werkstück 102 auf der vertikalen Translationsachse 162 der Hubeinheit 126 befindet, wird eine Exzentrizität vermieden, so dass die von dem Werkstückträger 114 und dem daran angeordneten Werkstück 102 auf die Hubeinheit 126 ausgeübte Gewichtskraft kein resultierendes Drehmoment auf die Haltevorrichtung 134 und damit auf die Hubeinheit 126 ausübt.

Wie ferner aus Fig. 5 zu ersehen ist, sind die erste Kopplungsvorrichtung 136 der Hubeinheit 126 und die erste Kopplungseinrichtung 156 des Werkstückträgers 114 einerseits und die zweite Kopplungsvorrichtung 138 der Hubeinheit 126 und die zweite Kopplungseinrichtung 158 des Werkstückträgers 114 andererseits vorzugsweise auf einander entgegengesetzten Seiten des Werkstückträgers 114 und vorzugsweise auf einander entgegengesetzten Seiten der vertikalen Ebene 169 angeordnet, welche durch die vertikale Translationsachse 162 der Hubeinheit 126 und parallel zu der Querrichtung 148 des Werkstücksträgers 114 in der Arbeitsstellung verläuft.

Die Kopplungseinrichtungen 156 und 158 des Werkstückträges 114 können beispielsweise als Kopplungszapfen ausgebildet sein, welche in der Schließstellung der jeweils zugeordneten Kopplungsvorrichtung 136 bzw. 138 von dem Kopplungsbügel 140 der betreffenden Kopplungsvorrichtung 136 bzw. 138 umgriffen werden.

Grundsätzlich können die Kopplungseinrichtungen 156 und 158 des Werkstückträgers 114 und die Kopplungsvorrichtungen 136 und 138 der Hubeinheit 126 jedoch auch in beliebiger anderer Weise ausgebildet sein, solange die Kopplungsvorrichtungen 136 und 138 der Hubeinheit 126 und die denselben zugeordneten Kopplungseinrichtungen 156 und 158 des Werkstückträgers 114 so ausgebildet sind, dass mittels derselben jeweils eine lösbare Verbindung zwischen dem Werkstückträger 114 und der Hubeinheit 126, insbesondere eine lösbare Verriegelung, herstellbar ist.

Dabei soll ferner der Werkstückträger 114 relativ zu der Hubeinheit 126 um eine vorzugsweise horizontal ausgerichtete Schwenkachse schwenkbar sein, solange nur die erste Kopplungsvorrichtung 136 der Hubeinheit 126 und die erste Kopplungseinrichtung 156 des Werkstückträgers 114 miteinander gekoppelt sind, die zweite Kopplungsvorrichtung 138 der Hubeinheit 126 und die zweite Kopplungseinrichtung 158 des Werkstückträgers 114 jedoch nicht miteinander gekoppelt sind.

Wie ferner aus Fig. 5 zu ersehen ist, weist der Werkstückträger 114 an den Enden der Skidkufen 146, welche den Kopplungseinrichtungen 156 und 158 des Werkstücksträgers 114 abgewandt sind, jeweils eine Rolle 170 auf, welche um eine parallel zur Querrichtung 148 des Werkstückträgers 114 ausgerichtete Drehachse drehbar ist.

Zur Steuerung des Translationsantriebs des Basisteils 124, des Hubantriebs der Hubeinheit 126 und der Drehantriebe der Kopplungsvorrichtungen 136 und 138 weist jeder Fahrwagen ferner eine (nicht dargestellte) Steuervorrichtung auf, welche über Steuerleitungen mit den genannten Antrieben verbunden ist.

Die für die genannten Antriebe benötigte elektrische Energie kann von einer parallel zur Tragschiene 118 verlaufenden Stromschiene mittels Stromabnehmern oder aber berührungslos, insbesondere mittels Induktion, auf den Fahrwagen 122 übertragen werden.

Die Anlage 100 umfasst ferner eine der Fördervorrichtung 112 vorgeschaltete Fördereinrichtung 166, insbesondere in Form einer Rollenbahn 168, mittels welcher die an jeweils einem Werkstückträger 114 angeordneten Werkstücke 102 von einem vor dem Behandlungsbereich 106 liegenden Bearbeitungs- oder Behandlungsbereich in eine Übernahmeposition förderbar sind, in welcher der Werkstückträger von der Fördervorrichtung 112 übernommen wird (siehe Fig. 1).

In Fig. 1 sind schematisch mehrere aufeinanderfolgende Phasen eines Ankopplungsvorgangs dargestellt, bei welchem der Werkstückträger 114 mit dem daran angeordneten Werkstück 102 an die Hubeinheit 126 eines Fahrwagens 122 der Fördervorrichtung 112 angekoppelt und aus einer Ausgangsstellung, in welcher die Längsrichtung 144 des Werkstückträgers 114 im Wesentlichen horizontal ausgerichtet ist, in die Arbeitsstellung, in welcher die Längsrichtung 144 des Werkstückträgers 114 im Wesentlichen vertikal ausgerichtet ist, überführt wird.

In den Fig. 1 bis 4 sind aufeinanderfolgende Positionen des Werkstückträgers 114 und des daran angeordneten Werkstücks 102 mit aufeinanderfolgenden Großbuchstaben (A bis H) bezeichnet.

Zum Ankoppeln des Werkstückträgers 114 an den Fahrwagen 122 wird der Werkstückträger 114 mit dem daran angeordneten Werkstück 102 mittels der Rollenbahn 168 in die in Fig. 1 bei A dargestellte Übernahmeposition gefahren (siehe den Pfeil a in Fig. 1). Dabei stützt sich der Werkstückträger 114 mit Auflageflächen an der Unterseite der Skidkufen 140 an den Tragrollen der Rollenbahn 168 ab.

In der Übernahmeposition wird der Werkstückträger 114 mittels eines Anschlags 172 angehalten, so dass die Übernahmeposition des Werkstückträgers 114 genau definiert ist.

Der Anschlag 172 wirkt vorzugsweise mit einer Traverse 150 des Werkstückträgers 114 zusammen, um denselben in der Übernahmeposition anzuhalten.

Der Anschlag 172 ist vorzugsweise nach unten abklappbar, um den Anschlag 172 aus der Bewegungsbahn des Werkstückträgers 114 entfernen zu können, wenn er nicht mehr für die Arretierung des Werkstückträgers 114 in der Übernahmeposition benötigt wird.

In der Übernahmeposition befindet sich der Werkstückträgers 114 in seiner Ausgangstellung, in welcher die Längsrichtung 144 des Werkstückträgers 114 im Wesentlichen horizontal ausgerichtet ist.

Der Fahrwagen 122 wird durch Betätigung des Translationsantriebs des Basisteils 124 ebenfalls in seine Übernahmeposition gefahren (siehe den Pfeil b in Fig. 1).

Anschließend wird eine erste Kopplung zwischen dem Werkstückträger 114 und der Hubeinheit 126 hergestellt, indem die erste Kopplungsvorrichtung 136 der Hubeinheit 126 an die erste Kopplungseinrichtung 156 des Werkstückträgers 114 gekoppelt wird (beispielsweise indem der Kopplungsbügel 140 der ersten Kopplungsvorrichtung 136 die erste Kopplungseinrichtung 156 des Werkstückträgers 144 umgreift).

Der Werkstückträger 114 ist nun um eine horizontale Schwenkachse schwenkbar mit der Hubeinheit 126 verbunden.

Anschließend wird die Hubeinheit 126 durch Betätigung des Hubantriebs angehoben, wobei gleichzeitig der Fahrwagen 122 durch Betätigung des Translationsantriebs des Basisteils 124 in der Translationsrichtung 116 nach vorne bewegt wird (siehe die Pfeile c in Fig. 1), wodurch das hintere Ende des Werkstückträgers 114 angehoben und der Werkstückträger 114 aus der Fixierung an dem Anschlag 172 gelöst wird.

Dabei wird das vordere Ende des Werkstückträgers 114 dadurch der Bewegung des hinteren Endes des Werkstückträgers 114 nachgeführt, dass die Rollen 170 an einer horizontalen Abrollfläche 174 abrollen.

Die Rollen 170 sind nahe an einer parallel zur Längsrichtung 144 und parallel zur Aufwärtsrichtung 154 des Werkstückträgers 114 ausgerichteten Längsmittelebene des Werkstückträgers 114 angeordnet, so dass sie nicht mit Tragrollen der Rollenbahn 168 kollidieren.

In einer weiteren Phase des Ankopplungsvorgangs kann die Translationsbewegung des Fahrwagens 122 angehalten werden, während die Hubeinheit 126 weiter angehoben wird, wodurch der Werkstückträger 114 mit dem Werkstück 102 weiter aufgerichtet wird, wobei der Werkstückträger 114 um die horizontale Schwenkachse im Bereich der ersten Kopplung geschwenkt wird und das vordere Ende des Werkstückträgers 114 mittels der Rollen 170 entgegen der Translationsrichtung 116 nach hinten rollt (siehe die Pfeile d in Fig. 1).

Die Hubeinheit 126 wird so weit nach oben bewegt, bis der Werkstückträger 114 die in Fig. 1 bei C dargestellte Arbeitsstellung erreicht, in welcher die Längsrichtung 144 des Werkstückträgers 114 im Wesentlichen vertikal ausgerichtet ist.

In dieser Arbeitsstellung rastet die zweite Kopplungseinrichtung 158 in die zweite Kopplungsvorrichtung 138 der Hubeinheit 126 ein und wird mit derselben gekoppelt, so dass neben der ersten Kopplung zwischen dem Werkstückträger 114 und der Hubeinheit 126 eine zweite Kopplung hergestellt wird, durch welche der Werkstückträger 114 relativ zu der Hubeinheit 126 in der Arbeitsstellung fixiert ist.

Der Fahrwagen 122 kann nun in der Translationsrichtung 116 nach vorne bewegt werden, wobei die Hubeinheit 126 zuvor oder zugleich noch etwas weiter nach oben bewegt werden kann, um den Werkstückträger 114 so weit anzuheben, dass der Kontakt der Rollen 170 von der Abrollfläche 174 gelöst wird (siehe die Pfeile e in Fig. 1).

Damit ist der Ankopplungsvorgang abgeschlossen, und der Eintauchvorgang in das Behandlungsbad 108 kann beginnen.

Hierzu wird der Fahrwagen 122 in der Translationsrichtung 116 nach vorne bewegt, bis der Basisteil 124 sich auf einem seitlich neben dem Behandlungsbecken 110 befindlichen Abschnitt der Tragschiene 118 befindet und die Hubeinheit 126 mit dem daran angekoppelten Werkstückträger und dem Werkstück 102 vertikal über dem Behandlungsbad 108 angeordnet ist.

Daraufhin wird die Hubeinheit 126 abgesenkt, wodurch das Werkstück 102 in der vertikalen Arbeitsstellung in das Behandlungsbad 108, vorzugsweise im Wesentlichen vollständig, eingebracht wird.

Nach dem Eintauchen des Werkstücks 102 in das Behandlungsbad 108 oder auch bereits während des Eintauchvorgangs wird der Fahrwagen 122 durch Betätigung des Translationsantriebs des Basisteils 124 in der Translationsrichtung 116 weiter nach vorne bewegt, so dass das Werkstück 102 in der Translationsrichtung 116 durch das Behandlungsbad 108 gefördert wird (siehe die Pfeile f in Fig. 1).

Wie aus den Fig. 1 und 5 zu ersehen ist, wird die Hubeinheit 126 nur so weit abgesenkt, dass sich das Werkstück 102 zwar vollständig unterhalb eines Badspiegels 176 des Behandlungsbads 108 befindet, die Kopplungseinrichtungen 156 und 158 des Werkstückträgers 114 und die gesamte Hubeinheit 126 einschließlich der Kopplungsvorrichtungen 136 und 138 jedoch vollständig oberhalb des Badspiegels angeordnet sind, so dass diese Teile des Werkstückträgers 114 und der Hubeinheit 126 nicht mit der Behandlungsflüssigkeit im Behandlungsbad 108 in Kontakt kommen.

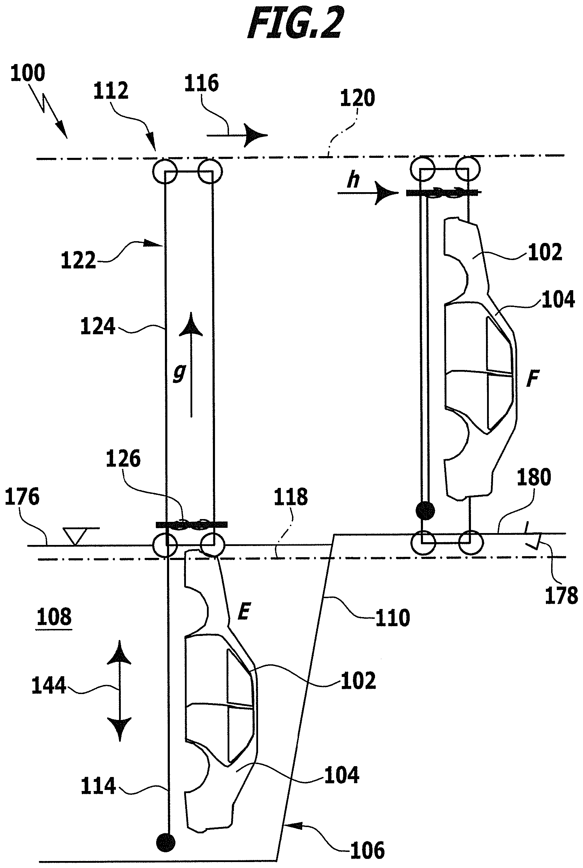

Nach Erreichen der gewünschten Behandlungszeit in dem Behandlungsbad 108 und/oder bei Erreichen des Endes des Behandlungsbeckens 110 wird das Werkstück 102 aus dem Behandlungsbad 108 ausgebracht, indem die Hubeinheit 126 angehoben wird (siehe den Pfeil g in Fig. 2).

Anschließend wird der Fahrwagen 122 in der Translationsrichtung 116 nach vorne bewegt, bis er eine schwenkbare Arretierung 178, die sich zunächst in einer Ruhestellung befindet, überfahren hat (siehe den Pfeil h in Fig. 2).

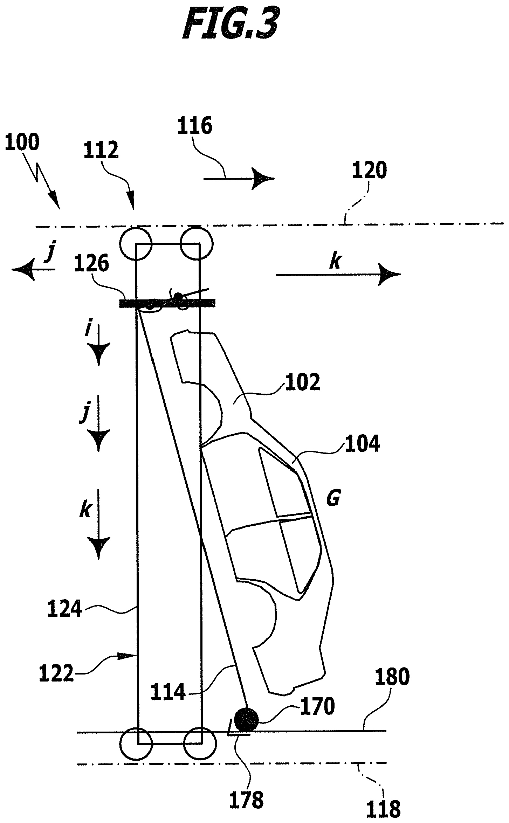

Nach dem Überfahren der Arretierung 178 wird dieselbe nach oben in eine in Fig. 3 dargestellte Arbeitsstellung geschwenkt.

Die Hubeinheit 126 wird so weit abgesenkt, dass die Rollen 170 des Werkstückträgers 114 eine Abrollfläche 180 berühren (siehe den Pfeil i in Fig. 3).

Nun wird die zweite Kopplung zwischen dem Werkstückträger 114 und der Hubeinheit 126 durch Abkoppeln der zweiten Kopplungsvorrichtung 138 der Hubeinheit 126 von der zweiten Kopplungseinrichtung 158 des Werkstückträgers 114 gelöst, so dass der Werkstückträger 114 wieder um die horizontale Schwenkachse relativ zu der Hubeinheit 126 schwenkbar ist.

Dann wird der Fahrwagen 122 entgegen der Translationsrichtung 116 zurück bewegt, und gleichzeitig wird die Hubeinheit 126 ein wenig nach unten bewegt, so dass der Werkstückträger 114 mit dem Werkstück 102 aus der vertikalen Arbeitsstellung gelöst wird (siehe die Pfeile j in Fig. 3).

Nun kann der Fahrwagen 122 angehalten werden und anschließend in der Translationsrichtung 116 wieder nach vorne bewegt werden, wobei gleichzeitig die Hubeinheit 126 nach unten bewegt wird (siehe die Pfeile k in Fig. 3).

Wenn der Werkstückträger 114 gegenüber der vertikalen Arbeitsstellung geneigt ist, wird die schwenkbare Arretierung 178 nach unten geschwenkt.

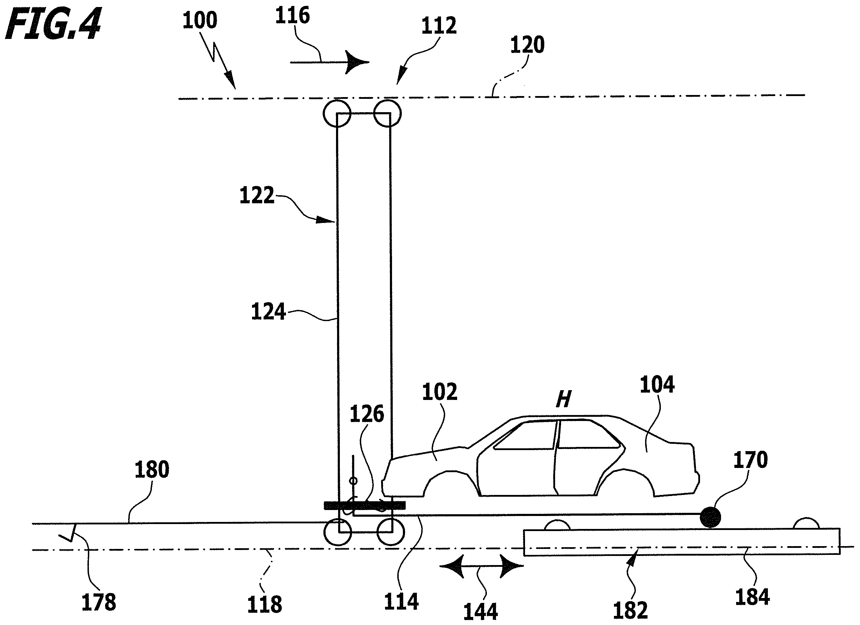

Durch das Absenken der Hubeinheit 126 und die Translationsbewegung des Fahrwagens 122 in der Translationsrichtung 116 nach vorne wird der Werkstückträger 114 mit dem Werkstück 102 weiter abgelassen, und der Werkstückträger 114 bewegt sich über die Rollen 170 nach vorne auf eine der Fördervorrichtung 112 nachgeschaltete Fördereinrichtung 182, insbesondere eine Rollenbahn 184 (siehe Fig. 4).

Die Translationsbewegung des Fahrwagens 122 und die Abwärtsbewegung der Hubeinheit 126 werden so lange aufrecht erhalten, bis der Werkstückträger 114 mit dem Werkstück 102 die in Fig. 4 bei H dargestellte Übergabeposition erreicht hat, in welcher der Werkstückträger 114 sich auf der Rollenbahn 184 in der horizontalen Ausgangsstellung abstützt, in welcher die Längsrichtung 144 des Werkstückträgers 114 im Wesentlichen horizontal ausgerichtet ist.

Nach Erreichen dieser Übergabeposition wird auch die erste Kopplung zwischen dem Werkstückträger 114 und der Hubeinheit 126 durch Abkoppeln der ersten Kopplungsvorrichtung 136 der Hubeinheit 126 von der ersten Kopplungseinrichtung 156 des Werkstückträgers 114 gelöst, so dass der Vorgang der Abkopplung des Werkstückträgers 114 von der Hubeinheit 126 des Fahrwagens 122 abgeschlossen ist.

Anschließend wird der Werkstückträger 114 mit dem Werkstück 102 mittels der Rollenbahn 184 in einen auf den Behandlungsbereich 106 folgenden weiteren Behandlungs- oder Bearbeitungsbereich gefördert, während der Fahrwagen 122 durch Betätigen des Translationsantriebs des Basisteils 124 auf einem (nicht dargestellten) Rückführabschnitt der Tragschiene 118 in die vor dem Behandlungsbecken 110 liegende Übernahmeposition zurückbewegt wird, worauf ein anderer Werkstückträger 114 an die Hubeinheit 126 des Fahrwagens 122 angekoppelt werden kann.

Wenn die Fördervorrichtung 112 nur einen einzigen Fahrwagen 122 umfasst, kann dieser Fahrwagen 122 auf dem neben dem Behandlungsbecken 110 verlaufenden Abschnitt der Tragschiene 118 entgegen der Translationsrichtung 116 in die Übernahmeposition zurückbewegt werden.

Wenn die Fördervorrichtung 112 mehrere Fahrwagen 122 umfasst, so ist vorzugsweise vorgesehen, dass mittels einer zentralen Steuervorrichtung der Fördervorrichtung 112 oder mittels den jeweiligen Fahrwagen 122 zugeordneter dezentraler Steuervorrichtungen die Translationsantriebe und/oder die Hubantriebe der Fahrwagen 122 jeweils individuell und unabhängig von den anderen Fahrwagen 122 steuerbar sind. Insbesondere können daher einander nachfolgende Fahrwagen 122 zu einem bestimmten Zeitpunkt unterschiedliche Translationsgeschwindigkeiten und unterschiedliche Translationsbeschleunigungen aufweisen, um insgesamt einen möglichst kontinuierlichen Durchlauf aller Fahrwagen 122 realisieren zu können.

Dabei kann insbesondere vorgesehen sein, dass ein Fahrwagen 122 während des Eintauchens des Werkstücks 102 gegenüber einer Durchschnittsgeschwindigkeit aller Fahrwagen 122 verlangsamt wird, um die Länge des Behandlungsbeckens 110 und damit den Flächenbedarf der Anlage 100 insgesamt gering zu halten.

Insbesondere kann ein Fahrwagen 122 so angesteuert werden, dass er vor dem vorstehend erläuterten Verlangsamen gegenüber der Durchschnittsgeschwindigkeit aller Fahrwagen 122 beschleunigt wird, um vor dem Behandlungsbecken 110 einen Vorsprung zu erlangen, den er während des Eintauchvorgangs wieder verliert.

Die dezentrale Steuervorrichtung bzw. die dezentralen Steuervorrichtungen sind vorzugsweise dazu in der Lage, die Fahrwagen 122 hinsichtlich ihrer Translationsgeschwindigkeiten und/oder Translationsbeschleunigungen und auch hinsichtlich ihrer Hubgeschwindigkeiten und/oder Hubbeschleunigungen individuell anzusteuern.

Die bei der vorstehend beschriebenen Ausführungsform verwendeten Hubeinheiten 126 weisen eine erste Kopplungsvorrichtung 136 zur Ankopplung des Werkstückträgers 114, an dem das zu behandelnde Werkstück 102 aufnehmbar ist, an die Hubeinheit 126 und eine zweite Kupplungsvorrichtung 138 zur Fixierung der Winkelposition des Werkstückträgers 114 relativ zu der Hubeinheit 126 in der Arbeitsstellung des Werkstückträgers 114 auf.

Grundsätzlich kann aber auch vorgesehen sein, dass die Hubeinheit nur eine einzige Kopplungsvorrichtung zur Ankopplung des Werkstückträgers 114 an die Hubeinheit 126 aufweist, wobei diese einzige Kopplungsvorrichtung vorzugsweise auch zur Fixierung der Winkelposition des Werkstückträgers 114 relativ zu der Hubeinheit 126 in der Arbeitsstellung des Werkstückträgers 114 dient.

Entsprechend kann auch vorgesehen sein, dass der Werkstückträger 114 nicht zwei Kopplungseinrichtungen 156 und 158 aufweist, sondern nur eine einzige Kopplungseinrichtung, welche mit der einzigen Kopplungsvorrichtung der Hubeinheit 126 zusammenwirkt.

Entsprechendes gilt auch für alle nachstehend erläuterten weiteren Ausführungsformen der Fördervorrichtung 112.

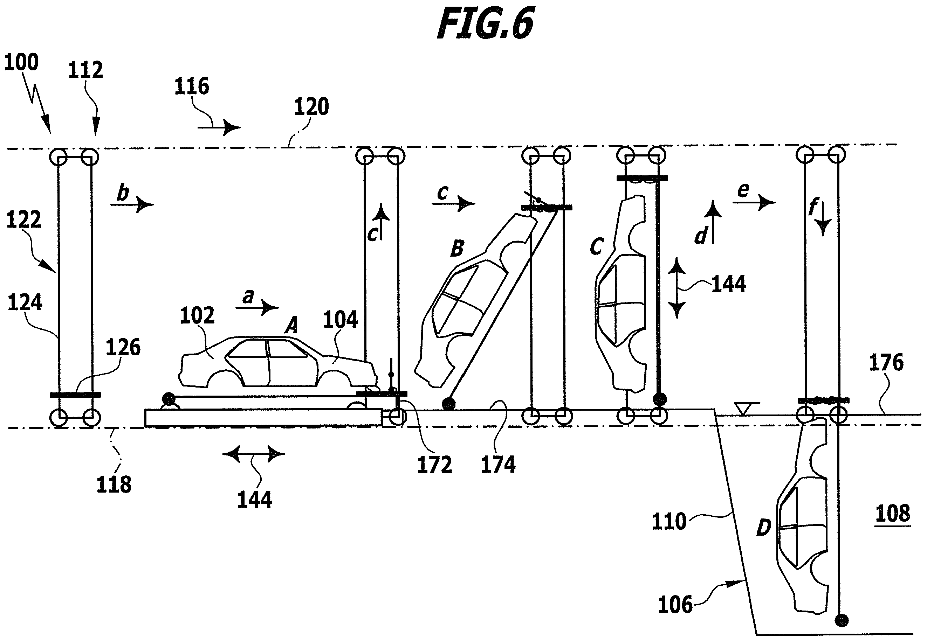

Eine in den Fig. 6 bis 8 dargestellte zweite Ausführungsform der Fördervorrichtung 112 für eine Anlage 100 zur Oberflächenbehandlung von Werkstücken 102 unterscheidet sich von der in den Fig. 1 bis 5 dargestellten ersten Ausführungsform dadurch, dass die Kröpfung 152 mit der ersten Kopplungseinrichtung 156 und der zweiten Kopplungseinrichtung 158 sich nicht am hinteren Ende des Werkstückträgers 114, sondern stattdessen am vorderen Ende des Werkstückträgers 114 befindet, welches bei der Förderung des Werkstückträgers 114 mit dem Werkstück 102 auf den Rollenbahnen 168 und 184 in der Translationsrichtung 116 vor dem Werkstück 102 angeordnet ist.

Der Ankopplungsvorgang und der Abkopplungsvorgang zwischen Werkstückträger 114 und Hubeinheit 126 des Fahrwagens 122 sind bei dieser Ausführungsform den entsprechenden Vorgängen bei der ersten Ausführungsform sehr ähnlich. Beim Abkopplungsvorgang ergibt sich ein einfacherer Ablauf, weil die Translationsbewegung des Fahrwagens 122 immer in der Translationsrichtung 116 nach vorn gerichtet ist und kein Zurückfahren des Fahrwagens 122 entgegen der Translationsrichtung 116 erforderlich ist, um den Werkstückträger mit dem Werkstück 102 aus der vertikalen Arbeitsstellung herauszubewegen.

Im Einzelnen verlaufen der Ankopplungsvorgang, der Eintauch- und der Austauchvorgang sowie der Abkopplungsvorgang bei der zweiten Ausführungsform wie folgt (in den Fig. 6 bis 8 sind aufeinanderfolgende Positionen des Werkstückträgers 114 und des daran angeordneten Werkstücks 102 mit aufeinanderfolgenden Großbuchstaben (A bis H) bezeichnet):
Der Werkstückträger 114 mit dem Werkstück 102 wird mittels der der Fördervorrichtung 112 vorgeschalteten Rollenbahn 168 bis in die in Fig. 6 bei A dargestellte Übernahmeposition gefördert, in welcher der Werkstückträger 114 sich in der horizontalen Ausgangsstellung befindet (siehe den Pfeil a in Fig. 6).

Der Fahrwagen 122 wird durch eine Translationsbewegung des Basisteils 124 in der Translationsrichtung 116 ebenfalls in seine Übernahmeposition gebracht, in welcher der Fahrwagen 122 benachbart zum vorderen Ende des Werkstückträgers 114 angeordnet ist (siehe den Pfeil b in Fig. 6).

Wenn sich der Werkstückträger 114 und der Fahrwagen 122 in der Übernahmeposition befinden, wird die erste Kopplung zwischen dem Werkstückträger 114 und der Hubeinheit 126 des Fahrwagens 122 hergestellt, indem die erste Kopplungsvorrichtung 136 der Hubeinheit 126 an die erste Kopplungseinrichtung 156 des Werkstückträgers 114 angekoppelt wird. Nunmehr ist der Werkstückträger 114 um eine horizontale Schwenkachse relativ zu der Hubeinheit 126 schwenkbar mit der Hubeinheit 126 verbunden.

Anschließend wird die Hubeinheit 126 des Fahrwagens 122 nach oben bewegt, wobei gleichzeitig der Fahrwagen 122 in der Translationsrichtung 116 nach vorne bewegt wird (siehe die Pfeile c in Fig. 6). Hierdurch wird der Werkstückträger 114 von dem Anschlag 172 gelöst, welcher den Werkstückträger 114 in der Übernahmeposition angehalten hat.

Durch das Anheben des vorderen Endes des Werkstückträgers 114 gelangt der Werkstückträger 114 in die bei B in Fig. 6 dargestellte geneigte Stellung. Das hintere Ende des Werkstückträgers 114 wird durch Abrollen der Rollen 170 an der Abrollfläche 174 nachgeführt.

Wenn die Hubeinheit 126 so weit angehoben worden ist, dass der Werkstückträger 114 die bei C in Fig. 6 dargestellte vertikale Arbeitsstellung erreicht hat, wird die zweite Kopplung zwischen dem Werkstückträger 114 und der Hubeinheit 126 hergestellt, indem die zweite Kopplungsvorrichtung 138 der Hubeinheit 126 an die zweite Kopplungseinrichtung 158 des Werkstückträgers 114 angekoppelt wird. Hierdurch wird der Werkstückträger 114 in der vertikalen Arbeitsstellung relativ zu der Hubeinheit 126 des Fahrwagens 122 fixiert.

Die Hubeinheit 126 wird dann noch etwas weiter angehoben, um den Kontakt der Rollen 170 von der Abrollfläche 174 zu lösen (siehe den Pfeil d in Fig. 6).

Anschließend wird der Fahrwagen 122 in der Translationsrichtung 116 nach vorne bewegt, bis er sich neben dem Behandlungsbecken 106 befindet und die Hubeinheit 126 mit dem Werkstückträger 114 und dem Werkstück 102 vertikal über dem Behandlungsbad 108 angeordnet ist (siehe den Pfeil e in Fig. 6).

Dann wird das Werkstück 102 durch ein Absenken der Hubeinrichtung 126 in das Behandlungsbad 108 eingetaucht (siehe den Pfeil f in Fig. 6).

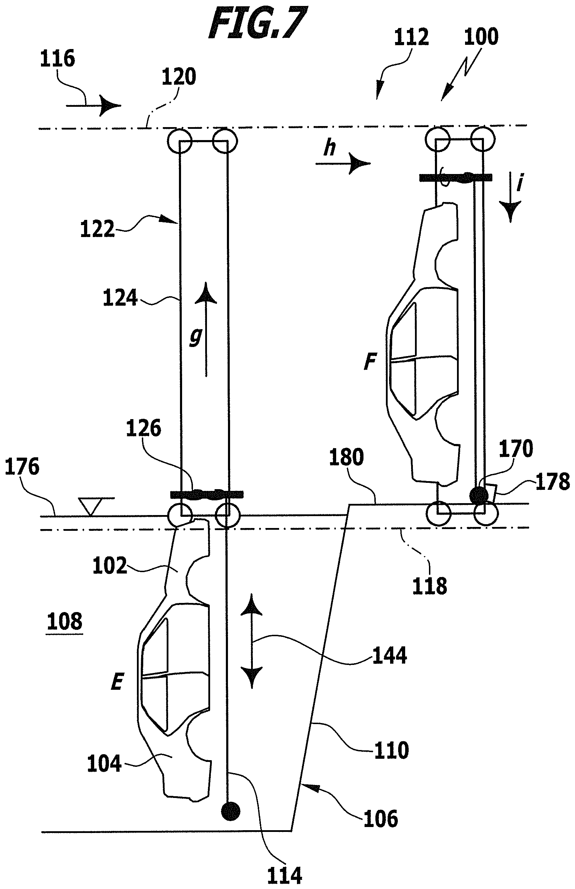

Durch Bewegung des Fahrwagens 122 in der Translationsrichtung 116 nach vorne wird das Werkstück 102 durch das Behandlungsbad 108 gefördert, bis die gewünschte Behandlungszeit und/oder das hintere Ende des Behandlungsbeckens 110 erreicht sind (siehe Fig. 7).

Nun wird das Werkstück 102 durch Anheben der Hubeinheit 126 aus dem Behandlungsbad 108 herausbewegt (siehe den Pfeil g in Fig. 7).

Anschließend wird der Fahrwagen 122 in der Translationsrichtung 116 nach vorne bewegt, bis die Rollen 170 des Werkstückträgers 114 an der in der Arbeitsstellung befindlichen schwenkbaren Arretierung 178 anschlagen (siehe den Pfeil h in Fig 7).

Die Hubeinheit 126 wird abgesenkt, bis die Rollen 170 die Abrollfläche 174 berühren (siehe den Pfeil i in Fig. 7).

Nun wird die zweite Kopplung zwischen dem Werkstückträger 114 und der Hubeinheit 126 des Fahrwagens 122 gelöst, indem die zweite Kopplungsvorrichtung 138 der Hubeinheit 126 von der zweiten Kopplungseinrichtung 158 des Werkstückträgers 114 gelöst wird. Der Werkstückträger 114 kann nunmehr um die horizontale Schwenkachse relativ zu der Hubeinheit 126 geschwenkt werden.

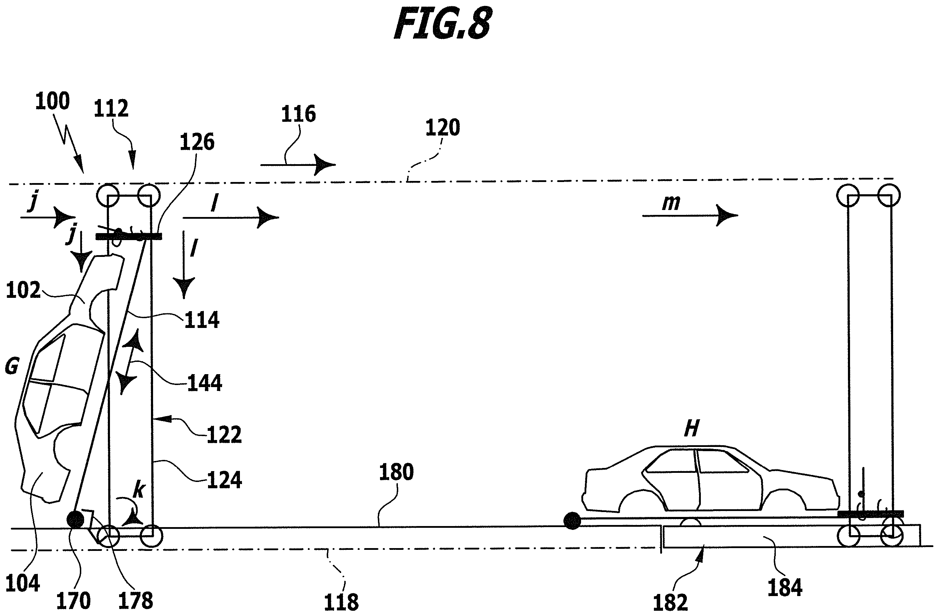

Durch Absenken der Hubeinheit 126 und gleichzeitige Translation des Fahrwagens 122 in der Translationsrichtung 116 nach vorne (siehe die Pfeile j in Fig. 8) wird der Werkstückträger 114 in die bei G in Fig. 8 dargestellte, gegenüber der vertikalen Arbeitsstellung geneigte Stellung gebracht.

Anschließend wird die schwenkbare Arretierung 178 aus der Arbeitsstellung nach unten in ihre Ruhestellung geschwenkt (siehe den gebogenen Pfeil k in Fig. 8), so dass die Rollen 170 des Werkstückträgers 114 an der schwenkbaren Arretierung 178 vorbeibewegt werden können.

Durch weiteres Absenken der Hubeinheit 126 und Translation des Fahrwagens 122 in der Translationsrichtung 116 nach vorne (siehe die Pfeile I in Fig. 8) wird der Werkstückträger 114 mit dem Werkstück 102 weiter abgesenkt, bis er die in Fig. 8 bei H dargestellte Übergabeposition erreicht, in welcher der Werkstückträger 114 in der horizontalen Ausgangsstellung auf der Rollenbahn 184 angeordnet ist.

Nach Erreichen der Übergabeposition wird auch die erste Kopplung zwischen dem Werkstückträger 114 und der Hubeinheit 126 des Fahrwagens 122 gelöst, indem die erste Kopplungsvorrichtung 136 der Hubeinheit 126 von der ersten Kopplungseinrichtung 156 des Werkstückträgers 114 abgekoppelt wird.

Nachdem der Werkstückträger 114 von dem Fahrwagen 122 abgekoppelt ist, wird der Werkstückträger 114 mit dem Werkstück 102 mittels der Rollenbahn 184 zu einem auf das Behandlungsbad 108 folgenden Behandlungs- oder Bearbeitungsbereich gefördert (siehe den Pfeil m in Fig. 8).

Der Fahrwagen 122 wird längs eines Rückführabschnitts der Tragschiene 118 oder über den seitlich neben dem Behandlungsbecken 110 liegenden Abschnitt der Tragschiene 118 in die vor dem Behandlungsbecken 110 liegende Übernahmeposition zurückbewegt.

Im Übrigen stimmt die in den Fig. 6 bis 8 dargestellte zweite Ausführungsform der Fördervorrichtung 112 hinsichtlich Aufbau und Funktionsweise mit der in den Fig. 1 bis 5 dargestellten ersten Ausführungsform überein, auf deren vorstehende Beschreibung insoweit Bezug genommen wird.

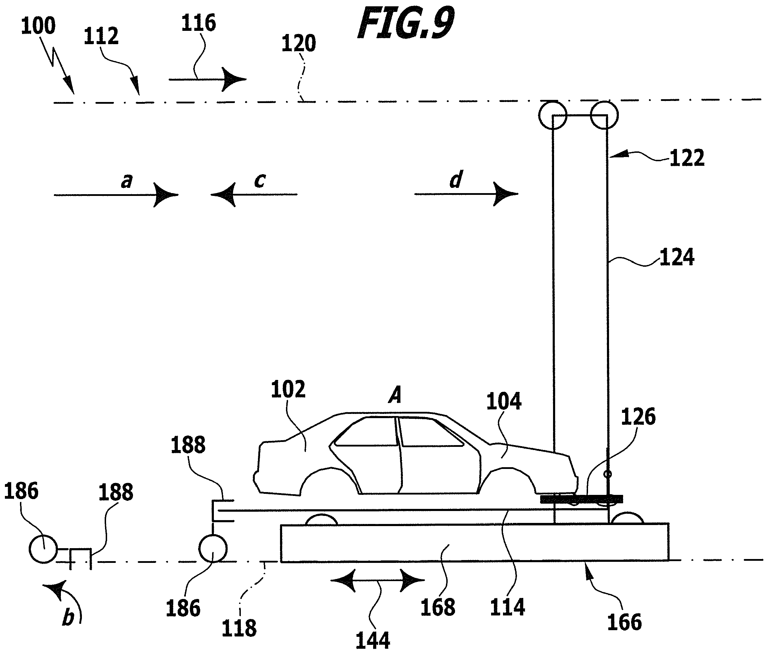

Eine in den Fig. 9 bis 14 dargestellte dritte Ausführungsform der Fördervorrichtung 112 für eine Anlage 100 zur Oberflächenbehandlung von Werkstücken 102 unterscheidet sich von den beiden vorstehend beschriebenen Ausführungsformen dadurch, dass für die Aufrichtung des Werkstückträgers 114, das heißt für die Überführung des Werkstückträgers 114 von der horizontalen Ausgangsstellung in die vertikale Arbeitsstellung, und für die Absenkung des Werkstückträgers 114, das heißt für die Überführung des Werkstückträgers 114 von der vertikalen Arbeitsstellung in die horizontale Ausgangsstellung, jeweils ein sogenannter Skidkufenschuh verwendet wird.

Bei dieser dritten Ausführungsform weist der Werkstückträger 114 keine Rollen 170 an dem den Kopplungseinrichtungen 156 und 158 abgewandten Ende des Werkstückträgers 114 auf.

Die Kröpfung 152 mit den Kopplungseinrichtungen 156 und 158 ist bei dieser Ausführungsform, wie bei der in den Fig. 6 bis 8 dargestellten zweiten Ausführungsform, am vorderen Ende des Werkstückträgers 114 angeordnet.

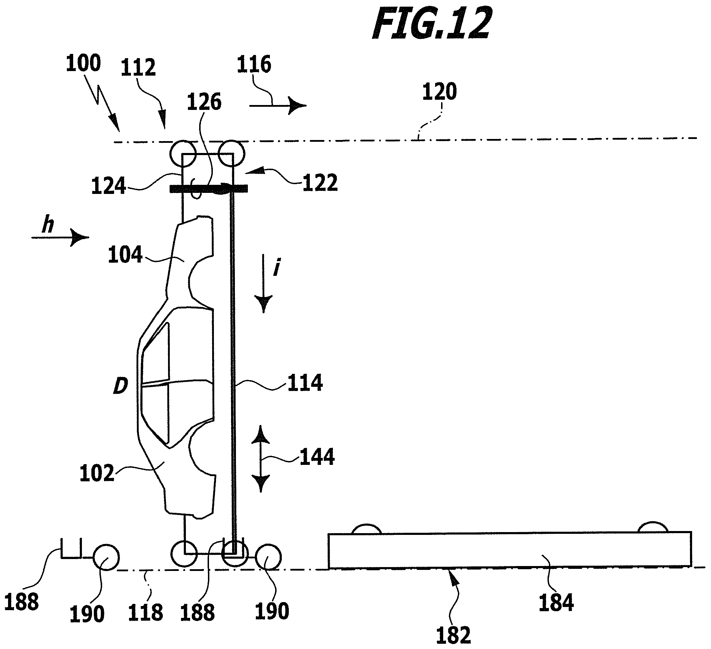

Der Ankopplungsvorgang bei der dritten Ausführungsform der Fördervorrichtung 112 wird nachstehend unter Bezugnahme auf die Fig. 9 bis 11 und der Abkopplungsvorgang unter Bezugnahme auf die Fig. 12 bis 14 beschrieben. In den Fig. 9 bis 14 sind aufeinanderfolgende Positionen des Werkstückträgers 114 und des daran angeordneten Werkstücks 102 mit aufeinanderfolgenden Großbuchstaben (A bis F) bezeichnet.

Bei dieser Ausführungsform ist (in der Translationsrichtung 116 gesehen) hinter der Rollenbahn 168 ein Skidkufenschuh 186 angeordnet, welcher aus einer in Fig. 9 links dargestellten Ruhestellung in eine in Fig. 9 rechts davon dargestellte horizontale Aufnahmestellung verschwenkbar ist.

Der Skidkufenschuh 186 umfasst eine Kufenaufnahme 188 zur Aufnahme eines hinteren Endbereichs mindestens einer der Skidkufen 146 des Werkstückträgers 114. Diese Kufenaufnahme 188 ist in der horizontalen Aufnahmestellung des Skidkufenschuhs 186 horizontal ausgerichtet.

Zur Ankopplung des Werkstückträgers 114 an den Fahrwagen 122 wird der Werkstückträger 114 mit dem daran angeordneten Werkstück 102 mittels der Rollenbahn 168 über den in der Ruhestellung befindlichen Skidkufenschuh 186 hinweg gefahren (siehe den Pfeil a in Fig. 9).

Nach dem Passieren des Werkstückträgers 114 wird der Skidkufenschuh 186 mittels eines (nicht dargestellten) Drehantriebs von der Ruhestellung in die horizontale Aufnahmestellung nach oben geschwenkt (siehe den gebogenen Pfeil b in Fig. 9).

In der horizontalen Aufnahmestellung des Skidkufenschuhs 186 ist die Kufenaufnahme 188 so ausgerichtet, dass eine Skidkufe 146 des Werkstückträgers 114 in horizontaler Richtung in die Kufenaufnahme 188 einbringbar ist.

Nun wird die Rollenbahn 168 so angetrieben, dass der darauf abgestützte Werkstückträger 114 entgegen der Translationsrichtung 116 nach hinten bewegt wird, bis die Skidkufe 146 in die Kufenaufnahme 188 des Skidkufenschuhs 186 einfährt und dort anschlägt (siehe den Pfeil c in Fig. 9).

Damit hat der Werkstückträger 114 die in Fig. 9 bei A dargestellte Übernahmeposition erreicht, in welcher sich der Werkstückträger 114 in seiner horizontalen Ausgangsstellung befindet.

Nun wird der Fahrwagen 122 in der Translationsrichtung 116 nach vorne in seine Übernahmeposition am vorderen Ende des Werkstückträgers 114 bewegt (siehe den Pfeil d in Fig. 9).

Die erste Kopplung zwischen dem Werkstückträger 114 und der Hubeinheit 126 des Fahrwagens 122 wird hergestellt, indem die erste Kopplungsvorrichtung 136 der Hubeinheit 126 an die erste Kopplungseinrichtung 156 des Werkstückträgers 114 ankoppelt.

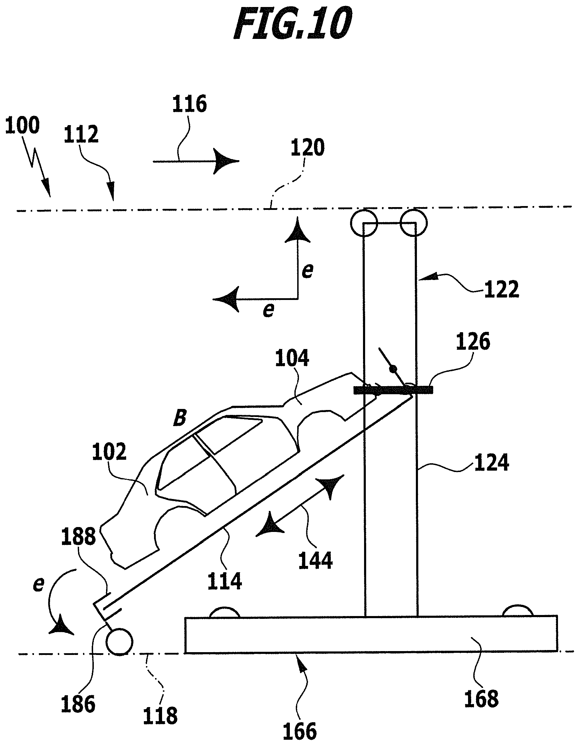

Wie in Fig. 10 dargestellt, wird anschließend die Hubeinheit 126 angehoben, wobei gleichzeitig der Fahrwagen 122 entgegen der Translationsrichtung 116 nach hinten bewegt wird. Hierdurch wird das vordere Ende des Werkstückträgers 114, das an die Hubeinheit 126 gekoppelt ist, angehoben. Das hintere Ende des Werkstückträgers 114 folgt der Schwenkbewegung des Werkstückträgers 114, wobei der Skidkufenschuh 186 über die horizontale Aufnahmestellung hinaus weiter verschwenkt wird (siehe die Pfeile e in Fig. 10). Der Werkstückträger 114 mit dem Werkstück 102 gelangt so in die in Fig. 10 bei B dargestellte, gegenüber der horizontalen Ausgangsstellung geneigte Stellung.

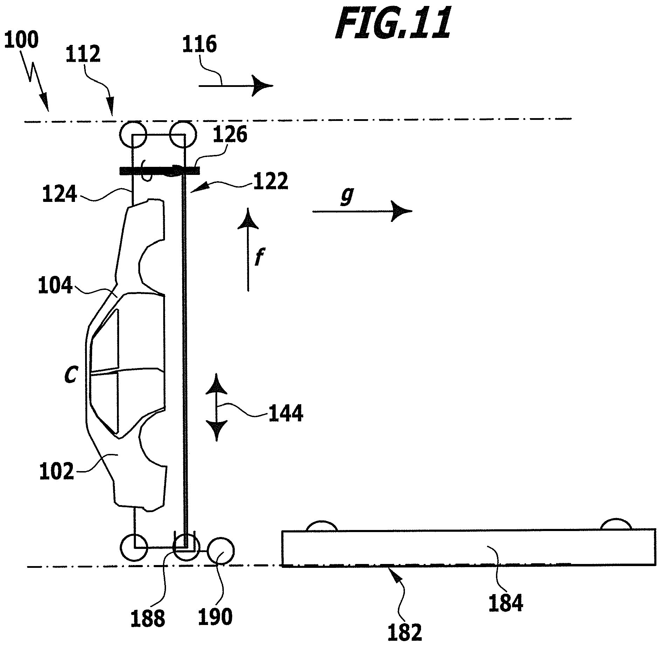

Wenn die Hubeinheit 126 so weit angehoben ist, dass der Werkstückträger die in Fig. 11 bei C dargestellte vertikale Arbeitsstellung erreicht hat, wird die zweite Kopplung zwischen dem Werkstückträger 114 und der Hubeinheit 126 des Fahrwagens 122 hergestellt, indem die zweite Kopplungsvorrichtung 138 der Hubeinheit 126 an die zweite Kopplungseinrichtung 158 des Werkstückträgers 114 angekoppelt wird. Durch die zweite Kopplung ist der Werkstückträger 114 in der vertikalen Arbeitsstellung relativ zu der Hubeinheit 126 fixiert.

Der Skidkufenschuh 186 befindet sich jetzt in einer vertikalen Schwenkendstellung, in welcher die Kufenaufnahme 188 vertikal ausgerichtet ist.

Nun wird durch Anheben der Hubeinheit 126 der Werkstückträger 114 mit dem Werkstück 102 so weit angehoben, dass die Skidkufe 146 nach oben aus dem Skidkufenschuh 186 hinaus gelangt (siehe den Pfeil f in Fig. 11).

Anschließend wird der Fahrwagen 122 in der Translationsrichtung 116 nach vorn neben das Behandlungsbecken 110 bewegt, wie bei den ersten beiden Ausführungsformen, wobei der über die Kufenaufnahme 188 des Skidkufenschuhs 186 angehobene Werkstückträger 114 den in der vertikalen Schwenkendstellung befindlichen Skidkufenschuh 186 passieren kann (siehe den Pfeil g in Fig. 11).

Anschließend wird der Skidkufenschuh 186 in die Ruhestellung zurückgeschwenkt, damit der nächste Werkstückträger 114 den Skidkufenschuh 186 passieren und der nächste Ankopplungsvorgang beginnen kann.

Der Eintauch- und der Austauchvorgang des Werkstücks 102 in Bezug auf das Behandlungsbad 108 wird ebenso wie bei den vorstehend beschriebenen Ausführungsformen der Fördervorrichtung 112 ausgeführt und ist nicht gesondert dargestellt.

Nach dem Austauchen des Werkstücks 102 aus dem Behandlungsbad 108 wird der Fahrwagen 122 durch Translation in der Translationsrichtung 116 nach vorne bis zu einem weiteren Skidkufenschuh 190 bewegt, welcher sich in einer vertikalen Aufnahmestellung mit nach oben weisender Kufenaufnahme 188 befindet (siehe den Pfeil h in Fig. 12). Der Fahrwagen 122 wird in einer Position angehalten, in welcher eine Skidkufe 146 des Werkstückträgers 114 vertikal über der Kufenaufnahme 188 angeordnet ist.

Anschließend wird die Hubeinheit 126 abgesenkt, so dass das hintere Ende einer Skidkufe 146 in die Kufenaufnahme 188 des Skidkufenschuhs 190 gelangt und dort anschlägt (siehe den Pfeil i in Fig. 12).

Dann wird die zweite Kopplung zwischen dem Werkstückträger 114 und der Hubeinheit 126 des Fahrwagens 122 gelöst, indem die zweite Kopplungsvorrichtung 138 der Hubeinheit 126 von der zweiten Kopplungseinrichtung 158 des Werkstückträgers 114 abgekoppelt wird. Nun ist der Werkstückträger 114 relativ zu der Hubeinheit 126 um die vertikale Schwenkachse im Bereich der ersten Kopplungsvorrichtung 136 und der ersten Kopplungseinrichtung 156 schwenkbar.

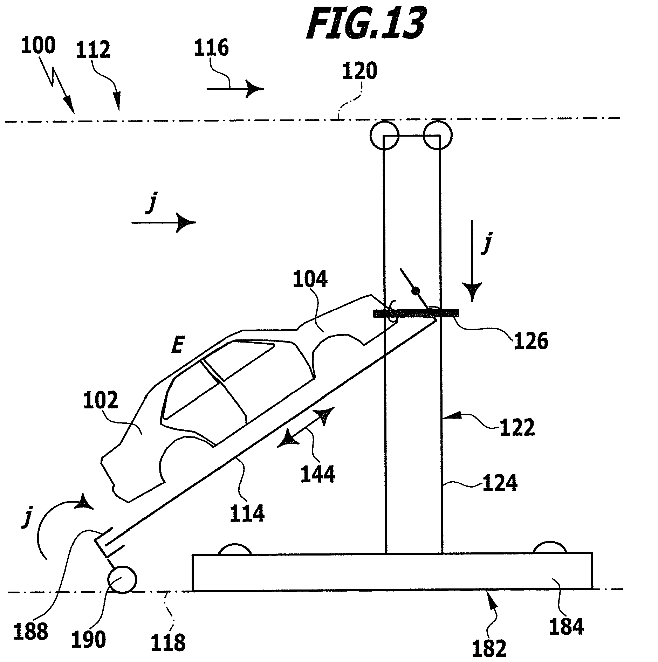

Durch Translation des Fahrwagens 122 in der Translationsrichtung 116 nach vorne und gleichzeitiges Absenken der Hubeinheit 126 wird das vordere Ende des Werkstückträgers 114 abgesenkt, wobei das hintere Ende des Werkstückträgers 114 der Schwenkbewegung des Werkstückträgers 114 nachgeführt wird, indem der Skidkufenschuh 190 entsprechend geschwenkt wird (siehe die Pfeile j in Fig. 13). Der Werkstückträger 114 mit dem daran angeordneten Werkstück 102 wird so in die in Fig. 13 bei E dargestellte, gegenüber der vertikalen Arbeitsstellung geneigte Stellung gebracht.

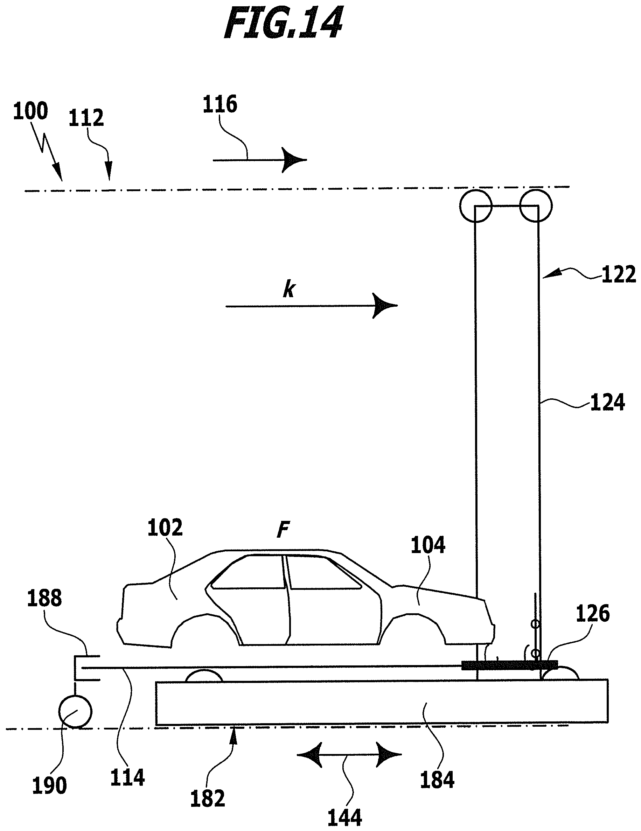

Die Absenkung der Hubeinheit 126 und die Translationsbewegung des Fahrwagens 122 werden fortgesetzt, bis der Werkstückträger 114 in der in Fig. 14 bei F dargestellten Übergabeposition auf der Rollenbahn 184 abgestützt ist. Hierbei befindet sich der Werkstückträger 114 in seiner horizontalen Ausgangsstellung.

Sobald der Werkstückträger 114 die Übergabeposition und seine horizontale Ausgangsstellung erreicht hat, wird auch die erste Kopplung zwischen dem Werkstückträger 114 und der Hubeinheit 126 des Fahrwagens 122 gelöst, indem die erste Kopplungsvorrichtung 136 der Hubeinheit 126 von der ersten Kopplungseinrichtung 156 des Werkstückträgers 114 abgekoppelt wird.

Nachdem der Werkstückträger 114 vom Fahrwagen 122 abgekoppelt worden ist, wird der Werkstückträger 114 mit dem Werkstück 102 mittels der Rollenbahn 184 in der Translationsrichtung 116 zu einem nach dem Behandlungsbereich 106 liegenden weiteren Behandlungs- oder Bearbeitungsbereich weitergefördert, wobei der Endbereich der Skidkufe 146 die Kufenaufnahme 188 des Skidkufenschuhs 190 verlässt (siehe den Pfeil k in Fig. 14).

Der Fahrwagen 122 wird längs eines Rückführungsabschnitts der Tragschiene 118 oder über den neben dem Behandlungsbecken 110 verlaufenden Abschnitt der Tragschiene 118 zu seiner vor dem Behandlungsbecken 110 liegenden Übernahmeposition zurückbewegt.

Der Skidkufenschuh 190 wird aus der in Fig. 14 dargestellten horizontalen Abgabestellung in die in Fig. 12 dargestellte vertikale Aufnahmestellung zurückgeschwenkt.

Im Übrigen stimmt die in den Fig. 9 bis 14 dargestellte dritte Ausführungsform der Fördervorrichtung 112 hinsichtlich Aufbau und Funktionsweise mit der in den Fig. 6 bis 8 dargestellten zweiten Ausführungsform überein, auf deren vorstehende Beschreibung insoweit Bezug genommen wird.

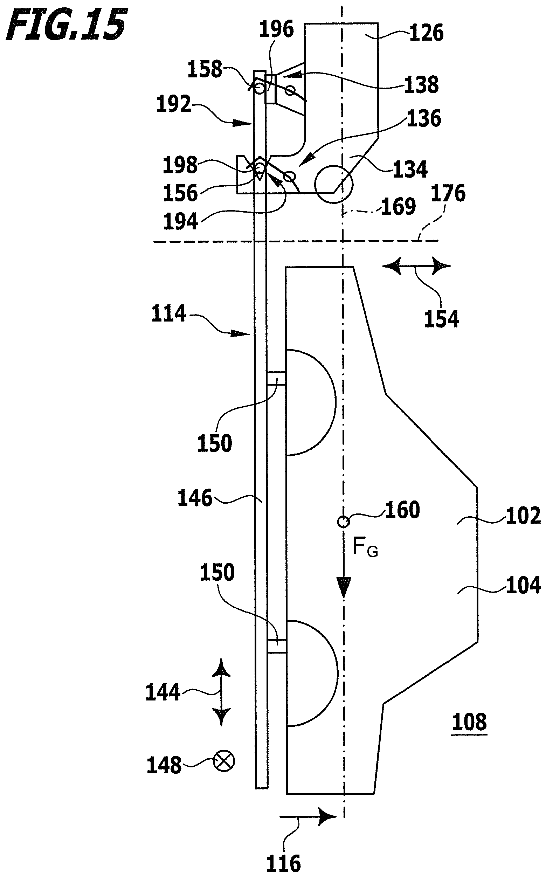

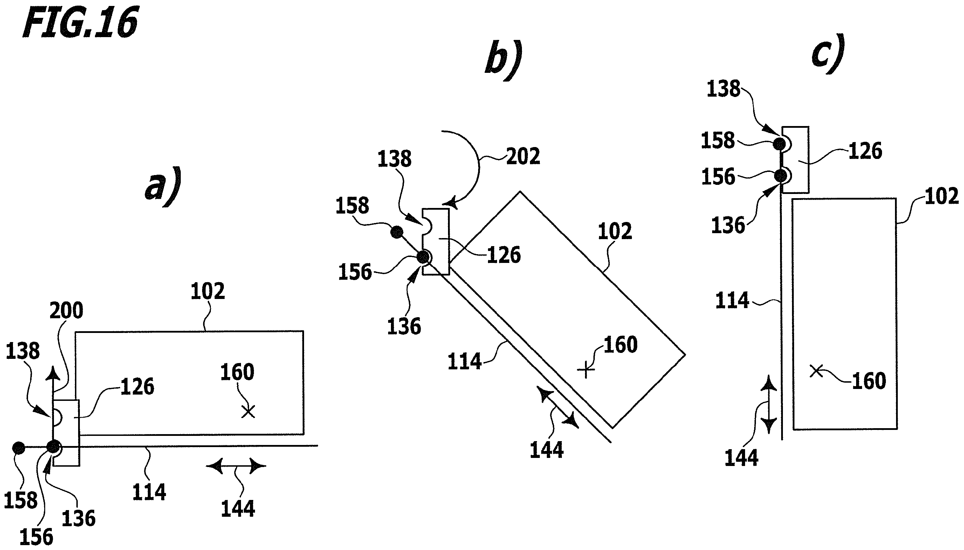

Eine in den Fig. 15 und 16 dargestellte vierte Ausführungsform der Fördervorrichtung 112 für eine Anlage 100 zur Oberflächenbehandlung von Werkstücken 102 unterscheidet sich von den drei vorstehend beschriebenen Ausführungsformen dadurch, dass die erste Kopplungseinrichtung 156 und die zweite Kopplungseinrichtung 158 des Werkstückträgers 114 an einer horizontalen Verlängerung 192 des Werkstückträgers 114, insbesondere an einer horizontalen Verlängerung einer Skidkufe 146 des Werkstückträgers 114, angeordnet sind (siehe Fig. 15). Die erste Kopplungseinrichtung 156 und die zweite Kopplungseinrichtung 158 des Werkstückträgers 114 sind somit bei dieser Ausführungsform in der Längsrichtung 144 versetzt gegeneinander angeordnet.

Um zu gewährleisten, dass dennoch die erste Kopplungsvorrichtung 136 der Hubeinheit 126 an die erste Kopplungseinrichtung 156 des Werkstückträgers 114 und die zweite Kopplungsvorrichtung 138 der Hubeinheit 126 an die zweite Kopplungseinrichtung 158 des Werkstückträgers 114 ankoppeln können, sind die erste Kopplungsvorrichtung 136 und die zweite Kopplungsvorrichtung 138 der Hubeinheit 126 bei dieser Ausführungsform nicht in horizontaler Richtung, sondern in vertikaler Richtung gegeneinander versetzt angeordnet.

Ferner sind bei dieser Ausführungsform die erste Kopplungsvorrichtung 136 und die zweite Kopplungsvorrichtung 138 der Hubeinheit 126 beide auf derselben Seite der vertikalen Ebene 169 angeordnet, welche durch die vertikale Translationsachse 162 der Hubeinheit 126 und (in der vertikalen Arbeitsstellung des Werkstückträgers 114) parallel zur Querrichtung 148 des Werkstückträgers 114 verläuft.

Auch bei dieser Ausführungsform ist der gemeinsame Schwerpunkt 160 von Werkstückträger 114 und daran angeordnetem Werkstück 102 vorzugsweise auf der vertikalen Translationsachse 162, vertikal unter der Hubeinheit 126, angeordnet, wenn der Werkstückträger 114 in der vertikalen Arbeitsstellung an der Hubeinheit 126 fixiert ist.

Um die Schwenkbewegung des Werkstückträgers 114 relativ zu der Hubeinheit 126 nach dem Herstellen der ersten Kopplung zwischen der ersten Kopplungsvorrichtung 136 der Hubeinheit 126 und der ersten Kopplungseinrichtung 156 des Werkstückträgers 114 und vor dem Herstellen der zweiten Kopplung zwischen der zweiten Kopplungsvorrichtung 138 der Hubeinheit 126 und der zweiten Kopplungseinrichtung 158 des Werkstückträgers 114 zu ermöglichen, kann die Hubeinheit 126 eine Ausnehmung 194, beispielsweise mit einem V-förmigen Querschnitt, aufweisen, welche die erste Kopplungseinrichtung 156 des Werkstückträgers 114 aufnimmt, wenn dieselbe mit der ersten Kopplungsvorrichtung 136 der Hubeinheit 126 gekoppelt ist.

Um die Schwenkbewegung des Werkstückträgers 114 relativ zu der Hubeinheit 126 in der vertikalen Arbeitsstellung des Werkstückträgers 114 anzuhalten, ist die Hubeinheit 126 vorzugsweise mit einem Anschlag 196 versehen, welcher beispielsweise benachbart zu der zweiten Kopplungsvorrichtung 138 der Hubeinheit 126 angeordnet ist.

Um den Aufprall des Werkstückträgers 114 auf die Hubeinheit 126 beim Erreichen der vertikalen Arbeitsstellung des Werkstückträgers 114 zu dämpfen, kann der Anschlag 196 ein elastisch verformbares Material umfassen.

Die horizontale Schwenkachse 198, um welche der Werkstückträger 114 relativ zu der Hubeinheit 126 schwenkbar ist, verläuft bei dieser Ausführungsform durch die erste Kopplungseinrichtung 156 des Werkstückträgers 114.

Da der gemeinsame Schwerpunkt 160 von Werkstückträger 114 und Werkstück 102 nicht senkrecht unter dieser Schwenkachse 198 angeordnet ist, sondern in der Translationsrichtung 116 vor der Schwenkachse 198 liegt, übt der Werkstückträger 114 in der vertikalen Arbeitsstellung des Werkstückträger 114, welche in Fig. 15 dargestellt ist, ein Drehmoment auf die Hubeinheit 126 aus. Ohne die zweite Kopplungsvorrichtung 138 der Hubeinheit 126 und den Anschlag 196 würde sich der gemeinsame Schwerpunkt 160 von Werkstückträger 114 und Werkstück 102 in seiner Gleichgewichtslage senkrecht unter der Schwenkachse 198 befinden. Somit würde sich der Werkstückträger 114 ohne die zweite Kopplung durch die zweite Kopplungsvorrichtung 138 der Hubeinheit 126 und die zweite Kopplungseinrichtung 158 des Werkstückträgers 114 nicht in seiner vertikalen Arbeitsstellung befinden, in welcher die Längsrichtung 144 des Werkstückträgers 114 im Wesentlichen vertikal ausgerichtet ist, sondern in einer gegenüber der vertikalen Arbeitsstellung geneigten Stellung, in welcher das untere Ende des Werkstückträgers 114 gegenüber der Hubeinheit 126 nach hinten verschwenkt wäre und die Längsrichtung 144 des Werkstückträgers 114 mit der Vertikalen einen spitzen Winkel einschließen würde.

Ein Ankopplungsvorgang, bei welchem der Werkstückträger 114 an die Hubeinheit 126 gemäß der vierten Ausführungsform der Fördervorrichtung 112 angekoppelt wird, ist in Fig. 16 schematisch in drei aufeinanderfolgenden Phasen a) bis c) dargestellt.

In Phase a) befindet sich der Werkstückträger 114 in der Übernahmeposition und in seiner horizontalen Ausgangsstellung, in welcher die Längsrichtung 144 des Werkstückträgers 114 im Wesentlichen horizontal ausgerichtet ist.

Der Fahrwagen 122, von welchem in Fig. 16 nur die Hubeinheit 126 dargestellt ist, befindet sich ebenfalls in seiner Übernahmeposition.

In der Phase a) wird die erste Kopplung zwischen dem Werkstückträger 114 und der Hubeinheit 126 hergestellt, indem die erste Kopplungsvorrichtung 136 der Hubeinheit 126 an die erste Kopplungseinrichtung 156 des Werkstückträgers 114 angekoppelt wird.

Anschließend wird die Hubeinheit 126 des Fahrwagens 122 angehoben, um den Werkstückträger 114 aufzurichten (siehe den Pfeil 200 in Fig. 16).

In Phase b) schwenkt der Werkstückträger 114 relativ zu der Hubeinheit 126 um die durch die erste Kopplungseinrichtung 156 des Werkstückträgers 114 verlaufende horizontale Schwenkachse (siehe den Pfeil 202 in Fig. 16), während die Hubeinheit 126 weiter angehoben wird.

In der Phase c) erreicht der Werkstückträger 114 die vertikale Arbeitsstellung und schlägt an dem Anschlag 196 der Hubeinheit 126 an. In dieser Stellung wird die zweite Kopplung zwischen dem Werkstückträger 114 und der Hubeinheit 126 hergestellt, indem die zweite Kopplungsvorrichtung 138 der Hubeinheit 126 an die zweite Kopplungseinrichtung 158 des Werkstückträgers 114 angekoppelt wird. Durch Herstellen der zweiten Kopplung ist der Werkstückträger 114 in seiner vertikalen Arbeitsstellung an der Hubeinheit 126 fixiert.

Im Übrigen stimmt die in den Fig. 15 und 16 dargestellte vierte Ausführungsform der Fördervorrichtung 112 hinsichtlich Aufbau und Funktionsweise mit den in den Fig. 1 bis 14 dargestellten Ausführungsformen überein, auf deren vorstehende Beschreibung insoweit Bezug genommen wird.

Für alle vier vorstehend beschriebenen Ausführungsformen der Fördervorrichtung 112 gilt, dass sich durch die vertikale Stellung des Werkstücks 102, insbesondere der Fahrzeugkarosserie 104, im Behandlungsbad 108 andere erforderliche Beckenabmessungen und Strömungsbedingungen ergeben als bei einer horizontalen Stellung des Werkstücks 102.

Für jeden Behandlungsvorgang, beispielsweise einen Reinigungsvorgang, einen Entfettungsvorgang oder einen Beschichtungsvorgang, insbesondere einen Phosphatierungsvorgang oder einen elektrischen Tauchlackierungsvorgang, ist eine gute Umströmung des Werkstücks 102, insbesondere einer Fahrzeugkarosserie 104, wichtig.

Bei einer üblicherweise verwendeten Längsströmung im Behandlungsbad, bei welcher die Strömungsrichtung der Behandlungsflüssigkeit am Boden des Behandlungsbeckens 110 entgegen der Translationsrichtung 116 und im Bereich des Badspiegels 176 parallel zur Translationsrichtung 116 gerichtet ist, würde bei einer Vertikalstellung einer Fahrzeugkarosserie 104 im Behandlungsbad 108 der gesamte Unterbodenbereich der Fahrzeugkarosserie 104 als Strömungsbarriere wirken.

Um dies zu verhindern, ist das Behandlungsbecken 110 bei jeder der vorstehend beschriebenen Ausführungsformen der Fördervorrichtung 112 vorzugsweise mit einem Düsensystem 204 versehen, mittels welchem eine Umströmung des in das Behandlungsbad 108 eingetauchten Werkstücks 102 mit einer quer, vorzugsweise im Wesentlichen senkrecht, zur Translationsrichtung 116 der Fördervorrichtung 112 ausgerichteten Hauptströmungsrichtung 206 erzeugbar ist.

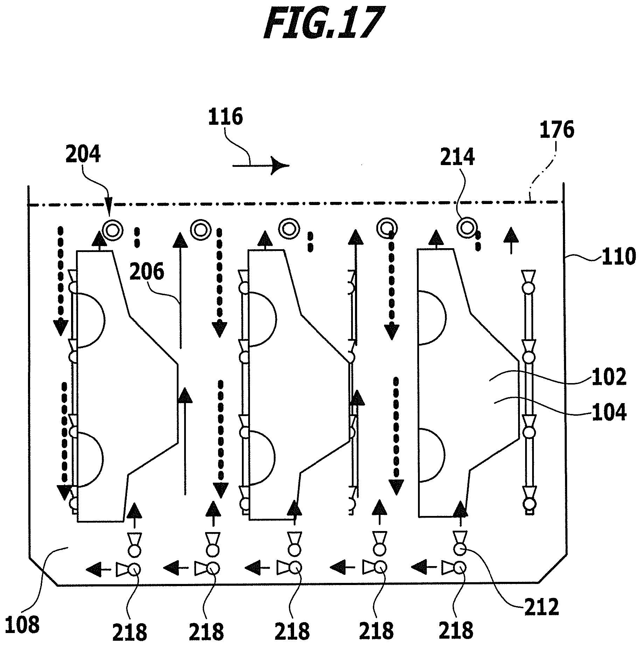

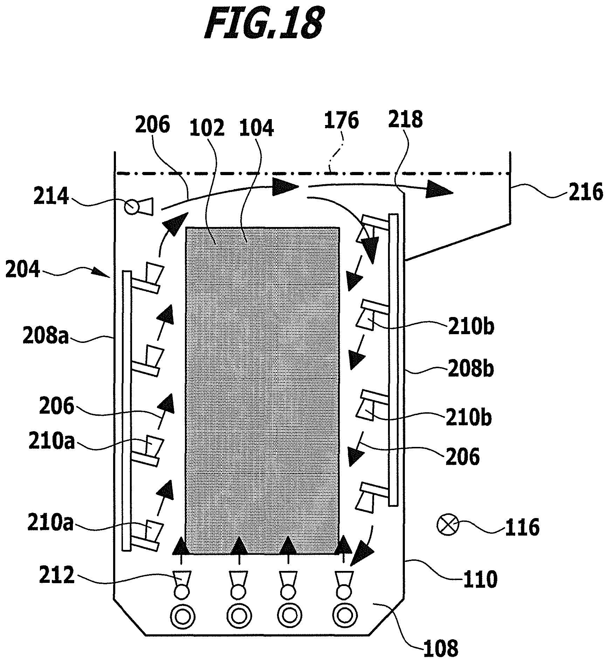

Eine erste Ausführungsform eines solchen Behandlungsbeckens 110 ist in Fig. 17 in einem vertikalen Längsschnitt längs der Translationsrichtung 116 und in Fig. 18 in einem vertikalen Querschnitt senkrecht zur Translationsrichtung 116 dargestellt.

Das Düsensystem 204 umfasst bei dieser Ausführungsform an einer linken Seitenwand 208a des Behandlungsbeckens 110 angeordnete Seitendüsen 210a und an einer rechten Seitenwand 208b des Behandlungsbeckens 110 angeordnete Seitendüsen 210b, wobei die an der einen Seitenwand, beispielsweise der linken Seitenwand 208a, angeordneten Seitendüsen 210a eine nach oben gerichtete Ausströmrichtung aufweisen, während die an der gegenüberliegenden Seitenwand, beispielsweise der rechten Seitenwand 208b, angeordneten Seitendüsen 210b eine nach unten gerichtete Ausströmrichtung aufweisen.

Das Düsensystem 204 kann ferner Bodendüsen 212 umfassen, welche in dem Behandlungsbecken 110 unterhalb der Bewegungsbahn der Werkstücke 102 angeordnet sind und eine nach oben gerichtete Ausströmrichtung aufweisen.

Ferner kann das Düsensystem 204 an einer der beiden Seitenwände 208a, 208b nahe des Badspiegels 176 angeordnete obere Düsen 214 umfassen, deren Ausströmrichtung im Wesentlichen horizontal verläuft und zu einem Überlaufbecken 216 hin gerichtet ist, welches an der jeweils gegenüberliegenden Seitenwand 208b bzw. 208a angeordnet ist und sich längs der Translationsrichtung 116 seitlich neben dem Behandlungsbecken 110 erstreckt. Mit der Oberflächenströmung wird insbesondere an der Badoberfläche angesammelter Schaum in das Überlaufbecken 216 gespült.

Durch die vorstehend genannten Düsen wird in dem Behandlungsbad 108 eine Querströmung der Behandlungsflüssigkeit erzeugt, durch welche die Werkstücke 102 im Behandlungsbad 108, insbesondere die Fahrzeugkarosserien 104, kreis- oder ringförmig umströmt werden, so dass sich eine Strömungswalze um die Werkstücke 102 ausbildet. Dabei gelangt ein Teil der umgewälzten Behandlungsflüssigkeit über einen Überlauf 218 in das Überlaufbecken 216, von wo es, vorzugsweise nach einer Filtrierung, den Düsen des Düsensystems 204 zur erneuten Einspeisung in das Behandlungsbad 108 zugeführt wird.

Bei der in den Fig. 17 und 18 dargestellten Ausführungsform des Behandlungsbeckens 110 mit Düsensystem 204 sind ferner unterhalb der Bodendüsen 212 angeordnete Flutdüsen 218 vorgesehen, welche eine Sedimentation von Partikeln, insbesondere Lackpartikeln, aus dem Behandlungsbad 108 auf dem Boden des Behandlungsbeckens 110 verhindern sollen.

Die Flutdüsen 218 weisen vorzugsweise eine im Wesentlichen horizontal und im Wesentlichen entgegengesetzt zur Translationsrichtung 116 gerichtete Ausströmrichtung auf.

Ergänzend hierzu ist eine (nicht dargestellte) Bodenabsaugung vorgesehen, welche die Behandlungsflüssigkeit aus der von den Flutdüsen 218 erzeugten Strömung absaugt. Die von der Bodenabsaugung abgesaugte Behandlungsflüssigkeit wird, vorzugsweise nach einer Filtrierung, den Flutdüsen 218 zur erneuten Einspeisung in das Behandlungsbad 108 zugeführt.

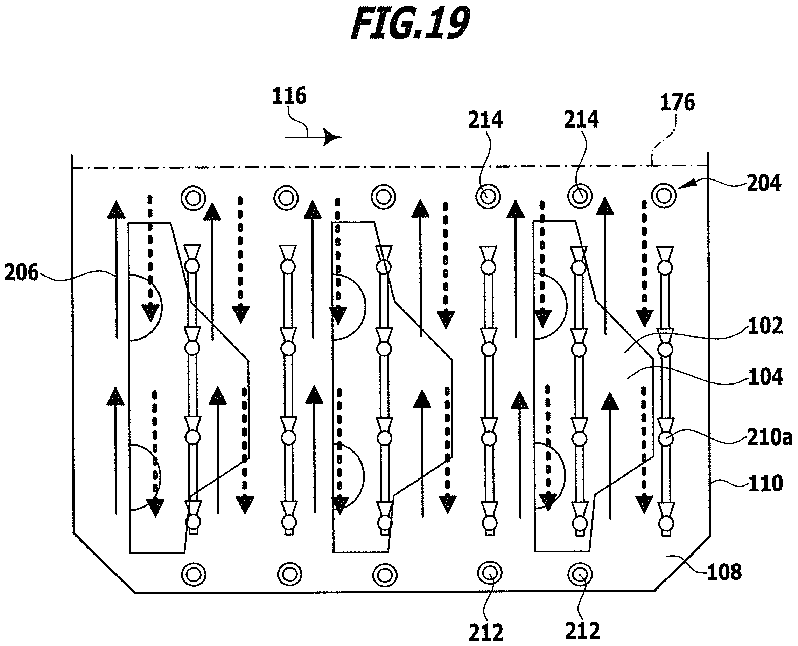

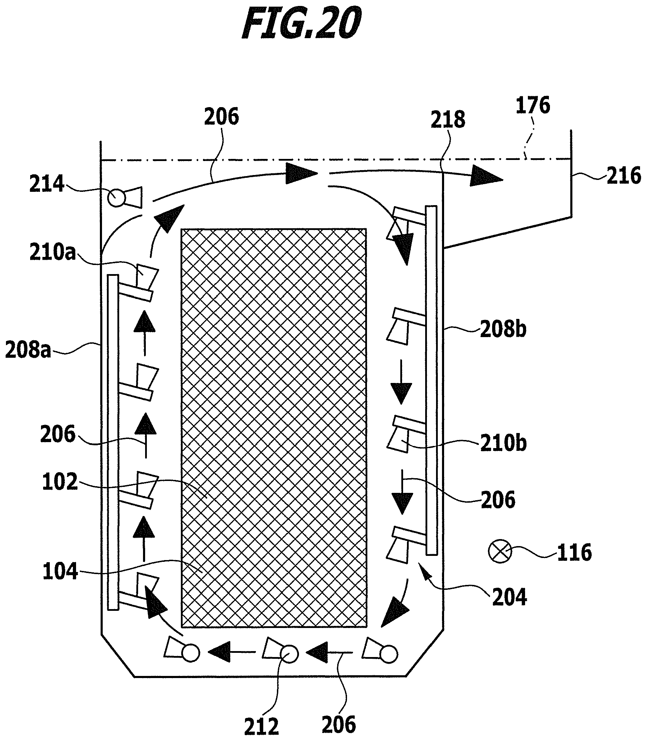

Eine in den Fig. 19 und 20 dargestellte zweite Ausführungsform eines Behandlungsbeckens 110 mit Düsensystem 204 unterscheidet sich von der in den Fig. 17 und 18 dargestellten ersten Ausführungsform dadurch, dass keine Flutdüsen 218 zur Erzeugung einer separaten Bodenströmung vorgesehen sind.

Stattdessen sind bei dieser Ausführungsform die Bodendüsen 212 des Düsensystems 204 näher am Boden des Behandlungsbeckens 110 angeordnet, und die Ausströmrichtung dieser Bodendüsen 212 ist so ausgerichtet, dass die Bodendüsen 212 die von den Seitendüsen 210 und 210b erzeugte kreis- oder ringförmige Walzenströmung, in der Querrichtung des Behandlungsbeckens 110 um die Werkstücke 102 herum, unterstützen.

Die Ausströmrichtung der Bodendüsen 212 ist bei dieser Ausführungsform daher vorzugsweise im Wesentlichen entgegengesetzt zur Ausströmrichtung der oberen Düsen 214 ausgerichtet.

Insbesondere kann vorgesehen sein, dass die Ausströmrichtung der Bodendüsen 212 von derjenigen Seitenwand weg gerichtet ist, an welcher das Überlaufbecken 216 angeordnet ist.

Im Übrigen stimmt die in den Fig. 19 und 20 dargestellte zweite Ausführungsform des Behandlungsbeckens 110 mit Düsensystem 204 hinsichtlich Aufbau und Funktionsweise mit der in den Fig. 17 und 18 dargestellten ersten Ausführungsform überein, auf deren vorstehende Beschreibung insoweit Bezug genommen wird.

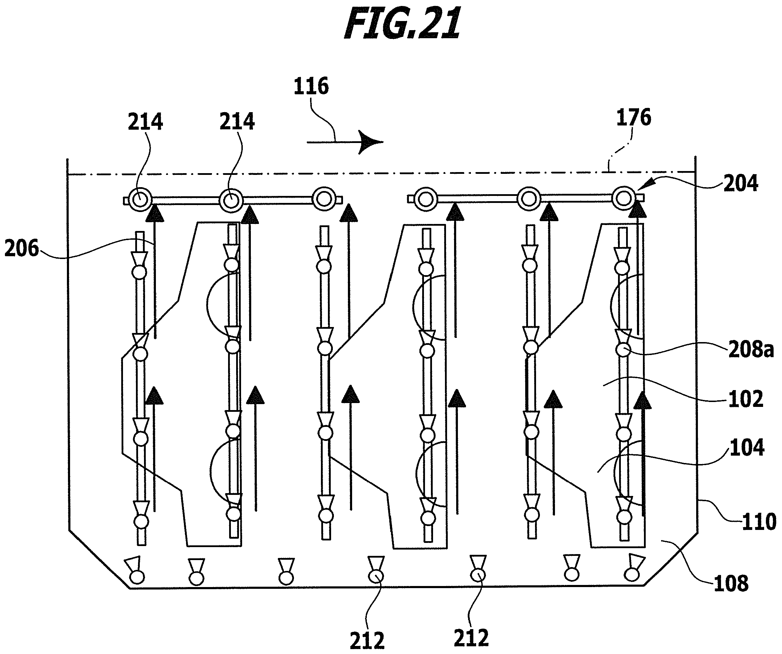

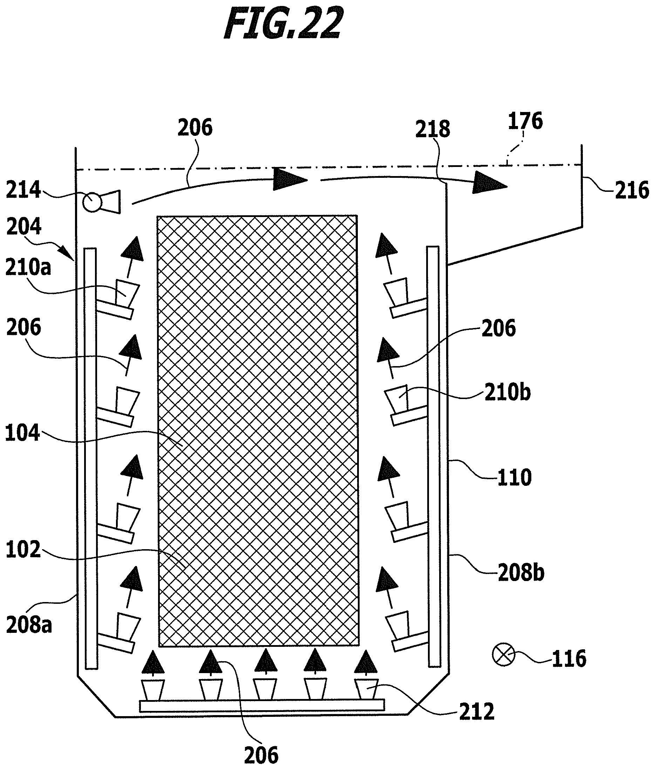

Eine in den Fig. 21 und 22 dargestellte dritte Ausführungsform des Behandlungsbeckens 110 mit Düsensystem 204 unterscheidet sich von der in den Fig. 19 und 20 dargestellten zweiten Ausführungsform dadurch, dass die Ausströmrichtung aller Seitendüsen 210a und 210b und die Ausströmrichtung der Bodendüsen 212 nach oben gerichtet ist.

Bei dieser Ausführungsform wird es im Behandlungsbad 108 auch zu nach unten gerichteten Strömungen kommen.

Die hohe Strömungsgeschwindigkeit der Behandlungsflüssigkeit an den Düsenmündungen der Seitendüsen 210a, 210b und der Bodendüsen 212 hat eine Sogwirkung auf die Behandlungsflüssigkeit aus der näheren Umgebung zur Folge.

Im Übrigen stimmt die in den Fig. 21 und 22 dargestellte dritte Ausführungsform des Behandlungsbeckens 110 mit Düsensystem 204 hinsichtlich Aufbau und Funktionsweise mit der in den Fig. 19 und 20 dargestellten zweiten Ausführungsform überein, auf deren vorstehende Beschreibung insoweit Bezug genommen wird.

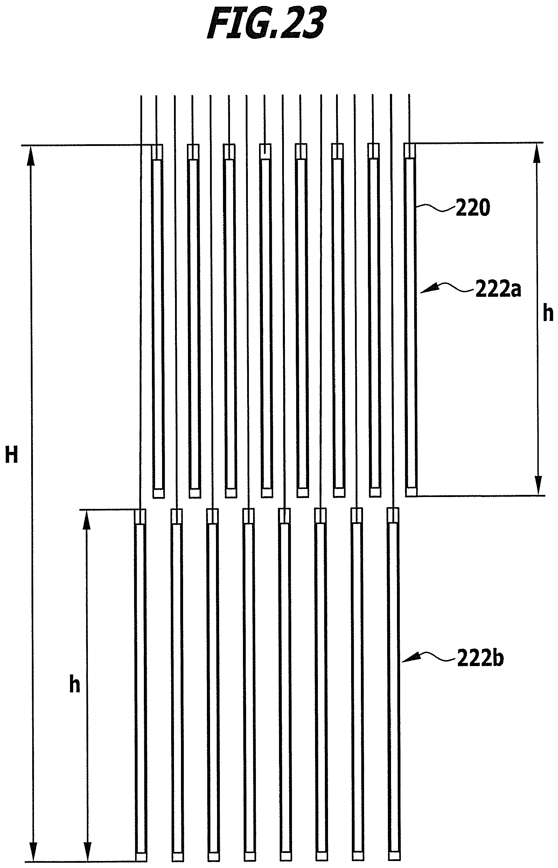

Wenn es sich bei dem Behandlungsbad 108 um ein elektrophoretisches Tauchlackierungsbad handelt, so umfasst das Behandlungsbecken 110 ferner im Behandlungsbad 108 angeordnete Dialysezellen 220 (siehe Fig. 23).

Diese Dialysezellen 220 dienen dazu, als die dem Werkstück 102 entgegengesetzte Elektrode zu fungieren (also im Falle der kataphoretischen Tauchlackierung als Anode) und bei der Lackabscheidung frei werdenden überschüssigen Lack aus dem Behandlungsbad 108 auszuschleusen.

Durch die begrenzte Lebensdauer des Elektrodenmaterials und der Membranen der Dialysezellen 220 ist ein routinemäßiger Ausbau der Dialysezellen 220 aus dem Behandlungsbecken 110 in bestimmten Zeitabständen erforderlich.

Wenn die Werkstücke 102 in vertikaler Stellung durch das Behandlungsbad 108 gefördert werden, muss der von den Dialysezellen 220 überstrichene Bereich des Behandlungsbeckens 110 eine größere Höhe aufweisen als bei horizontaler Stellung der Werkstücke; im Falle der Lackierung von Fahrzeugkarosserien 104 muss der von den Dialysezellen 220 überstrichene Bereich des Behandlungsbeckens 110 bei vertikaler Stellung der Fahrzeugkarosserien 104 beispielsweise eine Höhe von ungefähr 6 m haben.

Wenn jede Dialysezelle 220 die gesamte Höhe des von den Dialysezellen 220 überstrichenen Bereichs des Behandlungsbeckens 110 aufweist, gestalten sich die Handhabung der Dialysezellen 220, der Einbau in das Behandlungsbecken 110 und der Ausbau aus dem Behandlungsbecken 110 sowie der Transport der Dialysezellen 220 in die Tauchlack-Kabine, in welcher das Behandlungsbecken 110 angeordnet ist, und aus der Tauchlack-Kabine heraus schwierig.

Vorzugsweise werden daher Dialysezellen 220 verwendet, deren Höhe h niedriger ist als die Höhe H des von den Dialysezellen 220 insgesamt überstrichenen Bereichs des Behandlungsbeckens 110, die aber in zwei oder mehr Zellengruppen 222a, 222b angeordnet sind, wobei die Dialysezellen 220 unterschiedlicher Zellengruppen 222a, 222b in vertikaler Richtung gegeneinander versetzt angeordnet sind, wie dies aus Fig. 23 zu ersehen ist.

Insbesondere kann dabei vorgesehen sein, dass die Dialysezellen 220 einer ersten Zellengruppe 222a im Wesentlichen vollständig oberhalb der Dialysezellen 220 einer zweiten Zellengruppe 220b angeordnet sind.

Jede Dialysezelle 220 muss daher aufgrund dieser versetzten Anordnung nur ungefähr die halbe Höhe des insgesamt von allen Dialysezellen 220 überstrichenen Bereichs des Behandlungsbeckens 110 aufweisen.

Die Dialysezellen 220 können beispielsweise als Flachzellen, Halbrundzellen oder Rundzellen ausgebildet sein.

Fig. 23 zeigt eine Ausbildung der Dialysezellen 220 als Rundzellen.

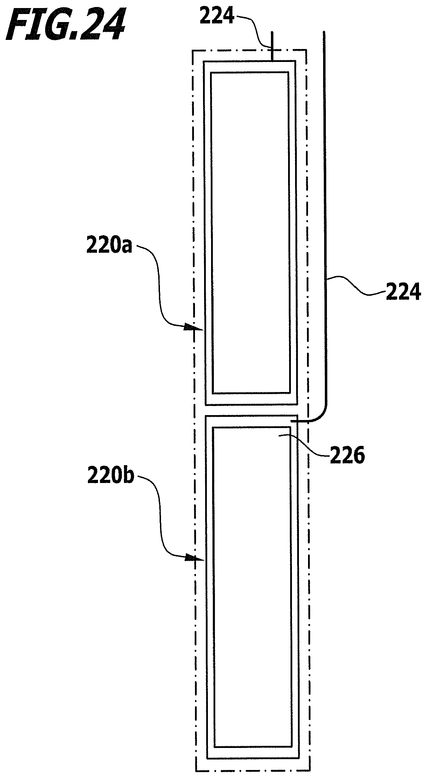

Fig. 24 zeigt eine Ausbildung der Dialysezellen 220 als Flachzellen oder Halbrundzellen, wobei eine erste Dialysezelle 220a in vertikaler Richtung gegenüber einer zweiten Dialysezelle 220b versetzt angeordnet ist.

Insbesondere ist die erste Dialysezelle 220a bei dieser Ausführungsform vertikal über der zweiten Dialysezelle 220b angeordnet.

Bei der in Fig. 24 dargestellten Ausführungsform weisen beide Dialysezellen 220a und 220b separate Elektrolytanschlüsse für den Elektrolytvorlauf zu der jeweiligen Dialysezelle 220a, 220b und für den Elekrolytrücklauf aus der jeweiligen Dialysezelle 220a, 220b auf (im Falle der kathodischen Tauchlackierung handelt es sich bei dem Elektrolyten um einen Anolyten).

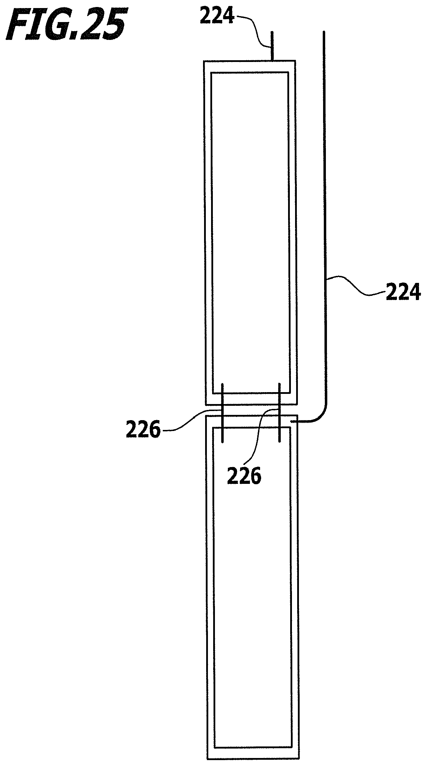

Bei der in Fig. 25 dargestellten Ausführungsform sind die Elektrolyträume der übereinander angeordneten Dialysezellen 220a, 220b durch zusätzliche Elektrolytleitungen 226 miteinander verbunden, so dass nicht zwei separate Elektrolytkreisläufe für die beiden Dialysezellen 220a, 220b erforderlich sind, sondern der Elektrolyt von der ersten Dialysezelle 220a zu der zweiten Dialysezelle 220b fließen und von der zweiten Dialysezelle 220b einer Aufarbeitungsvorrichtung für den Elektrolyten zugeführt werden kann.

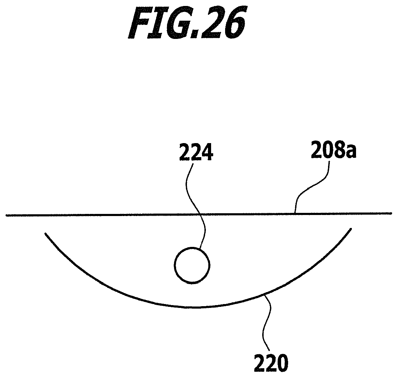

Insbesondere bei Dialysezellen 220, die als Flachzellen oder Halbrundzellen ausgebildet sind, ist es von Vorteil, wenn sich die Elektrolytanschlüsse 224 nicht seitlich neben den Dialysezellen, sondern auf der Zellenrückseite befinden, um seitlich neben den Dialysezellen 220 ausreichend Platz für die Seitendüsen 210a, 210b des Düsensystems 204 des Behandlungsbeckens 110 zu lassen, wie dies in Fig. 26 in einer Draufsicht dargestellt ist.

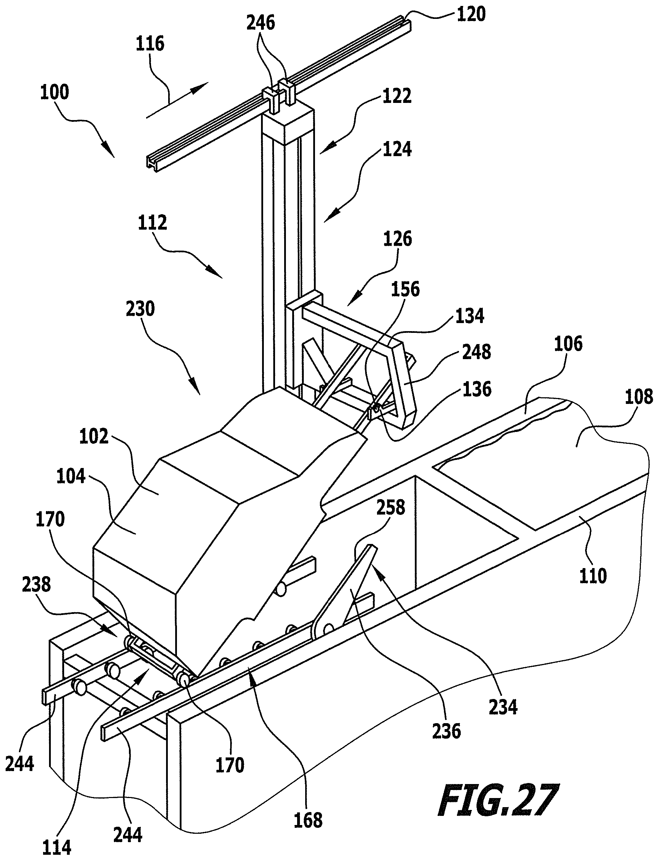

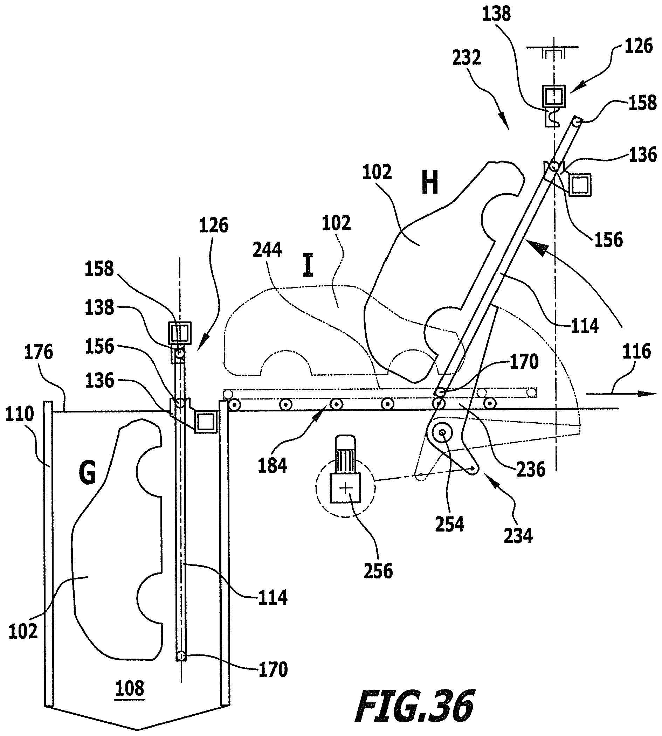

Eine in den Fig. 27 bis 37 dargestellte fünfte Ausführungsform der Fördervorrichtung 112 für eine Anlage 100 zur Oberflächenbehandlung von Werkstücken 102 unterscheidet sich von der in den Fig. 6 bis 8 dargestellten zweiten Ausführungsform dadurch, dass die Fördervorrichtung 112 sowohl in einer in Fig. 27 dargestellten Ankopplungsstation 230 als auch in einer in Fig. 36 dargestellten Abkopplungsstation 232 jeweils eine Führungsvorrichtung 234 mit schwenkbaren Abstützelementen 236 umfasst, welche einen Endbereich 238 des Werkstückträgers 114 bei der Überführung des Werkstückträgers 114 von der horizontalen Ausgangsstellung in die vertikale Arbeitsstellung beziehungsweise von der vertikalen Arbeitsstellung in die horizontale Ausgangsstellung führt.

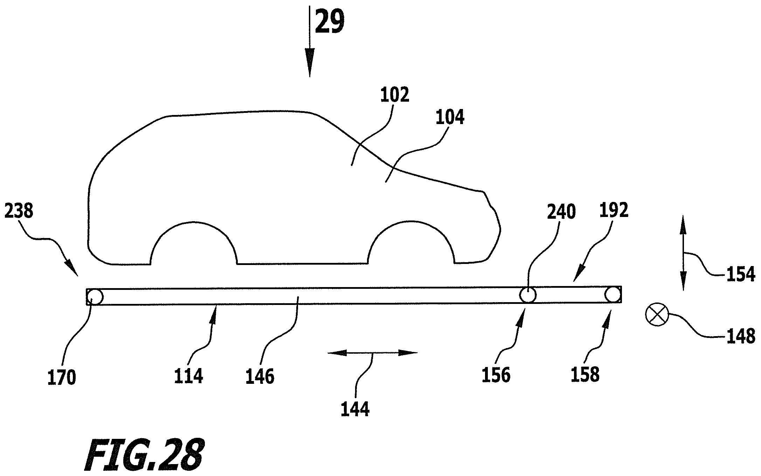

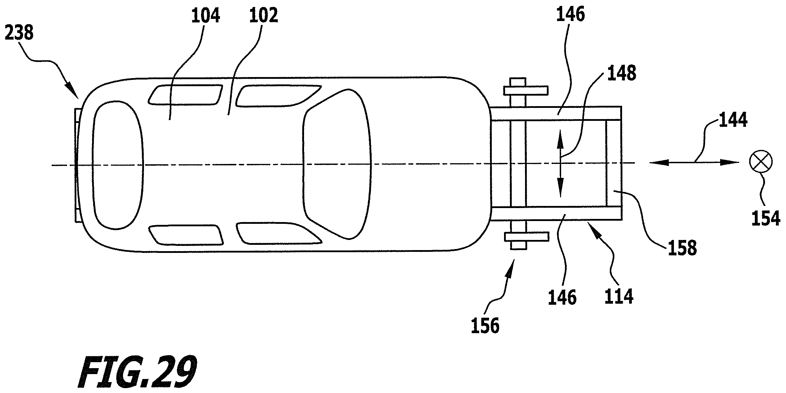

Ferner sind bei dieser Ausführungsform die erste Kopplungseinrichtung 156 und die zweite Kopplungseinrichtung 158 des Werkstückträgers 114 an einer horizontalen Verlängerung 192 des Werkstückträgers 114, insbesondere an einer horizontalen Verlängerung der Skidkufen 146 des Werkstückträgers 114, angeordnet (siehe die Fig. 28 und 29). Die erste Kopplungseinrichtung 156 und die zweite Kopplungseinrichtung 158 des Werkstückträgers 114 sind somit bei dieser Ausführungsform in der Längsrichtung 144 versetzt gegeneinander angeordnet. Dabei ist bei dieser Ausführungsform vorzugsweise die erste Kopplungseinrichtung 156 in der Längsrichtung 144 des Werkstückträgers 114 zwischen der zweiten Kopplungseinrichtung 158 und dem hinteren Endbereich 238 des Werkstückträgers 114 angeordnet.

Die erste Kopplungseinrichtung 156 umfasst vorzugsweise Rollen 240, welche jeweils um eine parallel zur Querrichtung 148 des Werkstückträgers 114 ausgerichtete Drehachse drehbar gelagert sind.

Im hinteren Endbereich 238 des Werkstückträgers 114 sind ebenfalls Rollen 170 angeordnet, die um parallel zur Querrichtung 148 des Werkstückträgers 114 ausgerichtete Drehachsen drehbar gelagert sind und jeweils an einer Abrollschiene 244 abrollen, wenn der vordere Teil des Werkstückträgers 114 in der Ankopplungsstation 230 angehoben wird (siehe Fig. 27).

Die Abrollschienen 244 können insbesondere Bestandteil einer Rollenbahn 168 sein, mittels welcher der Werkstückträger 114 zusammen mit dem daran angeordneten Werkstück 102 in die Ankopplungsstation 230 gefördert wird.

Der Basisteil 124 des Fahrwagens 122 ist bei dieser Ausführungsform mittels mehrerer, beispielsweise zwei, Führungselemente 246 an der Führungsschiene 120 der Fördervorrichtung 112 geführt.

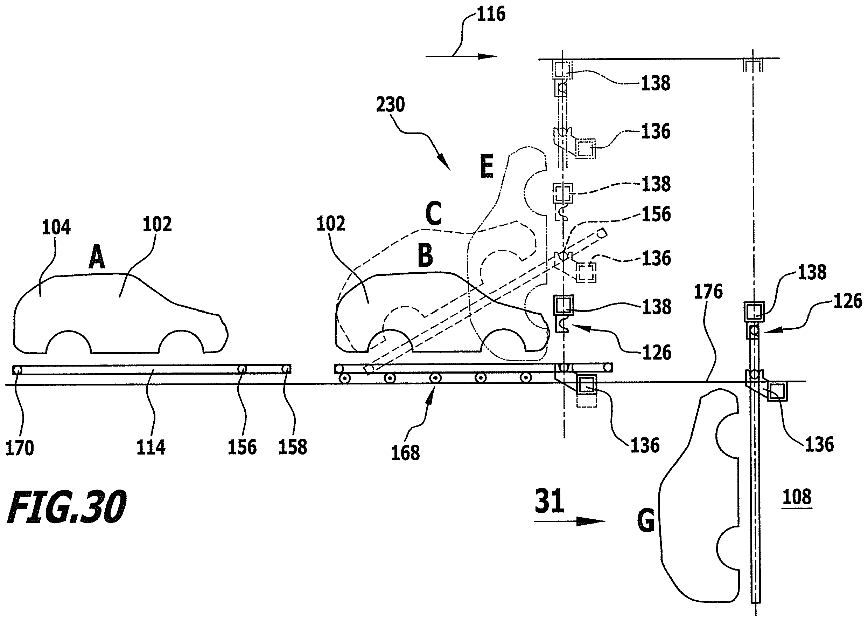

Die am Basisteil 124 verschieblich gehaltene Hubeinheit 126 umfasst bei dieser Ausführungsform einen Haltebügel 248, welcher die erste Kopplungsvorrichtung 136 und die zweite Kopplungsvorrichtung 138 (siehe Fig. 27 und Fig. 30) der Hubeinheit 126 trägt.

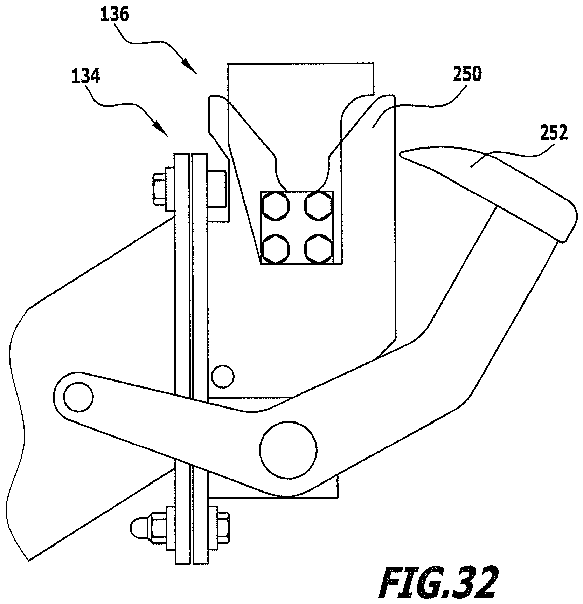

Eine mögliche konkrete Ausführung der ersten Kopplungsvorrichtung 136 ist in Fig. 32 dargestellt und umfasst eine Aufnahme 250 für eine Rolle 240 der ersten Kopplungseinrichtung 156 des Werkstückträgers 114 sowie einen schwenkbaren Verriegelungshaken 252. Der Verriegelungshaken 252 ist nach dem Einbringen der ersten Kopplungseinrichtung 156 des Werkstückträgers 114 in die Aufnahme 250 aus der in Fig. 32 dargestellten Freigabestellung in eine Verriegelungsstellung schwenkbar, in welcher der Verriegelungshaken 252 die erste Kopplungseinrichtung 156 in der Aufnahme 250 der ersten Kopplungsvorrichtung 136 zurückhält.

Im Einzelnen verlaufen der Ankopplungsvorgang, der Eintauch- und der Austauchvorgang sowie der Abkopplungsvorgang bei der fünften Ausführungsform wie folgt (in den Fig. 30 bis 36 sind aufeinanderfolgende Positionen des Werkstückträgers 114 und des daran angeordneten Werkstücks 102 mit aufeinanderfolgenden Großbuchstaben (A bis I) bezeichnet):

Der Werkstückträger 114 mit dem Werkstück 102 wird mittels einer der Ankopplungsstation 230 vorgeschaltete (nicht dargestellten) Fördereinheit von der in Fig. 30 bei A dargestellten Position auf die Rollenbahn 168 der Ankopplungsstation 230 gefördert, in welcher der Werkstückträger 114 sich zunächst in der horizontalen Ausgangsstellung befindet (Übernahmeposition B).

Der Fahrwagen 122 befindet sich ebenfalls in seiner Übernahmeposition, in welcher sich die erste Kopplungsvorrichtung 136 der Hubeinheit 126 vertikal unter der ersten Kopplungseinrichtung 156 des Werkstückträgers 114 und die zweite Kopplungsvorrichtung 138 der Hubeinheit 126 oberhalb des Werkstückträgers 114 befindet.

Nun wird die erste Kopplung zwischen dem Werkstückträger 114 und der Hubeinheit 126 des Fahrwagens 122 hergestellt, indem die Hubeinheit 126 angehoben wird, so dass die Rollen 240 der ersten Kopplungseinrichtung 156 in die Aufnahmen 250 der ersten Kopplungsvorrichtung 136 gelangen, wo sie mittels der Verriegelungshaken 252 gesichert werden.

Nunmehr ist der Werkstückträger 114 um eine horizontale Schwenkachse relativ zu der Hubeinheit 126 schwenkbar mit der Hubeinheit 126 verbunden.

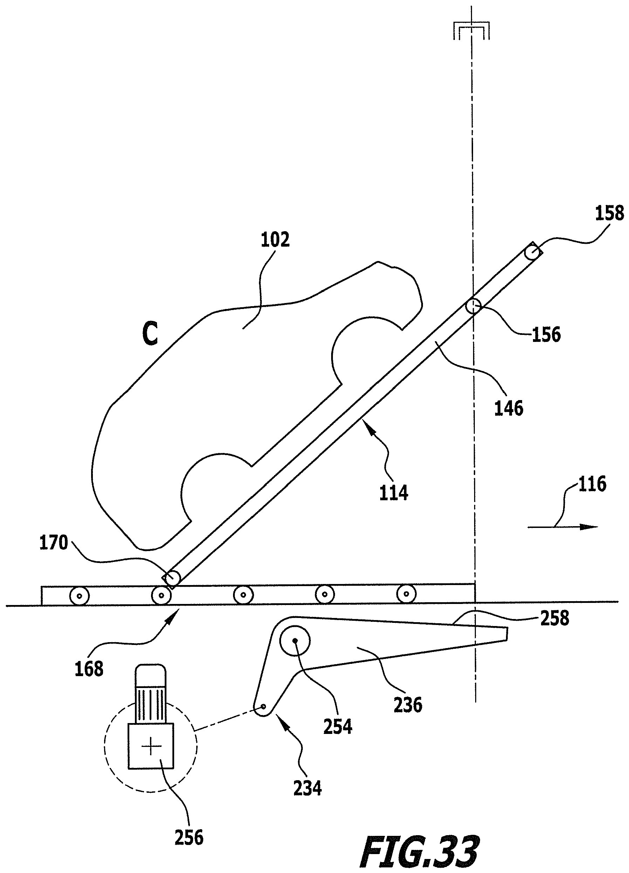

Anschließend wird die Hubeinheit 126 des Fahrwagens 122 vertikal nach oben bewegt, wobei der Fahrwagen 122 vorzugsweise nicht in der Translationsrichtung 116 bewegt wird. Dadurch wird das vordere Ende des Werkstückträgers 114 angehoben, und der Werkstückträger 114 gelangt in die bei C in Fig. 33 dargestellte geneigte Stellung.

Der hintere Endbereich 238 des Werkstückträgers 114 wird dabei durch Abrollen der Rollen 170 an den Abrollschienen 244 nachgeführt.

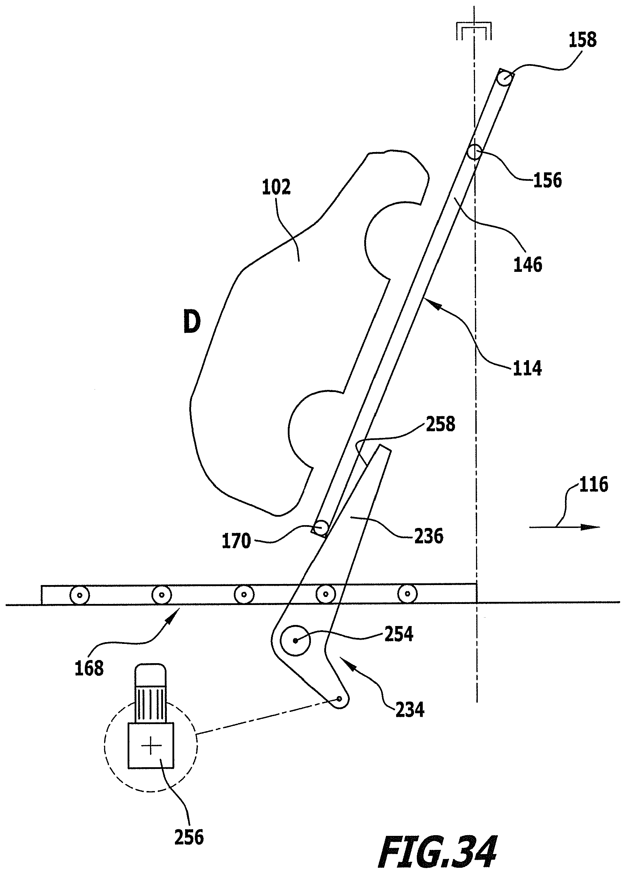

Wenn der Werkstückträger 114 die in Fig. 33 dargestellte geneigte Stellung, mit einem Neigungswinkel von beispielsweise ungefähr 45° gegenüber der Horizontalen, erreicht hat, wird die Führungsvorrichtung 234 aktiviert. Dabei werden die Abstützelemente 236 mittels eines in den Fig. 33 bis 35 schematisch dargestellten Schwenkantriebs 256 um ihre horizontale Schwenkachse 254 geschwenkt (in der Blickrichtung der Fig. 33 im Gegenuhrzeigersinn), bis der hintere Endbereich 238 des Werkstückträgers 114 über die Rollen 170 an jeweils einer Abstützfläche 258 eines Abstützelements 236 anliegt. Beim weiteren Anheben der Hubeinheit 126 werden die Rollen 170 von den Abrollschienen 244 abgehoben und rollen an der Abstützfläche 258 des jeweils zugeordneten Abstützelements 236 der Führungsvorrichtung 234 hinauf, bis die Hubeinheit 126 ihren höchsten Punkt erreicht hat (Position D in Fig. 34).

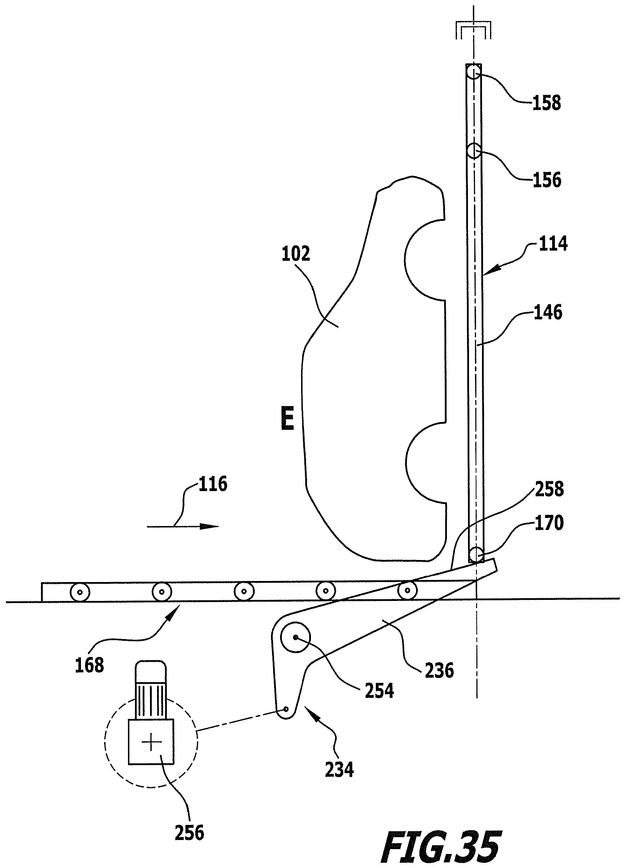

Anschließend werden die Abstützelemente 236 aus der in Fig. 34 dargestellten Stellung langsam (in der Blickrichtung der Fig. 34 und 35 gesehen im Uhrzeigersinn) in die in Fig. 35 dargestellte Zwischenstellung geschwenkt, in welcher der Werkstückträger 114 die vertikale Arbeitsstellung relativ zu der Hubeinheit 126 erreicht hat. Dabei rollen die Rollen 170 im hinteren Endbereich 238 des Werkstückträgers 238 an den Abstützflächen 258 der Abstützelemente 236 ab.

Wenn der Werkstückträger die bei E in Fig. 35 dargestellte Arbeitsstellung erreicht hat, wird die zweite Kopplung zwischen dem Werkstückträger 114 und der Hubeinheit 126 hergestellt, indem die zweite Kopplungsvorrichtung 138 der Hubeinheit 126 an die zweite Kopplungseinrichtung 158 des Werkstückträgers 114 angekoppelt wird. Hierdurch wird der Werkstückträger 114 in der vertikalen Arbeitsstellung relativ zu der Hubeinheit 126 des Fahrwagens 122 fixiert.

Die Abstützelemente 236 der Führungsvorrichtung 234 werden aus der in Fig. 35 dargestellten Zwischenstellung in die in Fig. 33 dargestellte Ausgangsstellung zurückgeschwenkt, in welcher sich die Abstützelemente 236 außerhalb der Bewegungsbahn des Werkstückträgers 114 befinden.

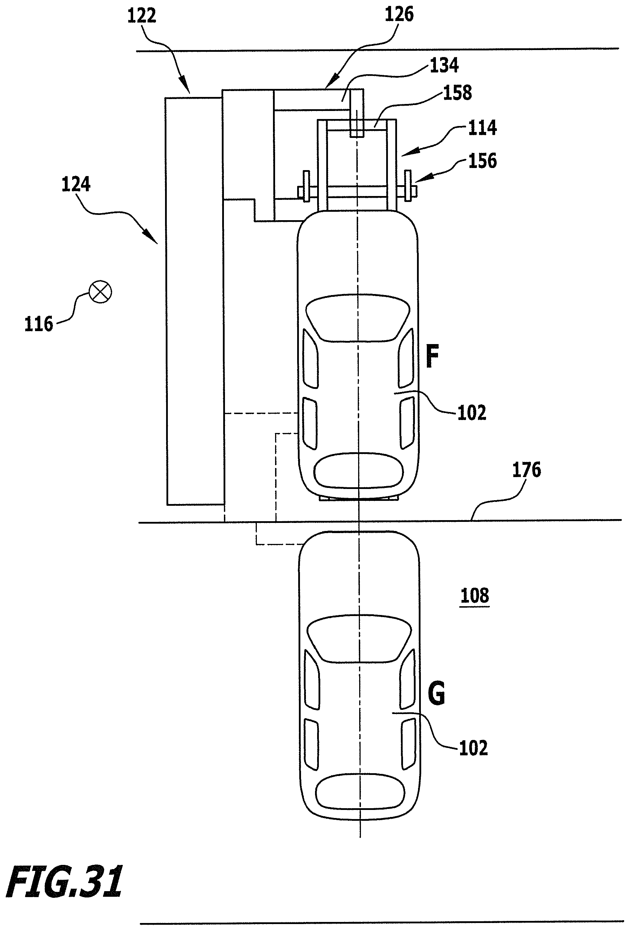

Anschließend wird der Fahrwagen 122 in der Translationsrichtung 116 nach vorne bewegt, bis er sich neben dem Behandlungsbecken 106 befindet und die Hubeinheit 126 mit dem Werkstückträger 114 und dem Werkstück 102 vertikal über dem Behandlungsbad 108 angeordnet ist (Position F in Fig. 31).

Dann wird das Werkstück 102 durch Absenken der Hubeinrichtung 126 in das Behandlungsbad 108 eingetaucht (Position G in Fig. 31).

Wie aus Fig. 30 zu ersehen ist, wird dabei die Hubeinheit 126 nur so weit abgesenkt, dass zwar die erste Kopplungsvorrichtung 136 der Hubeinheit 126 in das Behandlungsbad 108 eintaucht, nicht jedoch die zweite Kopplungsvorrichtung 138, welche stets oberhalb des Badspiegels 176 bleibt.

Nach der gewünschten Behandlungszeit wird das Werkstück 102 durch Anheben der Hubeinheit 126 aus dem Behandlungsbad 108 herausbewegt. Anschließend wird der Fahrwagen 122 in der Translationsrichtung 116 in die Abkopplungsstation 232 bewegt (siehe Fig. 36).

In der Abkopplungsstation 232 wird die zweite Kopplung zwischen dem Werkstückträger 114 und der Hubeinheit 126 des Fahrwagens 122 gelöst, indem die zweite Kopplungsvorrichtung 138 der Hubeinheit 126 von der zweiten Kopplungseinrichtung 158 des Werkstückträgers 114 gelöst wird. Der Werkstückträger 114 kann nunmehr um die horizontale Schwenkachse relativ zu der Hubeinheit 126 geschwenkt werden.

In der Abkopplungsstation 232 ist wie in der Ankopplungsstation 230 ebenfalls eine Führungsvorrichtung 234 vorgesehen, deren Abstützelemente 236 nunmehr aus der in Fig. 36 in gebrochenen Linien dargestellten Ausgangsstellung (in der Blickrichtung der Fig. 36 gesehen im Gegenuhrzeigersinn) mittels des Schwenkantriebs 256 um ihre Schwenkachse 254 geschwenkt werden, bis die Rollen 170 im Endbereich 238 des Werkstückträgers 114 an den Abstützflächen 258 der Abstützelemente 236 anliegen. Beim weiteren Schwenken der Abstützelemente 236 werden die Rollen 170 von den Abstützelementen 236 mitgenommen, so dass der Werkstückträger 114 aus der vertikalen Arbeitsstellung herausbewegt wird.

Durch Absenken der Hubeinheit 126 und gleichzeitiges Schwenken der Abstützelemente 236 der Führungsvorrichtung 234 wird der Werkstückträger 114 in die bei H in Fig. 36 dargestellte, gegenüber der vertikalen Arbeitsstellung geneigte Stellung gebracht, in welcher die Rollen 170 im Endbereich 238 des Werkstückträgers 114 auf jeweils zugeordneten Abrollschienen 244 einer Rollenbahn 184 der Abkopplungsstation 232 aufliegen.

Nun werden die Abstützelemente 236 der Führungsvorrichtung 234 in die Ausgangsstellung zurückgeschwenkt, und durch weiteres Absenken der Hubeinheit 126 und Abrollen der Rollen 170 im hinteren Endbereich 238 des Werkstückträgers 114 an den Abrollschienen 244 erreicht der Werkstückträger 114 die in Fig. 36 bei I dargestellte Übergabeposition, in welcher der Werkstückträger 114 in der horizontalen Ausgangsstellung auf der Rollenbahn 184 angeordnet ist.

Nach Erreichen der Übergabeposition wird auch die erste Kopplung zwischen dem Werkstückträger 114 und der Hubeinheit 126 des Fahrwagens 122 gelöst, indem die erste Kopplungsvorrichtung 136 der Hubeinheit 126 von der ersten Kopplungseinrichtung 156 des Werkstückträgers 114 abgekoppelt wird.

Nachdem der Werkstückträger 114 von dem Fahrwagen 122 abgekoppelt ist, wird der Werkstückträger 114 mit dem Werkstück 102 mittels der Rollenbahn 184 zu einem auf das Behandlungsbad 108 folgenden Behandlungs- oder Bearbeitungsbereich gefördert.

Der Fahrwagen 122 wird längs eines Rückführabschnitts der Tragschiene 118 oder über einen seitlich neben dem Behandlungsbecken 110 liegenden Abschnitt der Tragschiene 118 in die vor dem Behandlungsbecken liegende Übernahmeposition zurückbewegt.

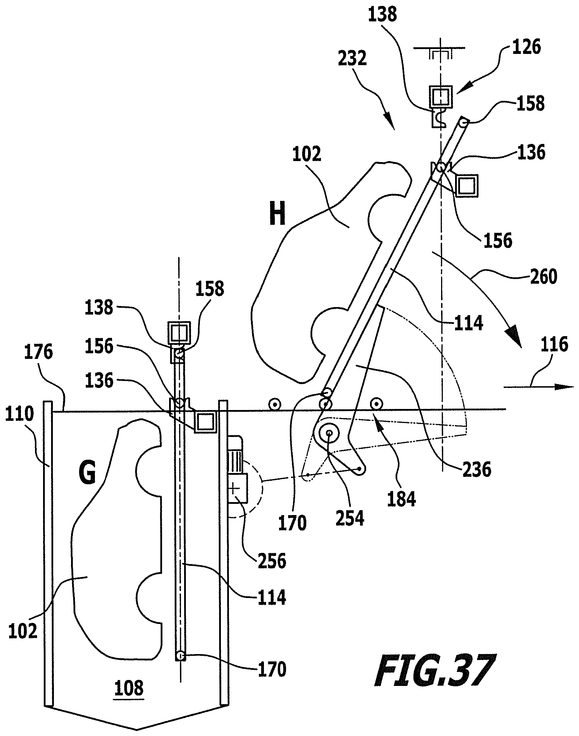

Bei einer in Fig. 37 dargestellten Variante der fünften Ausführungsform der Fördervorrichtung 112 wird der Werkstückträger 114, wenn er die in Fig. 37 dargestellte, gegenüber der vertikalen Arbeitsstellung geneigte Stellung erreicht hat, an eine Schwenkvorrichtung angekoppelt.

Anschließend wird die erste Kopplung zwischen dem Werkstückträger 114 und der Hubeinheit 126 des Fahrwagens 122 gelöst, indem die erste Kopplungsvorrichtung 136 der Hubeinheit 126 von der ersten Kopplungseinrichtung 156 des Werkstückträgers 114 abgekoppelt wird.

Anschließend wird die Hubeinheit 126 angehoben, um die erste Kopplungsvorrichtung 136 der Hubeinheit 126 aus dem Bewegungsweg des Werkstückträgers 114 zu entfernen.

Dieses Anheben der Hubeinheit 126 kann mit einer Translation des Fahrwagens 122 in der Translationsrichtung 166 nach vorne oder nach hinten synchronisiert sein.

Anschließend wird der Werkstückträger 118 von der Schwenkvorrichtung (in der Blickrichtung der Fig. 37 gesehen im Uhrzeigersinn; siehe den Pfeil 260) aus der in Fig. 37 bei H dargestellten Zwischenstellung in die horizontale Ausgangsstellung auf der Rollenbahn 184 geschwenkt.

Wenn der Werkstückträger 114 die horizontale Ausgangsstellung auf der Rollenbahn 184 erreicht hat, wird die Kopplung zwischen dem Werkstückträger 118 und der Schwenkvorrichtung gelöst.

Anschließend bewegt die Rollenbahn 184 den Werkstückträger 118 aus der Abkopplungsstation 232 heraus.

Mittels der Schwenkvorrichtung wird der Werkstückträger 118 vorzugsweise um einen Winkel von mehr als 45°, beispielsweise von ungefähr 60°, geschwenkt.

Die Schwenkvorrichtung kann Bestandteil der Führungsvorrichtung 234 sein; insbesondere kann vorgesehen sein, dass der Werkstückträger 118 an die Abstützelemente 236 der Führungsstation gekoppelt wird.

Da bei dieser Variante der fünften Ausführungsform das Zurückbewegen des Endbereichs 238 des Werkstückträgers 118 auf der Rollenbahn 184 nach hinten entfällt, kann bei dieser Variante die für den Abkopplungsvorgang benötigte Zykluszeit reduziert werden.

Im Übrigen stimmt die in den Fig. 27 bis 37 dargestellte fünfte Ausführungsform der Fördervorrichtung 112 für eine Anlage 100 zur Oberflächenbehandlung von Werkstücken 102 hinsichtlich Aufbau und Funktionsweise mit der in den Fig. 6 bis 8 dargestellten zweiten Ausführungsform überein, auf deren vorstehende Beschreibung insoweit Bezug genommen wird.

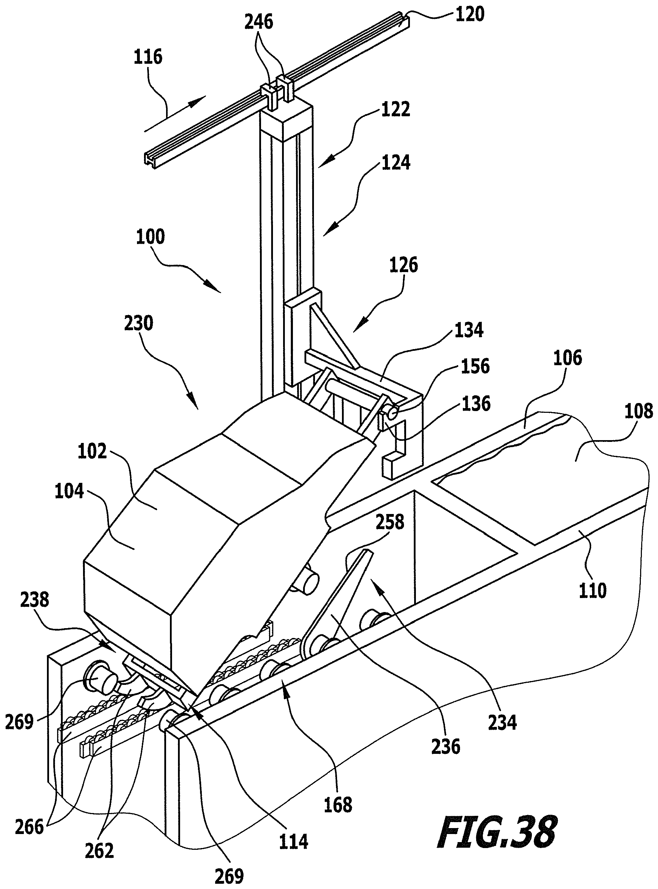

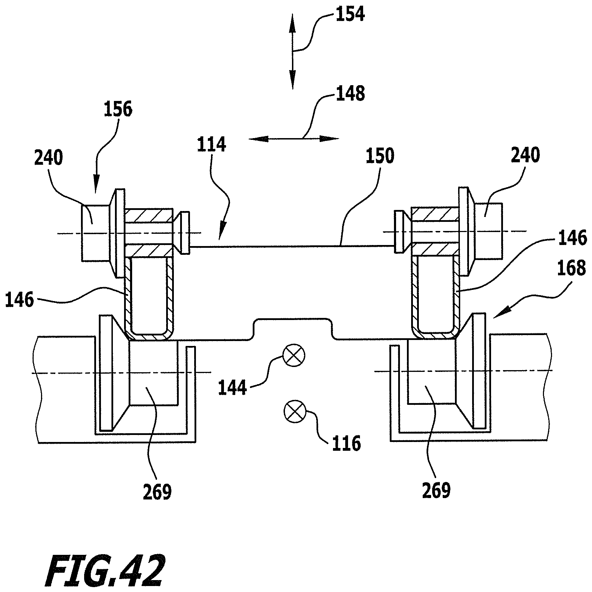

Eine in den Fig. 38 bis 46 dargestellte sechste Ausführungsform der Fördervorrichtung 112 einer Anlage 100 zur Oberflächenbehandlung von Werkstücken 102 unterscheidet sich von der in den Fig. 27 bis 37 dargestellten fünften Ausführungsform dadurch, dass die erste Kopplungseinrichtung 156 des Werkstückträgers, mittels welcher die erste Kopplung des Werkstückträgers 114 mit der Hubeinheit 126 hergestellt wird, nicht, wie bei der fünften Ausführungsform, in der Längsrichtung 144 zwischen der zweiten Kopplungseinrichtung 158 und dem hinteren Endbereich 238 des Werkstückträgers 114 angeordnet ist, sondern in der Längsrichtung 144 des Werkstückträgers 114 vor der zweiten Kopplungseinrichtung 158.

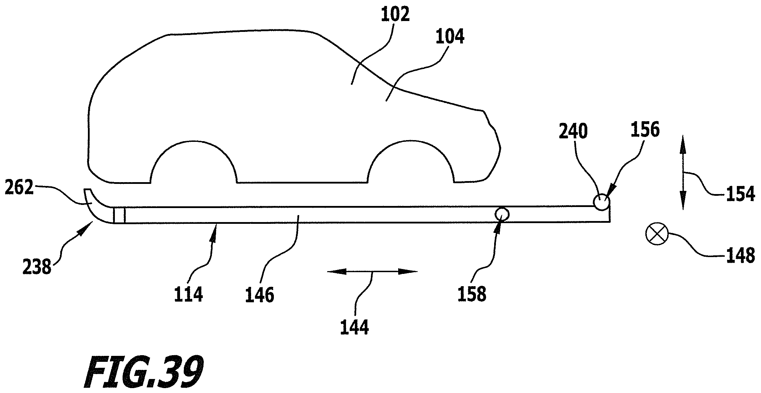

Bei dieser Ausführungsform ist somit die zweite Kopplungseinrichtung 158 mittels welcher die zweite Kopplung zwischen dem Werkstückträger 114 und der Hubeinheit 126 hergestellt wird, in der Längsrichtung 144 des Werkstückträgers 114 zwischen der ersten Kopplungseinrichtung 156 und dem hinteren Endbereich 238 des Werkstückträgers 114 angeordnet (siehe Fig. 39).

Dabei kann die erste Kopplungseinrichtung 156 in der Aufwärtsrichtung 154 gegenüber der zweiten Kopplungseinrichtung 158 versetzt sein, insbesondere nach oben versetzt sein.

Auch bei dieser Ausführungsform umfasst die erste Kopplungseinrichtung 156 vorzugsweise Rollen 240, die um eine parallel zur Querrichtung 148 des Werkstückträgers 114 verlaufende Drehrichtung drehbar gelagert sind.

Die zweite Kopplungseinrichtung 158 kann starr ausgebildet sein.

Ferner ist bei dieser Ausführungsform vorzugsweise vorgesehen , dass im hinteren Endbereich 238 des Werkstückträgers 114 keine Rollen 170, sondern stattdessen ein oder mehrere starre Gleitelemente 262 vorgesehen sind.

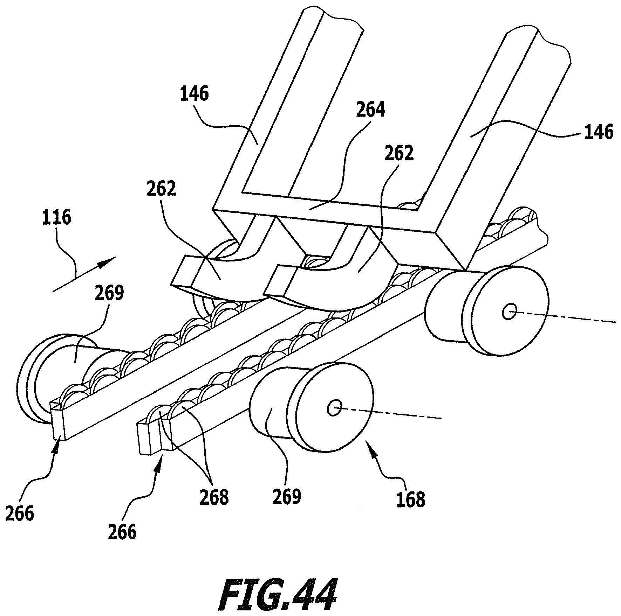

Wie aus Fig. 44 zu ersehen ist, können die Gleitelemente 262 insbesondere als bogenförmig gekrümmte Vorsprünge ausgebildet sein.

Die Gleitelemente 262 sind vorzugsweise an einer die Skidkufen 146 miteinander verbindenden Traverse 264 des Werkstückträgers 114 angeordnet und weisen vorzugsweise einen geringeren Abstand voneinander auf als die Skidkufen 146.

Wie am besten aus Fig. 44 zu ersehen ist, können die Gleitelemente 262 an jeweils einer Gleitbahn 266 abgleiten, wenn der vordere Teil des Werkstückträgers 114 angehoben ist.

Jede Gleitbahn 266 kann beispielsweise mehrere Gleitrollen 268 umfassen, welche in der Translationsrichtung 116 aufeinanderfolgend angeordnet sind.

Insbesondere kann jede Gleitbahn 266 mehrere, beispielsweise zwei, Reihen solcher aufeinanderfolgender Gleitrollen 268 umfassen, wobei die Gleitrollen 268 zweier verschiedener Reihen vorzugsweise in der Translationsrichtung 116 versetzt zueinander angeordnet sind.

Die Gleitrollen 268 sind vorzugsweise um horizontal und senkrecht zur Translationsrichtung 116 verlaufende Drehachsen drehbar gelagert und sind vorzugsweise als Leerlauf-Rollen, das heißt ohne Drehantrieb, ausgebildet.

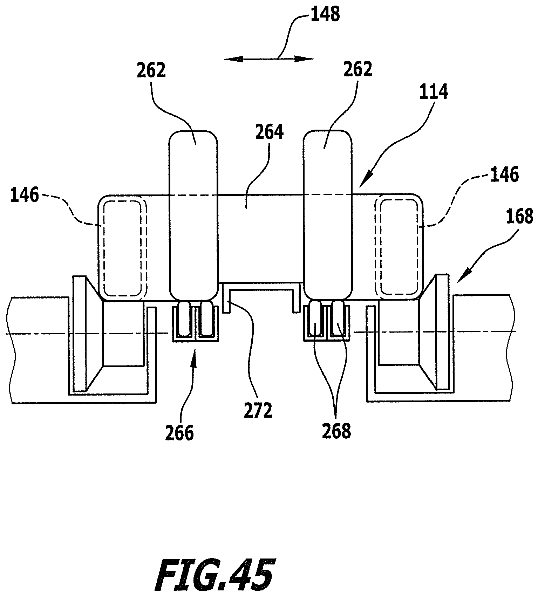

Wie aus Fig. 45 zu ersehen ist, kann der Werkstückträger 114 mit einer in der Querrichtung 148 zwischen den Gleitelementen 262 angeordneten Seitenführung 272 versehen sein, um den Werkstückträger 114 in Bezug auf die Gleitbahnen 266 zu zentrieren und zu gewährleisten, dass die Gleitelemente 262 auf den Gleitbahnen 266 abgleiten.

Die Gleitelemente 262 sind vorzugsweise im Wesentlichen kreisbogenförmig gekrümmt, und der Krümmungsradius der Gleitelemente 262 stimmt vorzugsweise im Wesentlichen mit dem Umfangsradius der Gleitrollen 268 der Gleitbahnen 266 überein.

Wie aus den Fig. 38 und 44 zu ersehen ist, sind die Gleitbahnen 266 vorzugsweise zwischen den Tragrollen 269 der Rollenbahn 168 der Ankopplungsstation 230 angeordnet.

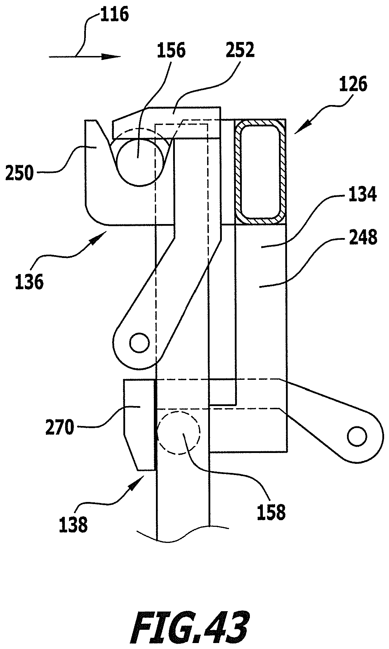

Die Hubeinheit 126 ist bei dieser Ausführungsform, in Anpassung an die relative Anordnung der ersten Kopplungseinrichtung 156 und der zweiten Kopplungseinrichtung 158 des Werkstückträgers 114, so ausgebildet, dass die erste Kopplungsvorrichtung 136 oberhalb der zweiten Kopplungsvorrichtung 138 angeordnet ist (siehe Fig. 43).

Dabei können die erste Kopplungsvorrichtung 136 und die zweite Kopplungsvorrichtung 138 in der Translationsrichtung 116 versetzt zueinander angeordnet sein.

Die erste Kopplungsvorrichtung 136 kann einen Verriegelungshaken 252 zum Sichern der ersten Kopplungseinrichtung 156 des Werkstückträgers 114 an der Hubeinheit 126 umfassen, und die zweite Kopplungsvorrichtung 138 kann einen Verriegelungshaken 270 zum Sichern der zweiten Kopplungseinrichtung 158 des Werkstückträgers 114 an der Hubeinheit 126 umfassen.

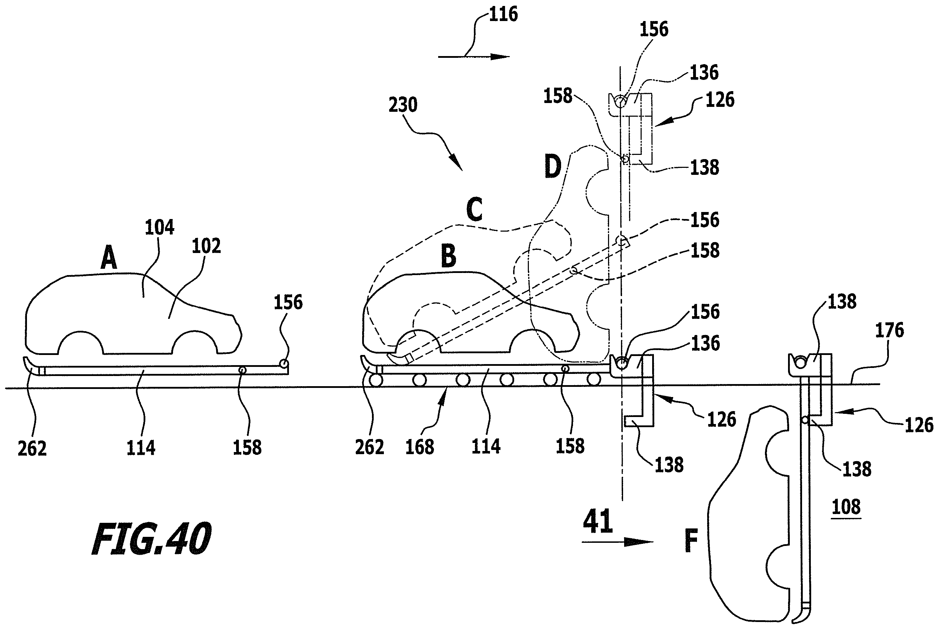

Im einzelnen verlaufen der Ankopplungsvorgang, der Eintauch- und der Austauchvorgang sowie der Abkopplungsvorgang bei der sechsten Ausführungsform wie folgt (in den Fig. 40, 41 und 46 sind aufeinanderfolgende Positionen des Werkstückträgers 114 und des daran angeordneten Werkstücks 102 mit aufeinanderfolgenden Großbuchstaben (A bis G) bezeichnet):
Der Werkstückträger 114 mit dem Werkstück 102 wird mittels einer der Fördervorrichtung 112 vorgeschalteten (nicht dargestellten) Fördereinheit aus der Position A bis in die in Fig. 40 bei B dargestellte Übernahmeposition auf der Rollenbahn 168 gefördert, in welcher der Werkstückträger 114 sich in der horizontalen Ausgangsstellung befindet.

Der Fahrwagen 122 befindet sich in seiner Übernahmeposition, in welcher die erste Kopplungsvorrichtung 136 der Hubeinheit 126 vertikal unter der ersten Kopplungseinrichtung 156 des Werkstückträgers 114 in dessen Übernahmeposition angeordnet ist.

Nun wird die Hubeinheit 126 vertikal nach oben bewegt, so dass die erste Kopplungseinrichtung 156 des Werkstückträgers 114 in die Aufnahmen 250 der ersten Kopplungsvorrichtung 136 der Hubeinheit 126 gelangt. Mittels der Verriegelungshaken 252 wird die erste Kopplungseinrichtung 156 des Werkstückträgers 114 an der Hubeinheit 126 gesichert. Damit ist die erste Kopplung zwischen dem Werkstückträger 114 und der Hubeinheit 126 des Fahrwagens 122 hergestellt, und der Werkstückträger 114 ist um eine horizontale Schwenkachse relativ zu der Hubeinheit 126 schwenkbar mit der Hubeinheit 126 verbunden.

Anschließend wird der Werkstückträger 114 durch vertikales Bewegen der Hubeinheit 126 und unter Einsatz der Führungsvorrichtung 234 mit den schwenkbaren Abstützelementen 236 aus der horizontalen Ausgangsstellung über die Zwischenstellung C in die vertikale Arbeitsstellung D gebracht, wie dies vorstehend im Zusammenhang mit der fünften Ausführungsform beschrieben worden ist.

Wenn der Werkstückträger 114 die bei D in Fig. 40 dargestellte vertikale Arbeitsstellung erreicht hat, wird die zweite Kopplung zwischen dem Werkstückträger 114 und der Hubeinheit 126 hergestellt, indem die zweite Kopplungsvorrichtung 138 der Hubeinheit 126 an die zweite Kopplungseinrichtung 158 des Werkstückträgers 114 angekoppelt wird. Hierdurch wird der Werkstückträger 114 in der vertikalen Arbeitsstellung relativ zu der Hubeinheit 126 des Fahrwagens 122 fixiert.

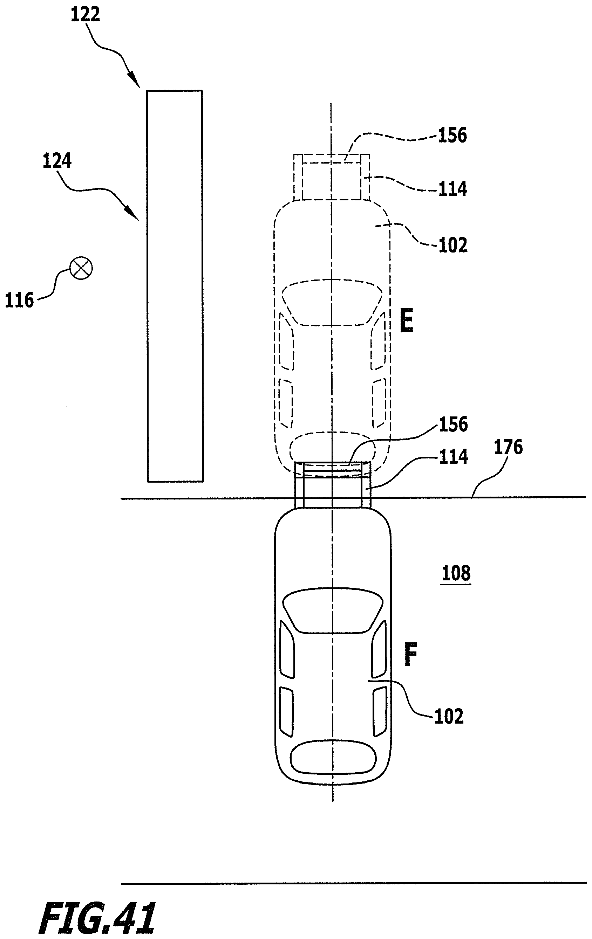

Anschließend wird der Fahrwagen 122 in der Translationsrichtung 116 nach vorne bewegt, bis er sich neben dem Behandlungsbecken 106 befindet und die Hubeinheit 126 mit dem Werkstückträger 114 und dem Werkstück 102 vertikal über dem Behandlungsbad 108 angeordnet ist (Position E in Fig. 41).

Dann wird das Werkstück 102 durch Absenken der Hubeinrichtung 126 in das Behandlungsbad 108 eingetaucht.

Wie aus den Fig. 40 und 41 zu ersehen ist, wird die Hubeinheit 126 nur so weit abgesenkt, dass zwar die zweite Kopplungsvorrichtung 138 in das Behandlungsbad 108 eintaucht, nicht aber die erste Kopplungsvorrichtung 156, welche stets oberhalb des Badspiegels 176 bleibt.

Nach Ablauf der gewünschten Behandlungszeit wird das Werkstück 102 durch Anheben der Hubeinheit 126 aus dem Behandlungsbad 108 herausbewegt.

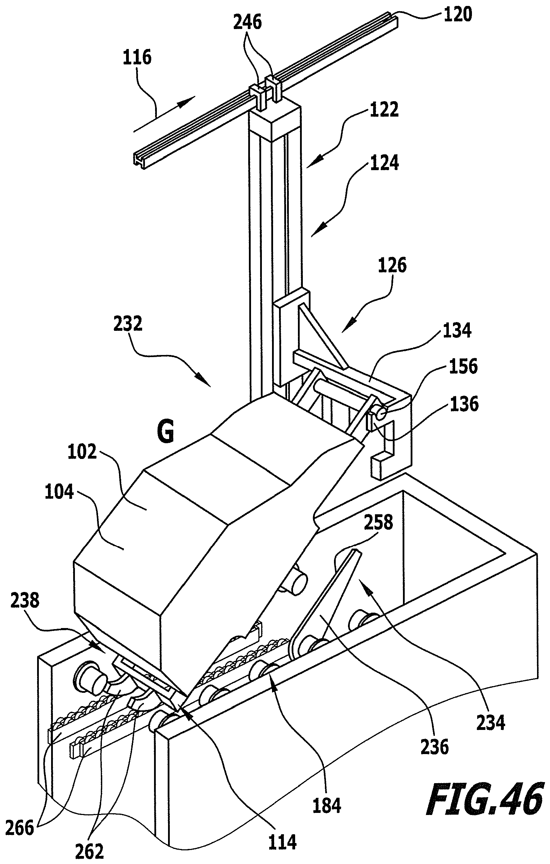

Anschließend wird der Fahrwagen 122 in der Translationsrichtung 116 in die in Fig. 46 dargestellte Abkopplungsstation 232 bewegt, welche grundsätzlich genauso aufgebaut ist wie die in Fig. 38 dargestellte Ankopplungsstation 230.

In der Abkopplungsstation 232 wird der Werkstückträger 114 mit dem daran angeordneten Werkstück 102 in derselben Weise von der Hubeinheit 126 abgekoppelt, wie dies vorstehend in Zusammenhang mit der fünften Ausführungsform beschrieben worden ist.

Dabei gleitet der hintere Endbereich 238 des Werkstückträgers 114 mit den Gleitelementen 262 an jeweils einer zugeordneten Gleitbahn 266 der Abkopplungsstation 232 ab.

Auch bei der sechsten Ausführungsform kann, wie bei der in Fig. 37 dargestellten Variante der fünften Ausführungsform, vorgesehen sein, dass der Werkstückträger 114 in einer gegenüber der Vertikalen und der Horizontalen geneigten Zwischenstellung an eine Schwenkvorrichtung gekoppelt, von der ersten Kopplungsvorrichtung 136 der Hubeinheit 126 gelöst und anschließend von der Schwenkvorrichtung in die horizontale Ausgangsstellung geschwenkt wird.

Im Übrigen stimmt die in den Fig. 38 bis 46 dargestellte sechste Ausführungsform der Fördervorrichtung 112 hinsichtlich Aufbau und Funktionsweise mit der in den Fig. 27 bis 37 dargestellten fünften Ausführungsform überein, auf deren vorstehende Beschreibung insoweit Bezug genommen wird.

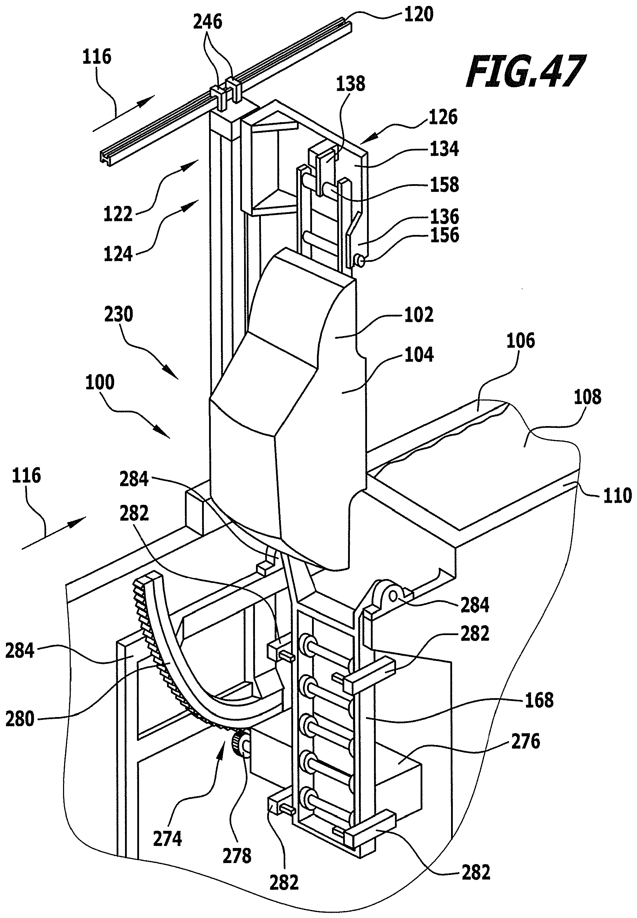

Eine in den Fig. 47 bis 52 dargestellte siebte Ausführungsform der Fördervorrichtung 112 für eine Anlage 100 zur Oberflächenbehandlung von Werkstücken 102 unterscheidet sich von der in den Fig. 27 bis 37 dargestellten fünften Ausführungsform dadurch, dass bei dieser Ausführungsform der Werkstückträger 114 nicht erst nach dem Herstellen der ersten Kopplung zwischen dem Werkstückträger 114 und der Hubeinheit 126 durch Anheben der Hubeinheit 126 von der horizontalen Ausgangsstellung in die vertikale Arbeitsstellung gebracht wird. Stattdessen umfasst bei dieser Ausführungsform die Ankopplungsstation 230 (siehe Fig. 47) eine unabhängig von der Hubeinheit 126 arbeitende Schwenkvorrichtung 274, mittels welcher der Werkstückträger 114 und das daran angeordnete Werkstück 102 schon vor dem Ankoppeln an die Hubeinheit 126 von der horizontalen Ausgangsstellung in die vertikale Arbeitsstellung schwenkbar sind.

Wie am besten aus Fig. 47 zu ersehen ist, umfasst die Schwenkvorrichtung 274 einen Basiskörper 276 mit einem darin angeordneten (nicht dargestellten) Antriebsmotor zum Antreiben eines Zahnrads 278, welches mit einer kreisbogenförmig gekrümmten Zahnstange 280 in Eingriff steht.

Die Zahnstange 280 erstreckt sich vorzugsweise über einen Umfangswinkel von im Wesentlichen 90° oder mehr.

Der Basiskörper 276 trägt die Rollenbahn 168 der Ankopplungsstation 230, welche bei dieser Ausführungsform mit Arretiervorrichtungen 282 zum Arretieren des Werkstückträgers 114 an der Rollenbahn 168 versehen ist.

Die Rollenbahn 168 ist mittels Lagern 284 um eine senkrecht zur Translationsrichtung 116 verlaufende horizontale Schwenkachse schwenkbar an einer Stützkonstruktion 284 gelagert.

Da der Werkstückträger 114 bei dieser Ausführungsform nicht schwenkbar an die Hubeinheit 126 gekoppelt sein muss, ist es nicht erforderlich, dass die erste Kopplungseinrichtung 156 des Werkstückträgers 114 eine Rolle 240 umfasst; vielmehr können sowohl die erste Kopplungseinrichtung 156 als auch die zweite Kopplungseinrichtung 158 des Werkstückträgers 114 starr ausgebildet sein.

Da der Werkstückträger 114 bei dieser Ausführungsform auch nicht während der Überführung in die Arbeitsstellung an einer Abrollfläche abrollen oder an einer Gleitfläche abgleiten muss, ist es ferner nicht erforderlich, dass der Werkstückträger 114 in seinem hinteren Endbereich 238 mit einer Rolle 170 oder mit einem Gleitelement 262 versehen ist.

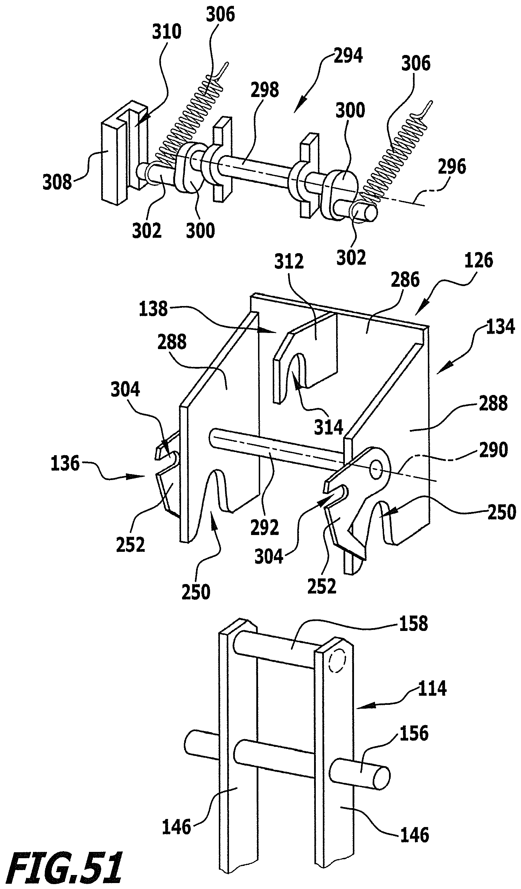

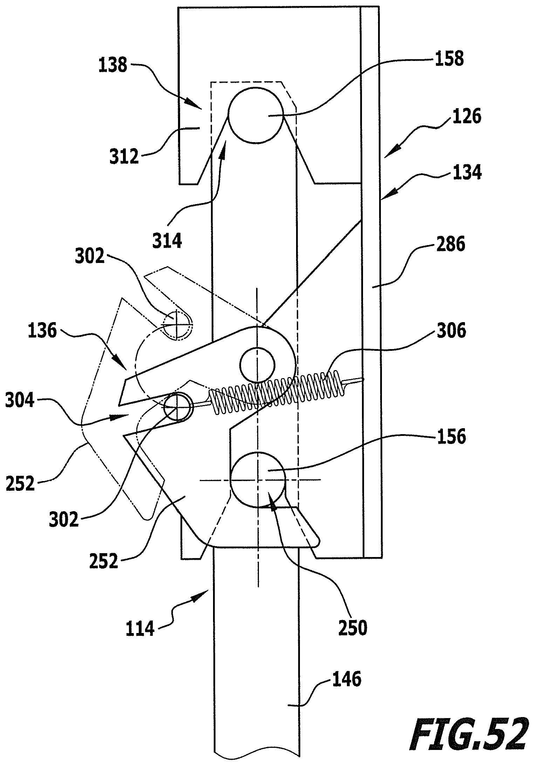

Eine mögliche Ausgestaltung einer Haltevorrichtung 134 für die Hubeinheit 126 bei dieser Ausführungsform ist in den Fig. 51 und 52 dargestellt.

Diese Haltevorrichtung 134 umfasst eine Grundplatte 286, an welcher zwei Seitenteile 288 mit jeweils einer Aufnahme 250 für die erste Kopplungseinrichtung 156 des Werkstückträgers 114 gehalten sind.

An den Seitenteilen 288 sind zwei Verriegelungshaken 252 um eine horizontale Schwenkachse 290 schwenkbar gelagert.

Die beiden Verriegelungshaken 252 können durch eine gemeinsame Schwenkwelle 292 miteinander verbunden sein.

Um die Verriegelungshaken 252 von der in Fig. 52 in gebrochenen Linien dargestellten Freigabestellung in die in Fig. 52 in durchgezogenen Linien dargestellte Verriegelungsstellung zu bewegen, umfasst die Halteeinrichtung 134 ferner eine Antriebsvorrichtung 294 (siehe Fig. 51).

Die Antriebsvorrichtung 294 umfasst eine um eine horizontale, parallel zur Schwenkachse 290 der Verriegelungshaken 252 ausgerichtete Welle 298, deren Enden jeweils einen Exzenter 300 tragen. Von jedem Exzenter 300 steht auf der der Welle 298 abgewandten Seite des Exzenters 300 ein Zapfen 302 ab, der sich parallel zur Schwenkachse 296 der Welle 298 erstreckt, aber gegenüber dieser Schwenkachse 196 in der radialen Richtung versetzt ist.

Beide Zapfen 302 sind koaxial zueinander angeordnet und greifen in jeweils eine zugeordnete Ausnehmung 304 an einem der Verriegelungshaken 252 ein.

Obwohl die Zapfen 302 somit auf der Höhe der Verriegelungshaken 252 liegen, ist die Antriebsvorrichtung 294 aus Gründen der Übersichtlichkeit in Fig. 51 oberhalb der Verriegelungshaken 252 dargestellt.

Wie am besten aus Fig. 52 zu ersehen ist, ist die Freigabeposition der Zapfen 302, in welcher sie sich befinden, wenn die Verriegelungshaken 252 ihre Freigabestellung einnehmen, im Wesentlichen vertikal über der Verriegelungsposition der Zapfen 302 angeordnet, in welcher sie sich befinden, wenn die Verriegelungshaken 252 ihre Verriegelungsstellung einnehmen.

Sowohl in der Freigabeposition als auch in der Verriegelungsposition werden die Zapfen 302 durch jeweils ein Federelement 306 zurückgehalten, welches einerseits an dem jeweiligen Zapfen 302 und andererseits an der Grundplatte 286 der Haltevorrichtung 134 festgelegt ist.

Jedes Federelement 306 spannt den jeweils zugeordneten Zapfen 302 gegen das der jeweiligen Mündungsöffnung abgewandte Ende der jeweils zugeordneten Ausnehmung 304 vor.

Um die Zapfen 302 von der Verriegelungsposition in die Freigabeposition oder von der Freigabeposition in die Verriegelungsposition zu bewegen, müssen die Federelemente 306 gegen ihre elastische Rückstellkraft ausgelenkt werden.

Die Zapfen 302 sind somit sowohl in der Verriegelungsposition als auch in der Freigabeposition selbsttätig gesichert.

Die Überführung der Zapfen 302 und damit der Verriegelungshaken 252 von der Freigabeposition in die Verriegelungsposition oder in umgekehrter Richtung erfolgt mittels eines externen Betätigungselements 308 mit einer Nut 310, in welche ein Ende eines der Zapfen 302 eingreift.

Das Betätigungselement 308 ist in der Ankopplungsstation 230 stationär angeordnet und mittels eines (nicht dargestellten) Drehantriebs um eine horizontale und senkrecht zur Translationsrichtung 116 verlaufende Drehachse drehbar, welche mit der Schwenkachse 296 der Antriebsvorrichtung 294 koaxial ausgerichtet ist, wenn die Hubeinheit 126 sich in der Ankopplungsstellung befindet, in welcher der Werkstückträger 114 an die Hubeinheit 126 angekoppelt wird.

Der Zapfen 302 kommt durch vertikales Absenken der Hubeinheit 126 in Eingriff mit der Nut 310.

Beim Drehen des Betätigungselements 308 folgt der Zapfen 302 dieser Drehbewegung um die Schwenkachse 296, wodurch die Welle 298 und die Zapfen 302 um 180° gedreht und von der Freigabeposition in die Verriegelungsposition überführt werden. Dadurch werden auch die Verriegelungshaken 252 von der Freigabestellung in die Verriegelungsstellung überführt.

Das Entriegeln der Verriegelungshaken 252 erfolgt durch eine weitere Drehung des Betätigungselements 308 um 180°, mit entgegengesetzter Drehrichtung.

Ferner trägt die Grundplatte 286 eine Mittelplatte 312 mit einer Aufnahme für die zweite Kopplungseinrichtung 158 des Werkstückträgers 114.

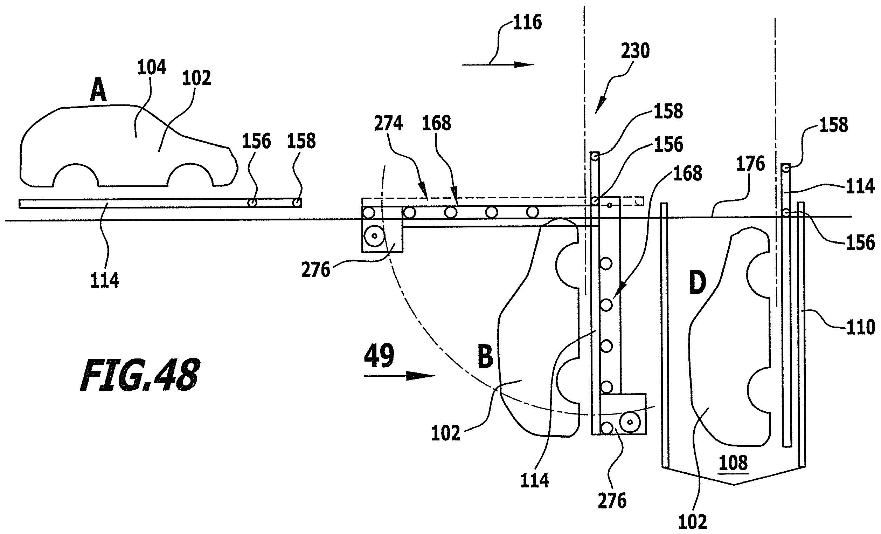

Im Einzelnen verlaufen der Ankopplungsvorgang, der Eintauch- und der Austauchvorgang sowie der Abkopplungsvorgang bei der siebten Ausführungsform wie folgt (in den Fig. 48 bis 50 sind aufeinanderfolgende Positionen des Werkstückträgers 114 und des daran angeordneten Werkstücks 102 mit aufeinanderfolgenden Großbuchstaben (A bis G) bezeichnet):
Der Werkstückträger 114 mit dem Werkstück 102 wird mittels einer der Fördervorrichtung 112 vorgeschalteten (nicht dargestellten) Fördereinheit von der in Fig. 48 bei A dargestellten Position in eine horizontale Ausgangsstellung auf der Rollenbahn 168 gefördert.

In dieser horizontalen Ausgangsstellung wird der Werkstückträger 118 mittels der Arretiervorrichtungen 282 drehfest an der Rollenbahn 168 arretiert.

Anschließend wird die Rollenbahn 168 mit dem daran arretierten Werkstückträger 114 aus der horizontalen Ausgangsstellung in die in Fig. 48 bei B dargestellte vertikale Arbeitsstellung gebracht, durch eine Schwenkbewegung um im Wesentlichen 90°.

Diese Schwenkbewegung wird dadurch bewirkt, dass der Antriebsmotor der Schwenkvorrichtung 274 eine Drehbewegung des Zahnrads 278 antreibt, welches sich aufgrund des Eingriffs mit der Zahnstange 280 längs des Umfangs der bogenförmig gekrümmten Zahnstange 280 bewegt.

Der Fahrwagen 122 befindet sich in einer Übernahmeposition in der Ankopplungsstation 230, in welcher die erste Kopplungsvorrichtung 136 vertikal über der ersten Kopplungseinrichtung 156 des Werkstückträgers 114 und die zweite Kopplungsvorrichtung 138 vertikal über der zweiten Kopplungseinrichtung 158 des Werkstückträgers 114 angeordnet ist.

Die Hubeinheit 126 wird nun vertikal abgesenkt, bis die erste Kopplungseinrichtung 156 in die Aufnahmen 250 der ersten Kopplungsvorrichtung 136 und die zweite Kopplungseinrichtung 158 in die Aufnahme 314 der zweiten Kopplungsvorrichtung 138 der Hubeinheit 126 gelangen.

Bei dieser Vertikalbewegung der Hubeinheit 126 gelangt einer der Zapfen 302 der Antriebsvorrichtung 294 in die Nut 310 des Betätigungselements 308.

Durch Drehen des Betätigungselements 308 um 180° werden die Verriegelungshaken 252 der ersten Kopplungsvorrichtung 136 von ihrer Freigabestellung in ihre Verriegelungsstellung bewegt.

Damit ist sowohl die erste Kopplung zwischen der ersten Kopplungseinrichtung 156 des Werkstückträgers 114 und der ersten Kopplungsvorrichtung 136 der Hubeinheit 126 als auch die zweite Kopplung zwischen der zweiten Kopplungseinrichtung 158 des Werkstückträgers 114 und der zweiten Kopplungsvorrichtung 138 der Hubeinheit 126 hergestellt.

Die Hubeinheit 126 mit dem daran angekoppelten Werkstückträger 114 und dem Werkstück 102 wird vertikal nach oben bewegt, nachdem die Arretierung des Werkstückträgers 118 an der Rollenbahn 168 durch Lösen der Arretiervorrichtungen 282 aufgehoben worden ist.

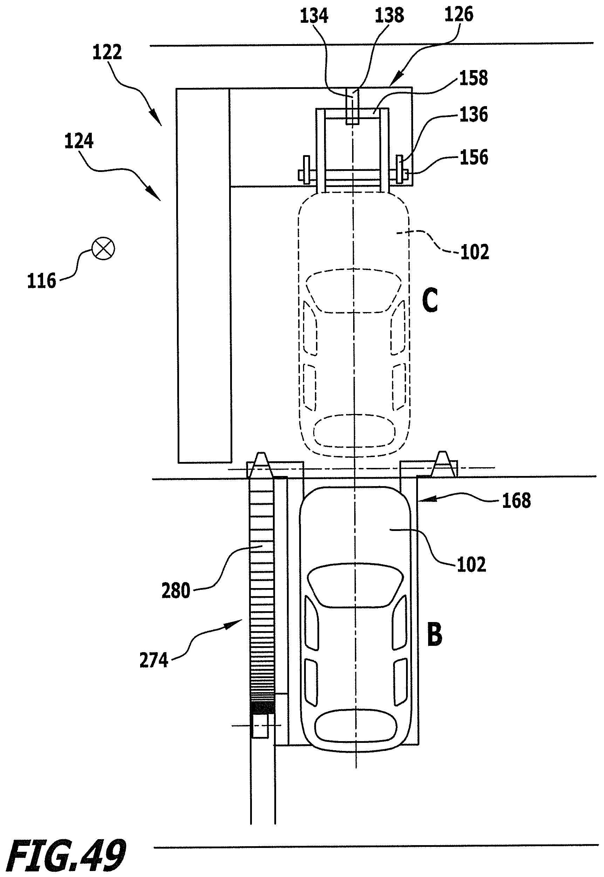

Dann wird der Fahrwagen 122 in der Translationsrichtung 116 nach vorne bewegt, bis er sich neben dem Behandlungsbecken 106 befindet und die Hubeinheit 126 mit dem Werkstück 314 und dem Werkstück 102 vertikal über dem Behandlungsbad 108 angeordnet ist (Position C in Fig. 49).

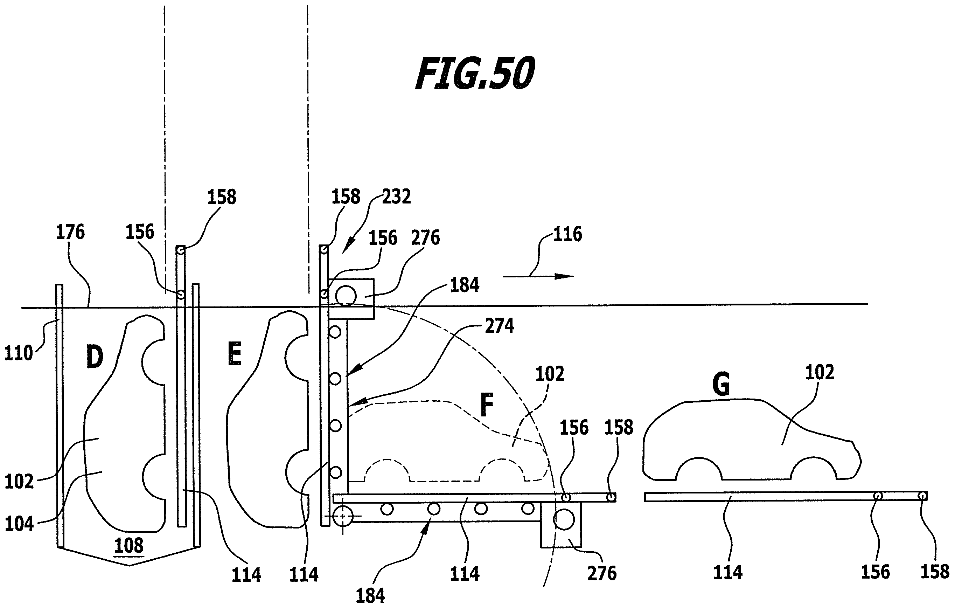

Dann wird das Werkstück 102 durch Absenken der Hubeinrichtung 126 in das Behandlungsbad 108 eingetaucht (Position D in den Fig. 48 und 50).

Nach Ablauf der gewünschten Behandlungszeit wird das Werkstück 102 durch Anheben der Hubeinheit 126 aus dem Behandlungsbad 108 herausbewegt.

Anschließend wird der Fahrwagen 122 in der Translationsrichtung 116 nach vorne in die Abkopplungsstation 232 bewegt.

Die Hubeinheit 126 wird abgesenkt, bis der Werkstückträger 118 die in Fig. 50 bei E dargestellte Position erreicht, in welcher der Werkstückträger 118 an der Rollenbahn 184 der Abkopplungsstation 232 anliegt.

Die Rollenbahn 184 der Abkopplungsstation 232 ist ebenso mittels einer Schwenkvorrichtung 274 zwischen einer vertikalen Position und einer horizontalen Position schwenkbar, wie dies vorstehend im Zusammenhang mit der Rollenbahn 168 der Ankopplungsstation 230 beschrieben worden ist.

Mittels der Arretiervorrichtungen 282 der Rollenbahn 184 wird der Werkstückträger 114 an der Rollenbahn 184 drehfest arretiert.

Beim Absenken der Hubeinheit 126 in der Abkopplungsstation 232 gelangt einer der Zapfen 302 der Antriebsvorrichtung 294 in die Nut 310 eines in der Abkopplungsstation 232 stationär angeordneten Betätigungselements 308.

Durch Drehen des Betätigungselements um einen Winkel von 180° werden die Zapfen 302 von der Verriegelungsposition in die Freigabeposition bewegt, was zur Folge hat, dass die Verriegelungshaken 252 der ersten Kopplungsvorrichtung 136 von ihrer Verriegelungsstellung in ihre Freigabestellung bewegt werden.

Damit ist die Verbindung zwischen dem Werkstückträger 114 und der Hubeinheit 126 gelöst, und die Hubeinheit 126 wird in vertikaler Richtung angehoben.

Damit sind die erste Kopplung und die zweite Kopplung zwischen dem Werkstückträger 114 und der Hubeinheit 126 gelöst.

Mittels der Schwenkvorrichtung 274 wird nun die Rollenbahn 184 mit dem daran arretierten Werkstückträger 114 und dem Werkstück 102 von der in Fig. 50 bei E dargestellten vertikalen Arbeitsstellung in die in Fig. 50 bei F dargestellte horizontale Ausgangsstellung geschwenkt.

Nach Erreichen der horizontalen Ausgangsstellung wird die Arretierung des Werkstückträgers 114 an der Rollenbahn 184 gelöst.

Anschließend wird der Werkstückträger 114 mit dem Werkstück 102 mittels der Rollenbahn 184 zu einem auf das Behandlungsbad 108 folgenden Behandlungs- oder Bearbeitungsbereich gefördert (Position G in Fig. 50).

Die siebte Ausführungsform, bei welcher die Überführung des Werkstückträgers in die Arbeitsstellung mittels einer separaten Schwenkvorrichtung erfolgt, kann insbesondere die folgenden Vorteile bieten:
Die für den Ankopplungsvorgang und/oder den Abkopplungsvorgang benötigte Zeit kann verkürzt werden.

Die Schwenkvorrichtung und die Hubeinheit führen unabhängig voneinander jeweils einfache Bewegungen aus.

Die Ankopplung des Werkstückträgers an die Hubeinheit kann mittels eines stationären Drehantriebs erfolgen, der jeweils in der Ankopplungsstation und in der Abkopplungsstation vorgesehen ist.

Ferner kann die Gesamtlänge des Behandlungsbereichs einschließlich der Ankopplungsstation und der Abkopplungsstation verkürzt werden.

Im Übrigen stimmt die in den Fig. 47 bis 52 dargestellte siebte Ausführungsform der Fördervorrichtung 112 hinsichtlich Aufbau und Funktionsweise mit der in den Fig. 27 bis 37 dargestellten fünften Ausführungsform überein, auf deren vorstehende Beschreibung insoweit Bezug genommen wird.

## Patentansprüche

1. Anlage zur Oberflächenbehandlung von Werkstücken (102), die Fahrzeugkarosserien sind, umfassend eine
Fördervorrichtung (112) zum Fördern der Werkstücke (102), die an jeweils einem Werkstückträger (114) der Fördervorrichtung (112) aufgenommen sind, durch einen Behandlungsbereich (106) zur Oberflächenbehandlung der Werkstücke (102), wobei die Fördervorrichtung (112) die Werkstücke (102) in den Behandlungsbereich (106) einbringt und aus dem Behandlungsbereich (106) wieder ausbringt,
wobei die Fördervorrichtung (112) mindestens eine Hubeinheit (126) zum Anheben und Absenken des Werkstücks (102) umfasst,
wobei die Hubeinheit (126) längs einer Translationsrichtung (116) der Fördervorrichtung (112) bewegbar ist,
wobei der Werkstückträger (114) an die Hubeinheit (126) ankoppelbar und von der Hubeinheit (126) lösbar und relativ zu der Hubeinheit (126) in eine Arbeitsstellung des Werkstückträgers (114) bringbar ist und wobei die Hubeinheit (126)
- eine erste Kopplungsvorrichtung (136) zur Ankopplung des Werkstückträgers (114), an dem das zu behandelnde Werkstück (102) aufnehmbar ist, an die Hubeinheit (126) und
- eine zweite Kopplungsvorrichtung (138) zur Fixierung der Winkelposition des Werkstückträgers (114) relativ zu der Hubeinheit (126) in einer Arbeitsstellung des Werkstückträgers (114) umfasst,
**dadurch gekennzeichnet,**
**dass** die Anlage (100) mindestens ein Behandlungsbecken (110) mit einem darin angeordneten Behandlungsbad (108) aus einer Behandlungsflüssigkeit umfasst und
**dass** der Werkstückträger (114) mit einer ersten Kopplungseinrichtung (156) zum Zusammenwirken mit der ersten Kopplungsvorrichtung (136) der Hubeinheit (126) und mit einer zweiten Kopplungseinrichtung (158) zum Zusammenwirken mit der zweiten Kopplungsvorrichtung (138) der Hubeinheit (126) versehen ist.

2. Anlage nach Anspruch 1, **dadurch gekennzeichnet, dass** die Hubeinheit (126) an einem Fahrwagen (122) angeordnet ist, der einen in einer Translationsrichtung (116) der Fördervorrichtung (112) translatorisch bewegbaren Basisteil (124) umfasst,
wobei die Hubeinheit (126) relativ zu dem Basisteil (124) anhebbar und absenkbar ist.

3. Anlage nach Anspruch 2, **dadurch gekennzeichnet, dass** der Fahrwagen (122) einen eigenen Translationsantrieb zum Antreiben der Bewegung des Basisteils (124) in der Translationsrichtung (116) aufweist.

4. Anlage nach einem der Ansprüche 2 oder 3, **dadurch gekennzeichnet, dass** die Fördervorrichtung mindestens eine Steuervorrichtung umfasst, mittels welcher mindestens ein Fahrwagen (122) hinsichtlich seiner Translationsbewegung und/oder hinsichtlich der Bewegung der Hubeinheit (126) relativ zu dem Basisteil (124) unabhängig von anderen Fahrwagen (122) der Fördervorrichtung steuerbar ist.

5. Anlage nach einem der Ansprüche 1 bis 4, **dadurch gekennzeichnet, dass** die Fördervorrichtung (112) das Werkstück (102) bei in der Arbeitsstellung befindlichem Werkstückträger (114) in den Behandlungsbereich (106) einbringt und/oder aus dem Behandlungsbereich (106) ausbringt.

6. Anlage nach einem der Ansprüche 1 bis 5, **dadurch gekennzeichnet, dass** in der Arbeitsstellung des Werkstückträgers (114) eine Längsrichtung (144) des Werkstückträgers (114) unter einem Winkel von weniger als 30° relativ zur Vertikalen ausgerichtet ist.

7. Anlage nach einem der Ansprüche 1 bis 6, **dadurch gekennzeichnet, dass** in der Arbeitsstellung des Werkstückträgers (114) der gemeinsame Schwerpunkt (160) von Werkstück (102) und Werkstückträger (114) vertikal unter der Hubeinheit (126) angeordnet ist.

8. Anlage nach einem der Ansprüche 1 bis 7, **dadurch gekennzeichnet, dass** der Werkstückträger (114) mit mindestens einer Rolle (170) oder mit mindestens einem Gleitelement (262) versehen ist, welche bzw. welches den Werkstückträger (114) beim Anheben und/oder beim Absenken des Werkstücks (102) mittels der Hubeinheit (126) abstützt.

9. Anlage nach einem der Ansprüche 1 bis 8, **dadurch gekennzeichnet, dass** die Fördervorrichtung (112) eine Führungsvorrichtung (234) zum Führen eines Endbereiches des Werkstückträgers (114) bei der Überführung des Werkstückträgers (114) in die Arbeitsstellung und/oder aus der Arbeitsstellung umfasst.

10. Anlage nach einem der Ansprüche 1 bis 9, **dadurch gekennzeichnet, dass** die Fördervorrichtung (112) eine Gleitbahn (266) zum Abstützen eines Endbereichs (238) des Werkstückträgers (114) beim Anheben und/oder beim Absenken des Werkstücks (102) umfasst.

11. Anlage nach einem der Ansprüche 1 bis 10, **dadurch gekennzeichnet, dass** die Fördervorrichtung eine Schwenkvorrichtung (274) zum Überführen des Werkstückträgers (114) in die Arbeitsstellung vor dem Ankoppeln des Werkstückträgers (114) an die Hubeinheit (126) und/oder eine Schwenkvorrichtung (274) zum Überführen des Werkstückträgers (114) aus der Arbeitsstellung nach dem Abkoppeln des Werkstückträgers (114) von der Hubeinheit (126) umfasst.

12. Anlage nach einem der Ansprüche 1 bis 11, **dadurch gekennzeichnet, dass** das Behandlungsbecken (110) mit einem Düsensystem (204) versehen ist, mittels welchem eine Umströmung des Werkstücks (102) mit einer quer zur Translationsrichtung (116) der Fördervorrichtung (112) ausgerichteten Hauptströmungsrichtung erzeugbar ist.

13. Anlage nach einem der Ansprüche 1 bis 12, **dadurch gekennzeichnet, dass** das Behandlungsbecken (110) als ein Elektrotauchlackierbecken ausgebildet ist und mindestens zwei Dialysezellen (220) umfasst, welche in vertikaler Richtung gegeneinander versetzt angeordnet sind.

14. Verfahren zum Fördern von Werkstücken (102), die Fahrzeugkarosserien sind, durch einen Behandlungsbereich (106) zur Oberflächenbehandlung der Werkstücke (102), umfassend folgende Verfahrensschritte:
- Ankoppeln eines Werkstückträgers (114), an dem ein zu behandelndes Werkstück (102) aufgenommen ist, an eine Hubeinheit (126);
- Anheben des Werkstückträgers (114) und des daran angeordneten Werkstücks (102) mittels der Hubeinheit (126);
- Bringen des Werkstückträgers (114) in eine Arbeitsstellung relativ zu der Hubeinheit (126);
- Einbringen des Werkstücks (102) in einen Behandlungsbereich (106), in dem das Werkstück (102) behandelt wird, wobei der Behandlungsbereich (106) als ein Behandlungsbad (108) aus einer Behandlungsflüssigkeit in einem Behandlungsbecken (110) ausgebildet ist;
- Ausbringen des Werkstücks (102) aus dem Behandlungsbereich (106) ;
- Lösen des Werkstückträgers (114) von der Hubeinheit (126); wobei die Hubeinheit (126)
- eine erste Kopplungsvorrichtung (136) zur Ankopplung des Werkstückträgers (114), an dem das zu behandelnde Werkstück (102) aufnehmbar ist, an die Hubeinheit (126) und
- eine zweite Kopplungsvorrichtung (138) zur Fixierung der Winkelposition des Werkstückträgers (114) relativ zu der Hubeinheit (126) in einer Arbeitsstellung des Werkstückträgers (114)
umfasst und
wobei der Werkstückträger (114) mit einer ersten Kopplungseinrichtung (156) zum Zusammenwirken mit der ersten Kopplungsvorrichtung (136) der Hubeinheit (126) und mit einer zweiten Kopplungseinrichtung (158) zum Zusammenwirken mit der zweiten Kopplungsvorrichtung (138) der Hubeinheit (126) versehen ist.

## Claims

1. Installation for surface treating workpieces (102), which are vehicle bodies, comprising a
conveying apparatus (112) for conveying the workpieces (102), which are each accommodated on a workpiece support (114) of the conveying apparatus (112), through a treatment region (106) for surface treating the workpieces (102), wherein the conveying apparatus (112) introduces the workpieces (102) into the treatment region (106) and removes them from the treatment region (106),
wherein the conveying apparatus (112) comprises at least one lifting unit (126) for raising and lowering the workpiece (102),
wherein the lifting unit (126) is moveable along a translation direction (116) of the conveying apparatus (112),
wherein the workpiece support (114) is coupleable to the lifting unit (126) and is releasable from the lifting unit (126) and is able to be brought into a working position of the workpiece support (114) relative to the lifting unit (126), and
wherein the lifting unit (126) comprises
- a first coupling apparatus (136) for coupling the workpiece support (114), on which the workpiece (102) to be treated is able to be accommodated, to the lifting unit (126) and
- a second coupling apparatus (138) for fixing the angular position of the workpiece support (114) relative to the lifting unit (126) in a working position of the workpiece support (114),
**characterized in that**
the installation (100) comprises at least one treatment basin (110) with a treatment bath (108) of a treatment liquid arranged therein and
**in that** the workpiece support (114) is provided with a first coupling device (156) for cooperating with the first coupling apparatus (136) of the lifting unit (126) and with a second coupling device (158) for cooperating with the second coupling apparatus (138) of the lifting unit (126).

2. Installation in accordance with Claim 1, **characterized in that** the lifting unit (126) is arranged on a carriage (122), which comprises a base part (124) that is translationally moveable in a translation direction (116) of the conveying apparatus (112),
wherein the lifting unit (126) is raisable and lowerable relative to the base part (124).

3. Installation in accordance with Claim 2, **characterized in that** the carriage (122) has its own translational drive for driving the movement of the base part (124) in the translation direction (116).

4. Installation in accordance with either of Claims 2 or 3, **characterized in that** the conveying apparatus comprises at least one control apparatus, by means of which at least one carriage (122) is controllable with respect to its translation movement and/or with respect to the movement of the lifting unit (126) relative to the base part (124) independently of other carriages (122) of the conveying apparatus.

5. Installation in accordance with any one of Claims 1 to 4, **characterized in that** the conveying apparatus (112) introduces the workpiece (102) into the treatment region (106) and/or removes the workpiece (102) from the treatment region (106) when the workpiece support (114) is located in the working position.

6. Installation in accordance with any one of Claims 1 to 5, **characterized in that** in the working position of the workpiece support (114) a longitudinal direction (144) of the workpiece support (114) is aligned at an angle of less than 30° relative to the vertical.

7. Installation in accordance with any one of Claims 1 to 6, **characterized in that** in the working position of the workpiece support (114) the common center of gravity (160) of the workpiece (102) and the workpiece support (114) is arranged vertically beneath the lifting unit (126).

8. Installation in accordance with any one of Claims 1 to 7, **characterized in that** the workpiece support (114) is provided with at least one roller (170) or with at least one sliding element (262), which supports the workpiece support (114) when raising and/or when lowering the workpiece (102) by means of the lifting unit (126).

9. Installation in accordance with any one of Claims 1 to 8, **characterized in that** the conveying apparatus (112) comprises a guide apparatus (234) for guiding an end region of the workpiece support (114) when transferring the workpiece support (114) into the working position and/or out of the working position.

10. Installation in accordance with any one of Claims 1 to 9, **characterized in that** the conveying apparatus (112) comprises a sliding track (266) for supporting an end region (238) of the workpiece support (114) when raising and/or when lowering the workpiece (102).

11. Installation in accordance with any one of Claims 1 to 10, **characterized in that** the conveying apparatus comprises a pivoting apparatus (274) for transferring the workpiece support (114) into the working position before coupling the workpiece support (114) to the lifting unit (126) and/or a pivoting apparatus (274) for transferring the workpiece support (114) out of the working position after decoupling the workpiece support (114) from the lifting unit (126).

12. Installation in accordance with any one of Claims 1 to 11, **characterized in that** the treatment basin (110) is provided with a nozzle system (204), by means of which a flow around the workpiece (102) with a main direction of flow oriented transversely to the translation direction (116) of the conveying apparatus (112) is producible.

13. Installation in accordance with any one of Claims 1 to 12, **characterized in that** the treatment basin (110) is configured as an electro-dip coating basin and comprises at least two dialysis cells (220), which are arranged offset from each other in the vertical direction.

14. Method for conveying workpieces (102), which are vehicle bodies, through a treatment region (106) for surface treating the workpieces (102), comprising the following method steps:
- coupling a workpiece support (114), on which a workpiece (102) to be treated is accommodated, to a lifting unit (126);
- raising the workpiece support (114) and the workpiece (102) arranged thereon by means of the lifting unit (126);
- bringing the workpiece support (114) in to a working position relative to the lifting unit (126);
- introducing the workpiece (102) into a treatment region (106) in which the workpiece (102) is treated, wherein the treatment region (106) is configured as a treatment bath (108) of a treatment liquid in a treatment basin (110);
- removing the workpiece (102) from the treatment region (106);
- releasing the workpiece support (114) from the lifting unit (126); wherein the lifting unit (126) comprises
- a first coupling apparatus (136) for coupling the workpiece support (114), on which the workpiece (102) to be treated is able to be accommodated, to the lifting unit (126) and
- a second coupling apparatus (138) for fixing the angular position of the workpiece support (114) relative to the lifting unit (126) in a working position of the workpiece support (114)
and
wherein the workpiece support (114) is provided with a first coupling device (156) for cooperating with the first coupling apparatus (136) of the lifting unit (126) and with a second coupling device (158) for cooperating with the second coupling apparatus (138) of the lifting unit (126).

## Revendications

1. Installation de traitement de surfaces de pièces (102), qui sont des carrosseries de véhicule, comprenant
un dispositif de transport (112) pour transporter les pièces (102), qui sont respectivement logées au niveau d'un porte-pièce (114) du dispositif de transport (112), à travers une zone de traitement (106) aux fins du traitement de surfaces des pièces (102), dans laquelle le dispositif de transport (112) introduit les pièces (102) dans la zone de traitement (106) et les fait sortir à nouveau hors de la zone de traitement (106),
dans laquelle le dispositif de transport (112) comprend au moins une unité de levage (126) pour lever et abaisser la pièce (102),
dans laquelle l'unité de levage (126) peut être déplacée le long d'une direction de translation (116) du dispositif de transport (112),
dans laquelle le porte-pièce (114) peut être accouplé à l'unité de levage (126) et peut être détaché de l'unité de levage (126) et être placée dans une position de travail du porte-pièce (114) par rapport à l'unité de levage (126) et
dans laquelle l'unité de levage (126) comprend
- un premier dispositif de couplage (136) pour accoupler le porte-pièce (114), au niveau duquel la pièce (102) à traiter peut être logée, à l'unité de levage (126), et
- un deuxième dispositif de couplage (138) pour bloquer la position angulaire du porte-pièce (114) par rapport à l'unité de levage (126) dans une position de travail du porte-pièce (114),
**caractérisée**
**en ce que** l'installation (100) comprend au moins un bassin de traitement (110) avec un bain de traitement (108) disposé dans celui-ci composé d'un liquide de traitement, et
**en ce que** le porte-pièce (114) est pourvu d'un premier système de couplage (156) destiné à coopérer avec le premier dispositif de couplage (136) de l'unité de levage (126) et d'un deuxième système de couplage (158) destiné à coopérer avec le deuxième dispositif de couplage (138) de l'unité de levage (126).

2. Installation selon la revendication 1, **caractérisée en ce que** l'unité de levage (126) est disposée au niveau d'un chariot mobile (122), qui comprend une partie de base (124) pouvant être déplacée par translation dans une direction de translation (116) du dispositif de transport (112),
dans laquelle l'unité de levage (126) peut être levée et abaissée par rapport à la partie de base (124).

3. Installation selon la revendication 2, **caractérisée en ce que** le chariot mobile (122) présente un entraînement en translation propre pour entraîner le déplacement de la partie de base (124) dans la direction de translation (116).

4. Installation selon l'une quelconque des revendications 2 ou 3, **caractérisée en ce que** le dispositif de transport comprend au moins un dispositif de commande, au moyen duquel un chariot mobile (122) peut être commandé eu égard à son déplacement par translation et/ou eu égard au déplacement de l'unité de levage (126) par rapport à la partie de base (124) indépendamment de l'autre chariot mobile (122) du dispositif de transport.

5. Installation selon l'une quelconque des revendications 1 à 4, **caractérisée en ce que** le dispositif de transport (112) introduit la pièce (102) dans la zone de traitement (106) et/ou la fait sortir hors de la zone de traitement (106) lorsque le porte-pièce (114) se trouve dans la position de travail.

6. Installation selon l'une quelconque des revendications 1 à 5, **caractérisée en ce qu'**un sens longitudinal (144) du porte-pièce (114) est orienté selon un angle inférieur à 30° par rapport à la verticale dans la position de travail du porte-pièce (114).

7. Installation selon l'une quelconque des revendications 1 à 6, **caractérisée en ce que** le point de gravité (160) commun de la pièce (102) et du porte-pièce (114) est disposé de manière verticale sous l'unité de levage (126) dans la position de travail du porte-pièce (114).

8. Installation selon l'une quelconque des revendications 1 à 7, **caractérisée en ce que** le porte-pièce (114) est pourvu d'au moins un rouleau (170) ou d'au moins un élément glissant (262), lequel soutient le porte-pièce (114) lors du relevage et/ou lors de l'abaissement de la pièce (102) au moyen de l'unité de levage (126).

9. Installation selon l'une quelconque des revendications 1 à 8, **caractérisée en ce que** le dispositif de transport (112) comprend un dispositif de guidage (234) pour guider une zone d'extrémité du porte-pièce (114) lors du transfert du porte-pièce (114) dans la position de travail et/ou hors de la position de travail.

10. Installation selon l'une quelconque des revendications 1 à 9, **caractérisée en ce que** le dispositif de transport (112) comprend une voie de glissement (266) pour soutenir une zone d'extrémité (238) du porte-pièce (114) lors du relevage et/ou lors de l'abaissement de la pièce (102).

11. Installation selon l'une quelconque des revendications 1 à 10, **caractérisée en ce que** le dispositif de transport comprend un dispositif de pivotement (274) pour transférer le porte-pièce (114) dans la position de travail avant l'accouplement du porte-pièce (114) à l'unité de levage (126) et/ou un dispositif de pivotement (274) pour transférer le porte-pièce (114) hors de la position de travail après le désaccouplement du porte-pièce (114) de l'unité de levage (126).

12. Installation selon l'une quelconque des revendications 1 à 11, **caractérisée en ce que** le bassin de traitement (110) est pourvu d'un système de buses (204), au moyen duquel un écoulement entourant la pièce (102) peut être généré avec une direction d'écoulement principal orientée de manière transversale par rapport à la direction de translation (116) du dispositif de transport (112).

13. Installation selon l'une quelconque des revendications 1 à 12, **caractérisée en ce que** le bassin de traitement (110) est réalisé en tant qu'un bassin de peinture par cataphorèse et comprend au moins deux cellules de dialyse (220), lesquelles sont disposées de manière décalée l'une à l'encontre de l'autre dans la direction verticale.

14. Procédé pour transporter des pièces (102), qui sont des carrosseries de véhicule, à travers une zone de traitement (106) pour le traitement de surfaces des pièces (102), comprenant des étapes de procédé suivantes :
- accouplement d'un porte-pièce (114), au niveau duquel une pièce (102) à traiter est logée, à une unité de levage (126) ;
- relevage du porte-pièce (114) et de la pièce (102) disposée au niveau de celui-ci au moyen de l'unité de levage (126) ;
- placement du porte-pièce (114) dans une position de travail par rapport à l'unité de levage (126) ;
- introduction de la pièce (102) dans une zone de traitement (106), dans laquelle la pièce (102) est traitée, dans lequel la zone de traitement (106) est réalisée dans un bassin de traitement (110) en tant qu'un bain de traitement (108) composé d'un liquide de traitement ;
- sortie de la pièce (102) hors de la zone de traitement (106) ;
- retrait du porte-pièce (114) de l'unité de levage (126) ;
dans lequel l'unité de levage (126) comprend
- un premier dispositif de couplage (136) pour accoupler le porte-pièce (114), au niveau duquel la pièce (102) à traiter peut être logée, à l'unité de levage (126), et
- un deuxième dispositif de couplage (138) pour bloquer la position angulaire du porte-pièce (114) par rapport à l'unité de levage (126) dans une position de travail du porte-pièce (114),
et
dans lequel le porte-pièce (114) est pourvu d'un premier système de couplage (156) destiné à coopérer avec le premier dispositif de couplage (136) de l'unité de levage (126) et d'un deuxième système de couplage (158) destiné à coopérer avec le deuxième dispositif de couplage (138) de l'unité de levage (126).
